# EUROPEAN PATENT SPECIFICATION

(11) **EP 2 832 754 B1**
(45) Date of publication and mention of the grant of the patent: **28.10.2020**
(21) Application number: 13770133.0
(22) Date of filing: 15.03.2013
(51) Int. Cl.: C08F 20/26, C08L 33/04, C08L 75/04, C09D 5/02, C09D 133/14, C09D 175/04, D06M 15/263, D06M 15/273, D06M 15/564, C09D 135/02

(54) **VINYL RESIN AND RESIN COMPOSITION**
VINYLHARZ UND HARZZUSAMMENSETZUNG
RÉSINE DE VINYLE ET COMPOSITION DE RÉSINE

(30) Priority: 29.03.2012 JP 2012077955; 09.10.2012 JP 2012224494; 30.11.2012 JP 2012263422
(43) Date of publication of application: 04.02.2015
(73) Proprietor: Sanyo Chemical Industries, Ltd., Kyoto-shi, Kyoto 605-0995 (JP)
(72) Inventor: MATSUI, Yosuke, Kyoto-shi Kyoto 605-0995 (JP); MAEHARA, Masumi, Kyoto-shi Kyoto 605-0995 (JP); FUJIMURA, Takashi, Kyoto-shi Kyoto 605-0995 (JP)
(74) Representative: Mewburn Ellis LLP
(86) International application number: PCT/JP2013/057423
(87) International publication number: WO 2013/146354

(56) References cited:
- GB-A- 934 407
- JP-A- 2001 226 438
- JP-A- 2001 294 627
- JP-A- 2006 282 995
- JP-A- 2010 526 162
- US-A- 4 076 765
- US-A1- 2004 214 937

## Description

### TECHNICAL FIELD

The present invention relates to a vinyl resin and a resin composition containing the same. Specifically, the present invention relates to a vinyl resin which is excellent in affinity with a polyurethane resin and thus capable of providing a film excellent in mechanical strength, weather resistance, solvent resistance, and water resistance when combined with a polyurethane resin; and a resin composition containing the same.

### BACKGROUND ART

Conventional coating agents requiring good properties such as mechanical strength, weather resistance, and water resistance are formed from acrylic resins. The film of an acrylic resin is usually less flexible, and thus one technique is suggested in which the acrylic resin is combined with a polyurethane resin to improve the flexibility (e.g. Patent Literature 1). Still, an acrylic resin and a polyurethane resin are less compatible with each other. This means that combination use of an acrylic resin and a polyurethane resin provides a film having poor properties such as mechanical strength, weather resistance, solvent resistance, and water resistance.

GB 934407 A concerns resinous products and processes for the manufacture of resinous products. US 4076765 A concerns unsaturated epoxy esters with improved curability prepared by the reaction of (1) a partial esterification compound obtained from trimellitic anhydride and/or pyromellitic anhydride and an unsaturated monoalcohol; (2) (i) a partial esterification compound obtained from a dicarboxylic anhydride and an unsaturated monoalcohol and/or (ii) a polymerizable unsaturated monobasic acid; and (3) a compound containing at least two epoxy groups in one molecule; if desired in the presence of (4) a dicarboxylic acid or a saturated or unsaturated alkyd having carboxyl groups at both terminals and/or a saturated or unsaturated monoglycidyl compound. US 2004/0214937 A1 concerns an anti-static polymer composition comprising a thermoformable, moldable, hybrid urethane-vinyl polymer composition which exhibits relatively low surface and volume resistivities and good toughness.

### CITATION LIST

### - Patent Literature

Patent Literature 1: JP H06-192616 A

### SUMMARY OF INVENTION

### - Technical Problem

The present invention is made for the purpose of solving the above problems. The present invention aims to provide a vinyl resin which is capable of providing a film having excellent mechanical strength, weather resistance, solvent resistance, and water resistance when combined with a polyurethane resin.

### - Solution to Problem

The present inventors have performed studies for achieving the above object, and have arrived at the present invention. In other words, the present invention relates to a vinyl resin (V1) obtainable by polymerizing monomer components including a monomer (X) represented by the formula (1); a resin composition containing the vinyl resin (V1) and a polyurethane resin (P); a resin aqueous dispersion containing the vinyl resin (V1) and an aqueous medium; a resin aqueous dispersion containing the resin composition and an aqueous medium; and paint, an anticorrosive coating agent, a fiber-treating agent, and an adhesive, each containing the vinyl resin (V1) or the resin composition.

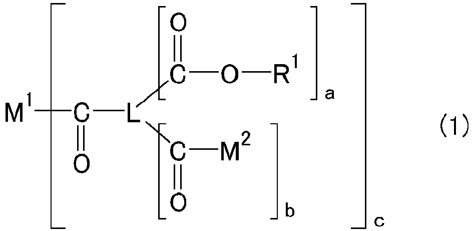

In the formula (1), M¹ is a residue of an active hydrogen-containing organic compound having a valence of 1 to 20 from which c number of active hydrogen atoms are removed;
c is an integer satisfying 1 ≤ c ≤ (valence of M¹);
R¹ is an ethylenic unsaturated bond-containing group, and when the formula (1) includes multiple R¹'s, they may be the same as or different from each other;
M² is a residue of an active hydrogen-containing organic compound having a valence of 1 to 20 from which one active hydrogen atom is removed, and when the formula (1) includes multiple M²'s, they may be the same as or different from each other, and M² and M¹ may be the same as or different from each other;
L is a residue of an aromatic polycarboxylic acid having 3 or more carboxyl groups from which all the carboxyl groups are removed, the aromatic ring of L is constituted by carbon atoms, and each of the carbon atoms may optionally have a halogen atom and/or a substituent which is not a carboxyl group, but at least one of the carbon atoms has a hydrogen atom;
a and b are each an integer of 0 or greater and they satisfy 2 ≤ (a + b) ≤ (d - 2), when the formula (1) includes multiple a's, they may be the same as or different from each other and at least one of c number of a's is not 0, and when the formula (1) includes multiple b's, they may be the same as or different from each other; and
d is the number of hydrogen atoms bonded to the carbon atoms constituting the aromatic ring assuming that all the substituents including the carboxyl groups of the aromatic polycarboxylic acid are replaced by hydrogen atoms, in other words, the number of moieties capable of being replaced by a substituent on the aromatic ring.

### - Advantageous Effects of Invention

Since the vinyl resin (V1) is excellent in affinity with a polyurethane resin (P), the vinyl resin (V1) of the present invention used in combination with a polyurethane resin (P) or in combination with a polyurethane resin (P) and a vinyl resin (V2) which is different from the vinyl resin (V1) of the present invention provides a film excellent in properties such as mechanical strength, weather resistance, solvent resistance, and water resistance.

### DESCRIPTION OF EMBODIMENTS

The vinyl resin (V1) of the present invention is obtainable by polymerizing monomer components essentially including a monomer (X) represented by the formula (1). The vinyl resin (V1) including a structural unit derived from the monomer (X) represented by the formula (1) has an enhanced affinity with a polyurethane resin (P). This leads to fine dispersion of the polyurethane resin (P) in the vinyl resin (V1) or of the vinyl resin (V1) in the polyurethane resin (P), thereby providing a film excellent in properties such as mechanical strength, weather resistance, solvent resistance, and water resistance. With a vinyl resin (V2) different from the vinyl resin (V1) in combination, the vinyl resin (V1) serves as a dispersant, that is, the vinyl resin (V1) leads to fine dispersion of the resin (V2) in the resin (P) or fine dispersion of the resin (P) in the resin (V2), and provides the same effects as mentioned above.

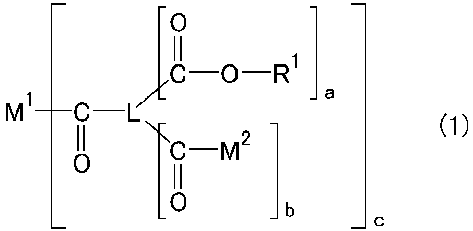

M¹ in the formula (1) is a residue of an active hydrogen-containing organic compound having a valence of 1 to 20 from which c number of active hydrogen atoms are removed.

Examples of the active hydrogen-containing organic compound include hydroxy group-containing compounds, ammonia, amino group-containing compounds, and thiol group-containing compounds. These active hydrogen-containing organic compounds may be used alone or in combination.

Examples of the hydroxy group-containing compounds include monohydric alcohols having 1 to 20 carbon atoms, polyhydric alcohols having 2 to 20 carbon atoms, and phenols; alkylene oxide adducts of these compounds (hereinafter, alkylene oxide is abbreviated as AO); AO adducts of ammonia, amino group-containing compounds, and thiol group-containing compounds.

Examples of the monohydric alcohols having 1 to 20 carbon atoms include alkanols having 1 to 20 carbon atoms (e.g. methanol, ethanol, butanol, octanol, decanol, dodecyl alcohol, myristyl alcohol, cetyl alcohol, and stearyl alcohol), alkenols having 2 to 20 carbon atoms (e.g. oleyl alcohol and linoleyl alcohol), and aromatic-aliphatic alcohols having 7 to 20 carbon atoms (e.g. benzyl alcohol and naphthyl ethanol).

Examples of the polyhydric alcohols having 2 to 20 carbon atoms include dihydric alcohols having 2 to 20 carbon atoms, such as aliphatic diols (e.g. ethylene glycol, propylene glycol, 1,3- or 1,4-butane diol, 1,6-hexane diol, neopentyl glycol, 1,2- or 1,10-decane diol, and 1,2- or 1,12-dodecane diol), alicyclic diols (e.g. 1,2-, 1,3-, or 1,4-cyclohexane diol and cyclohexane dimethanol), aromatic-aliphatic diols (e.g. 1-phenylethane-1,2-diol and 1,4-bis(hydroxyethyl)benzene), ether group-containing diols (e.g. 3-butoxy-1,2-propane diol, 3-(2-ethylhexoxy)-1,2-propane diol, 3-phenoxy-1,2-propane diol, and 3-(p-tert-butylphenoxy)-1,2-propane diol), and halogen group-containing diols (e.g. 3-chloro-1,2-propane diol); trihydric alcohols having 3 to 20 carbon atoms, such as aliphatic triols (e.g. glycerin and trimethylolpropane); and alcohols having 5 to 20 carbon atoms and 4 to 8 hydroxy groups, such as aliphatic polyols (e.g. pentaerythritol, sorbitol, mannitol, sorbitan, diglycerin, and dipentaerythritol) and saccharides (e.g. sucrose, glucose, mannose, fructose, methylglucoside, and derivatives thereof).

Examples of the phenols include monohydric phenols (e.g. phenol, 1-hydroxynaphthalene, anthrol, and 1-hydroxypyrene) and polyhydric phenols (e.g. phloroglucin, pyrogallol, catechol, hydroquinone, bisphenol A, bisphenol F, bisphenol S, 1,3,6,8-tetrahydroxynaphthalene, 1,4,5,8-tetrahydroxyanthracene, condensates of phenol and formaldehyde (novolak), and polyphenol disclosed in US 3,265,641).

Examples of the amino group-containing compounds include monohydrocarbylamines having 1 to 20 carbon atoms (e.g. alkylamines (e.g. butylamine), benzylamine, and aniline); aliphatic polyamines having 2 to 20 carbon atoms (e.g. ethylenediamine, hexamethylenediamine, and diethylenetriamine); alicyclic polyamines having 6 to 20 carbon atoms (e.g. diaminocyclohexane, dicyclohexylmethanediamine, and isophoronediamine); aromatic polyamines having 2 to 20 carbon atoms (e.g. phenylenediamine, tolylenediamine, and diphenylmethanediamine); heterocyclic polyamines having 2 to 20 carbon atoms (e.g. piperazine and N-aminoethylpiperazine); alkanolamines (e.g. monoethanolamine, diethanolamine, and triethanolamine); polyamide polyamine obtainable by condensation of a dicarboxylic acid and a polyamine in an excessive amount; polyether polyamines; hydrazines (e.g. hydrazine and monoalkylhydrazines); dihydrazides (e.g. succinic dihydrazide and terephthalic dihydrazide); guanidines (e.g. butylguanidine and 1-cyanoguanidine); and dicyandiamide.

Examples of the thiol group-containing compounds include monothiol compounds having 1 to 20 carbon atoms (e.g. alkanethiols (e.g. ethanethiol), benzenethiol, and phenylmethanethiol) and polythiol compounds (e.g. 1,2-ethanedithiol and 1,6-hexanedithiol).

Examples of the AOs used for the aforementioned hydroxy group-containing compounds include AOs having 2 to 4 carbon atoms, such as ethylene oxide (hereinafter, abbreviated as EO), 1,2-propylene oxide (hereinafter, abbreviated as PO), 1,3-propylene oxide, 1,2-, 1,3-, or 2,3-butylene oxide, and tetrahydrofuran (hereinafter, abbreviated as THF). Preferable are EO, PO, and THF from the viewpoints of mechanical strength and water resistance of the vinyl resin (V1). AOs may be used alone or in combination. If 2 or more AOs are used in combination, they may be added by block addition, random addition, or any other technique, or may be added by combination of these techniques.

The amount by mole of AOs is preferably 8 to 100, and more preferably 10 to 80, from the viewpoints of water resistance and solvent resistance of the vinyl resin (V1). The hydroxy value of an AO adduct is preferably 18 to 360 mgKOH/g. The hydroxy value in the present invention is determined in conformity with JIS K1557-1.

The active hydrogen-containing organic compound may be a compound having 2 or more types of active hydrogen-containing functional groups (e.g. hydroxy group, amino group, and thiol group) in the molecule.

From the viewpoints of mechanical strength, solvent resistance, and water resistance of the vinyl resin (V1), the active hydrogen-containing organic compound for introducing M¹ into the monomer (X) is preferably selected from hydroxy group-containing compounds and amino group-containing compounds. It is more preferably selected from polyhydric alcohols having 2 to 20 carbon atoms, polyether polyols which are AO adducts of polyhydric alcohols having 2 to 20 carbon atoms, and aliphatic polyamines having 2 to 20 carbon atoms. It is particularly preferably selected from polyhydric alcohols having 2 to 20 carbon atoms and polyether polyols which are AO adducts of polyhydric alcohols having 2 to 20 carbon atoms. It is most preferably selected from polyhydric alcohols having 2 to 20 carbon atoms.

From the viewpoints of mechanical strength, solvent resistance, and water resistance of the vinyl resin (V1), the number of active hydrogens in the active hydrogen-containing organic compound is usually 1 to 20, preferably 1 to 8, more preferably 1 to 4, and particularly preferably 1 or 2.

In the formula (1), c is an integer of 1 to 20 and satisfies 1 ≤ c ≤ (valence of M¹). From the viewpoints of mechanical strength and water resistance of the vinyl resin (V1), c is preferably 1 to 8, more preferably 1 or 2, and particularly preferably 1.

In the formula (1), M² is a residue of an active hydrogen-containing organic compound having a valence of 1 to 20 from which one active hydrogen atom is removed. Multiple M²'s may be the same as or different from each other.

Examples of the active hydrogen-containing organic compound for constituting M² include the same active hydrogen-containing organic compounds as those mentioned for M¹, and preferable ones are also the same. M² and M¹ may be the same as or different from each other.

From the viewpoints of mechanical strength and water resistance of the vinyl resin (V1), the valence of M² is usually 1 to 20, preferably 1 to 8, more preferably 1 to 4, and particularly preferably 1 or 2.

M¹ and M² can be introduced into the monomer (X) by reacting the active hydrogen-containing organic compound with a polycarboxylic acid having 3 or more carboxyl groups, which is used for constituting L to be mentioned later. In the case that the active hydrogen-containing organic compound is a polyether polyol whose repeating unit has 2 to 4 carbon atoms, the residues can be introduced thereinto by adding an AO having 2 to 4 carbon atoms to the carboxyl group of a polycarboxylic acid.

With a diol compound which has 2 to 20 carbon atoms and in which adjacent carbon atoms each have a hydroxy group as an active hydrogen-containing organic compound, residues equivalent to those in the case of a diol compound can also be introduced thereinto by ring-opening-addition of an epoxy compound having 2 to 20 carbon atoms to the carboxyl group of a polycarboxylic acid. For example, with ethylene glycol as an active hydrogen-containing organic compound, a residue of the ethylene glycol from which one active hydrogen atom is removed can be introduced by reacting 1 mol of EO with the carboxyl group of a polycarboxylic acid. With 3-phenoxypropane-1,2-diol as an active hydrogen-containing organic compound, a residue of the 3-phenoxypropane-1,2-diol from which one active hydrogen atom is removed can be introduced by reacting 1 mol of phenyl glycidyl ether with the carboxyl group of a polycarboxylic acid.

Examples of the epoxy compound having 2 to 20 carbon atoms include AOs having 2 to 4 carbon atoms, glycidol, butyl glycidyl ether, 2-ethylhexyl glycidyl ether, phenyl glycidyl ether, p-tert-butylphenyl glycidyl ether, 1,2-epoxydecane, 1,2-epoxydodecane, cyclohexene oxide, styrene oxide, and epichlorohydrin.

Preferable are epoxy compounds having 2 to 15 carbon atoms from the viewpoints of mechanical strength, solvent resistance, and water resistance of the vinyl resin (V1).

In the formula (1), R¹ is an ethylenic unsaturated bond-containing group. When the formula (1) includes multiple R¹'s, they may be the same as or different from each other. R¹ is preferably at least one selected from the group consisting of substituents represented by the following formulas (2) to (6) from the viewpoint of water resistance of the vinyl resin (V1).

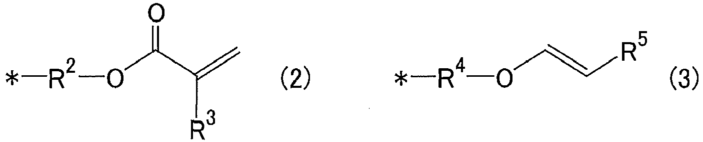

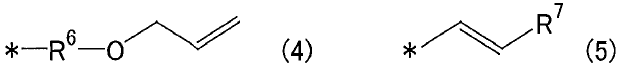

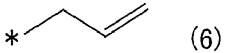

R², R⁴, and R⁶ in the formulas (2) to (6) are each individually a divalent aliphatic hydrocarbon group which has 2 to 12 carbon atoms and is optionally substituted by a hydroxy group. R³ and R⁵ are each individually a hydrogen atom or a methyl group. R⁷ is a hydrogen atom, a methyl group, or an ethyl group. The symbol "*" is a bonding site between the substituent and the oxygen atom of the oxycarbonyl group in the formula (1).

In the formula (1), L is a residue of an aromatic polycarboxylic acid having 3 or more carboxyl groups from which all the carboxyl groups are removed. The aromatic ring of L is constituted by carbon atoms, and each of the carbon atoms may have a substituent other than the carboxyl group and/or a halogen atom, but at least one carbon atom does not have a substituent but has a hydrogen atom.

Examples of the substituent other than the carboxyl group include alkyl, vinyl, allyl, cycloalkyl, amino, hydroxy, hydroxyamino, nitro, thiol, aryl, and cyano groups.

Examples of the aromatic polycarboxylic acid having 3 or more carboxyl groups for constituting L include aromatic polycarboxylic acids having 9 to 30 carbon atoms, such as tricarboxylic acids (e.g. trimellitic acid, 1,2,3-benzenetricarboxylic acid, trimesic acid, hemellitic acid, 1,2,4-, 1,3,6-, or 2,3,6-naphthalenetricarboxylic acid, and 2,3,6-anthracenetricarboxylic acid); and tetracarboxylic acids (e.g. pyromellitic acid, 3,3',4,4'-benzophenonetetracarboxylic acid, 2,2',3,3'-benzophenonetetracarboxylic acid, 2,3,3',4'-benzophenonetetracarboxylic acid, 3,3',4,4'-biphenyltetracarboxylic acid, 2,2',3,3'-biphenyltetracarboxylic acid, 2,3,3',4'-biphenyltetracarboxylic acid, 4,4'-oxybisphthalic acid, diphenylmethanetetracarboxylic acid, 1,4,5,8-naphthalenetetracarboxylic acid, 1,2,5,6-naphthalenetetracarboxylic acid, 2,3,6,7-naphthalenetetracarboxylic acid, and 4,4'-(hexafluoroisopropylidene)bisphthalic acid). These aromatic polycarboxylic acids may be used alone or in combination.

The monomer (X) may be produced using ester-formable derivatives thereof such as acid anhydrides, lower alkyl esters (having 1 to 4 carbon atoms) (e.g. methyl esters, ethyl esters, and isopropyl esters), and acid halides (chloride of acids)).

From the viewpoints of mechanical strength and water resistance of the vinyl resin (V1), preferable among these aromatic polycarboxylic acids are those having a structure in which carboxyl groups bond to the 2 carbon atoms adjacent to a carbon atom which has no substituent among the carbon atoms constituting the aromatic ring, and a carboxyl group bonds to at least one of the carbon atoms which are adjacent to the 2 carbon atoms having the carboxyl groups and which are different from the carbon atom that has no substituent.

Preferably, for example, in the case that the aromatic ring of the aromatic polycarboxylic acid is a benzene ring and that the carbon atom having no substituent is at the position 1, a carboxyl group bonds to each of the positions 2 and 6 and a carboxyl group bonds to at least one of the positions 3 and 5.

From the viewpoints of mechanical strength and water resistance of the vinyl resin (V1), the aromatic polycarboxylic acid for constituting L is particularly preferably a monocyclic compound, and most preferably trimellitic acid and/or pyromellitic acid.

In the formula (1), a and b are each an integer of 0 or greater, and satisfy 2 ≤ (a + b) ≤ (d - 2). If c is 2 or greater, multiple a's may be the same as or different from each other and multiple b's may be the same as or different from each other. At least one of c number of a's is not 0. In other words, the monomer (X) has at least one ethylenic unsaturated bond-containing group.

In the formula (1), d is the number of hydrogen atoms bonding to the carbon atoms constituting the aromatic ring in the case of replacing all the substituents including the carboxyl groups of the aromatic polycarboxylic acid by hydrogen atoms, in other words, the number of moieties capable of being replaced on the aromatic ring. In the case that the aromatic ring is a benzene ring having 6 carbon atoms, d is 6 and (a + b) is 2 to 4. In the case that the aromatic ring is a naphthalene ring having 10 carbon atoms, d is 8 and (a + b) is 2 to 6. In the case that the aromatic ring is a monocyclic aromatic ring, a + b is preferably 2 or 3 from the viewpoints of mechanical strength and water resistance of the vinyl resin (V1). From the viewpoints of mechanical strength and water resistance of the vinyl resin (V1), a is preferably 1 or 2, and particularly preferably 1.

From the viewpoints of elongation at break, tensile strength at break, and water resistance of the vinyl resin (V1), the monomer (X) in the present invention preferably has a hydroxy value, determined in conformity with JIS K1557-1, of 0 to 500 mgKOH/g, and more preferably 0 to 350 mgKOH/g. The phrase "the hydroxy value of the monomer (X) is 0" means M¹, M², and L in the formula (1) have no hydroxy group.

The L concentration in the monomer (X) means the amount by millimole of the residue L per gram of the monomer (X). From the viewpoints of elongation at break, tensile strength at break, and water resistance of the vinyl resin (V1), the L concentration is preferably 0.5 to 10 mmol/g, more preferably 0.5 to 8 mmol/g, and particularly preferably 0.5 to 7.5 mmol/g.

From the viewpoints of mechanical strength and water resistance of the vinyl resin (V1), the monomer (X) preferably has a carbonyl concentration of 1.5 to 30 mmol/g, more preferably 1.5 to 24 mmol/g, and particularly preferably 1.5 to 22.5 mmol/g. The carbonyl group involved in the term "carbonyl concentration" in the present invention means the carbonyl groups bonding to L in the formula (1), in other words, the carbonyl groups in the carboxyl groups of the aromatic polycarboxylic acid having 3 or more carboxyl groups for introducing L, and in the functional groups derived therefrom such as an ester group, a thioester group, and an amide group.

The monomer (X) is obtainable by reacting an active hydrogen-containing organic compound constituting M¹ and M², a compound having an ethylenic unsaturated bond constituting R¹ and a hydroxy group (e.g. hydroxyalkyl (meth)acrylates, hydroxyalkyl propenyl ethers, allyloxy alkanols, and (meth)allyl alcohols), and an aromatic polycarboxylic acid having 3 or more carboxyl groups, for example.

This reaction may be performed in an organic solvent (J) to be mentioned later. The organic solvent (J) used may be distilled off at the final stage in production of the monomer (X), or may not be distilled off and used in admixture with the monomer (X) in production of the vinyl resin (V1). In the case of using the solvent (J) in admixture with the monomer (X) in production of the vinyl resin (V1), the solvent (J) may be distilled off after the resin (V1) is produced. Alternatively, the reaction for producing the monomer (X) may be performed in monomers other than the monomer (X) (e.g. monomers (m1) to (m16) to be mentioned later) and the resulting monomer (X) may be used as a monomer component for producing the vinyl resin (V1).

Examples of the monomer components other than the monomer (X) used in production of the vinyl resin (V1) of the present invention include the following vinyl monomers (m1) to (m16). The vinyl monomers other than the monomer (X) may be used alone or in combination.
(1) Hydroxy group-containing vinyl monomers (m1): alkenols having 2 to 12 carbon atoms, such as vinyl alcohol, (meth)allyl alcohol, 1-buten-3-ol, and 2-buten-1-ol; alkene diols having 4 to 12 carbon atoms, such as 2-butene-1,4-diol; hydroxy group-containing aromatic vinyl monomers, such as hydroxystyrene; hydroxyalkyl (meth)acrylates having 5 to 8 carbon atoms, such as hydroxyethyl (meth)acrylate and hydroxypropyl (meth)acrylate; and alkenyl ethers having 3 to 30 carbon atoms, such as 2-hydroxyethyl propenyl ether and sucrose allyl ether
(2) Carboxyl group-containing vinyl monomers (m2): unsaturated monocarboxylic acids and unsaturated dicarboxylic acids having 3 to 30 carbon atoms, and anhydrides thereof and esters of such acids and monoalkyl having 1 to 24 carbon atoms, such as (meth)acrylic acid, (anhydrous) maleic acid, monoalkyl maleates, fumaric acid, monoalkyl fumarates, crotonic acid, itaconic acid, monoalkyl itaconates, itaconic acid glycol monoesters, citraconic acid, monoalkyl citraconates, and cinnamic acid
(3) Sulfo group-containing vinyl monomers (m3): alkene sulfonic acids having 2 to 14 carbon atoms, such as vinylsulfonic acid, (meth)allyl sulfonic acid, and methylvinylsulfonic acid; styrenesulfonic acid and products obtainable by substituting styrenesulfonic acid by an alkyl having 1 to 24 carbon atoms, such as α-methylstyrenesulfonic acid; sulfo(hydroxy)alkyl (meth)acrylates or (meth)acrylamides (whose sulfo(hydroxy)alkyl has 1 to 8 carbon atoms), such as sulfopropyl (meth)acrylate, 2-(meth)acryloyloxyethanesulfonic acid, 3-(meth)acryloyloxy-2-hydroxypropanesulfonic acid, 2-(meth)acrylamido-2-methylpropanesulfonic acid, and 3-(meth)acrylamido-2-hydroxypropanesulfonic acid; and alkyl (meth)allylsulfosuccinate (whose alkyl has 3 to 18 carbon atoms)
(4) Ester group-containing vinyl monomers (m4): esters of an unsaturated alcohol or a hydroxystyrene and a mono or polycarboxylic acid having 1 to 12 carbon atoms, such as vinyl acetate, vinyl butyrate, vinyl propionate, vinyl butyrate, diallyl phthalate, diallyl adipate, isopropenyl acetate, methyl-4-vinyl benzoate, vinylmethoxy acetate, vinyl benzoate, and acetoxystyrene; esters of unsaturated carboxylic acid and alcohol (having 1 to 30 carbon atoms), such as methyl (meth)acrylate, ethyl (meth)acrylate, propyl (meth)acrylate, butyl (meth)acrylate, 2-ethylhexyl (meth)acrylate, dodecyl (meth)acrylate, hexadecyl (meth)acrylate, heptadecyl (meth)acrylate, eicosyl (meth)acrylate, cyclohexyl (meth)acrylate, methylnorbornene (meth)acrylate, benzyl (meth)acrylate, phenyl (meth)acrylate, ethyl-α-ethoxy (meth)acrylate, di(cyclo)alkyl fumarates (2 alkyl groups are linear or branched groups having 2 to 8 carbon atoms) and di(cyclo)alkyl maleates (2 alkyl groups are linear or branched groups having 2 to 8 carbon atoms); esters of a polyhydric (dihydric or trihydric) alcohol and a unsaturated carboxylic acid, such as ethylene glycol di(meth)acrylate, propylene glycol di(meth)acrylate, 1,6-hexane diol di(meth)acrylate, neopentyl glycol di(meth)acrylate, trimethylolpropane tri(meth)acrylate, and polyethylene glycol di(meth)acrylate; esters of a polyoxyalkylene (having 2 to 4 carbon atoms) mono or polyol (having 2 or 3 hydroxy groups) having a polymerization degree of 5 to 50 and an unsaturated carboxylic acid, such as vinyl monomers having a poly(oxyalkylene) glycol chain (alkylene having 2 to 4 carbon atoms) (e.g. poly(oxyethylene) glycol (polymerization degree: 7) mono(meth)acrylate, poly(oxypropylene) glycol (polymerization degree: 9) mono(meth)acrylate, (meth)acrylate of ethylene oxide (10 mol) adduct of methyl alcohol, and (meth)acrylate of ethylene oxide (30 mol) adduct of lauryl alcohol)
(5) Vinyl hydrocarbons (m5):
   (5-1) aliphatic vinyl hydrocarbons: alkenes having 2 to 20 carbon atoms, such as ethylene, propylene, butene, isobutylene, pentene, heptene, diisobutylene, octene, dodecene, octadecene, and other α-olefins; and alkadienes having 4 to 20 carbon atoms, such as butadiene, isoprene, 1,4-pentadiene, 1,5-hexadiene, and 1,7-octadiene;
   (5-2) alicyclic vinyl hydrocarbons: mono or dicycloalkenes and alkadienes, such as cyclohexene, (di)cyclopentadiene, vinylcyclohexene, ethylidenebicycloheptene, and vinylnorbornene; and terpenes, such as pinene and limonene; and
   (5-3) aromatic vinyl hydrocarbons (having 8 to 20 carbon atoms): styrene and hydrocarbyl-substituted products thereof (hydrocarbyl including alkyls, cycloalkyls, aralkyls and/or alkenyls), such as α-methylstyrene, vinyltoluene, 2,4-dimethylstyrene, ethylstyrene, isopropylstyrene, butylstyrene, phenylstyrene, cyclohexylstyrene, benzylstyrene, crotylbenzene, divinylbenzene, divinyltoluene, divinylxylene, and trivinylbenzene; and vinylnaphthalene
(6) Amino group-containing vinyl monomers (m6): aminoalkyl (meth)acrylates having 5 to 20 carbon atoms, such as 7-amino-3,7-dimethyloctyl (meth)acrylate, monomethylaminoethyl (meth)acrylate, t-butylaminoethyl (meth)acrylate, t-octylaminoethyl (meth)acrylate, dimethylaminoethyl (meth)acrylate, and dimethylaminopropyl (meth)acrylate; and N-aminoalkyl (meth)acrylamides having 5 to 20 carbon atoms, such as N-(2-aminoethyl) (meth)acrylamide, N-(1-methyl-2-aminoethyl) (meth)acrylamide, N-(3-aminopropyl) (meth)acrylamide, N-(4-aminobutyl) (meth)acrylamide, N-(5-aminopentyl) (meth)acrylamide, N-(6-aminohexyl) (meth)acrylamide, N-(3-methylaminopropyl) (meth)acrylamide, N-(2-isopropylaminoethyl) (meth)acrylamide, N-(3-isopropylaminopropyl) (meth)acrylamide, N-(3-tert-butylaminopropyl) (meth)acrylamide, dimethylaminoethyl (meth)acrylamide, and dimethylaminopropyl (meth)acrylamide
(7) Epoxy group-containing vinyl monomers (m7): glycidyl group-containing (meth)acrylates having 6 to 20 carbon atoms, such as glycidyl (meth)acrylate and β-methylglycidyl (meth)acrylate; and alicyclic epoxy group-containing vinyl monomers having 6 to 20 carbon atoms such as 4-vinyl-1,2-epoxycyclohexane and 5-vinyl-2,3-epoxynorbornane
(8) Silanol group- or alkoxysilyl group-containing vinyl monomers (m8):
   silanol group-containing vinyl monomers having 4 to 20 carbon atoms, such as dimethylvinylsilanol, divinylsilanol, and 1,4-phenylenebisdivinylsilanol; and alkoxysilyl group-containing vinyl monomers having 8 to 15 carbon atoms such as 3-methacryloyloxypropylmethyldimethoxysilane, 3-acryloyloxypropyltrimethoxysilane, 3-methacryloyloxypropyltrimethoxysilane, and p-styryltrimethoxysilane
(9) Isocyanato group-containing vinyl monomers (m9): isocyanato group-containing vinyl monomers having 5 to 15 carbon atoms, such as isocyanatoethyl (meth)acrylate, m-isopropenyl-α,α-dimethylbenzyl isocyanate, and 4-vinylphenyl isocyanate
(10) Oxazoline group-containing vinyl monomer (m10): vinyl monomers which has 5 to 15 carbon atoms and an oxazoline skeleton, such as 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-ethyl-2-oxazoline, and 5-decyl-2-vinyl-2-oxazoline
(11) Carbodiimide group-containing vinyl monomer (m11): carbodiimide group-containing vinyl monomers having 3 to 30 carbon atoms, such as 1-vinylcarbodiimide, N-ethyl-N'-[(E)-1-methyl-2-(methoxycarbonyl)vinyl]carbodiimide, N-propyl-N'-[(E)-1-methyl-2-(methoxycarbonyl)vinyl]carbodiimide, 1-cyclohexyl-3-(1-phenylvinyl)carbodiimide, 1-phenyl-3-(1-phenylvinyl)carbodiimide, N-phenyl-N'-(4-vinylphenyl)carbodiimide, and N-phenyl-N'-ethenylcarbodiimide
(12) Blocked isocyanato group-containing vinyl monomers (m12) :
   those obtainable by blocking the isocyanato group of the isocyanato group-containing vinyl monomers (m9) with a known blocking agent (phenols such as phenol, thiophenol, chlorophenol, cresol, resorcinol, p-sec-butylphenol, p-tert-butylphenol, p-sec-amylphenol, p-octylphenol, and p-nonylphenol; secondary and tertiary alcohols such as isopropyl alcohol and tert-butyl alcohol; oximes such as acetoxime, methyl ethyl ketoxime, and cyclohexanone oxime; aliphatic secondary amines having 2 to 15 carbon atoms, including secondary amines having primary carbon (e.g. dimethylamine, diethylamine, di-n-propylamine, and ethylmethylamine), secondary amines having secondary carbon (e.g. diisopropylamine, di-sec-butylamine, dicyclohexylamine, and isopropylcyclohexylamine), secondary amines having tertiary carbon (e.g. di-t-butylamine), and other secondary amines (e.g. isopropylethylamine); aromatic secondary amines such as diphenylamine and xylidine; phthalimides; lactams such as ε-caprolactam and δ-valerolactam; active methylene compounds such as dialkyl malonates, acetylacetone, and alkyl acetoacetates; pyrazole compounds such as pyrazole, 3,5-dimethylpyrazole, 3-methylpyrazole, 4-benzyl-3,5-dimethylpyrazole, 4-nitro-3,5-dimethylpyrazole, 4-bromo-3,5-dimethylpyrazole, and 3-methyl-5-phenylpyrazole; and sodium hydrogen sulfite)
(13) Keto group-containing vinyl monomers (m13):
   non limitatively, monomers having a polymerizable double bond and at least one keto group (excluding keto groups in carboxyl groups, ester groups, and amide groups) in the molecule, such as diacetoneacrylamide, methyl vinyl ketone, ethyl vinyl ketone, isobutyl vinyl ketone, (meth)acryloxyalkylpropanal, acetonyl acrylate, and diacetone (meth)acrylamide
(14) Aldehyde group-containing vinyl monomers (m14):
   non limitatively, monomers having at least one aldehyde group and a polymerizable double bond in the molecule, such as acrolein, formyl styrol, (meth)acrylamide pivalic aldehyde, 2-hydroxypropyl acrylate acetyl acetate, acetoacetoxyethyl (meth)acrylate, butanediol-1,4-acrylate-acetylacetate, and acrylamide methyl anisaldehyde
(15) Urethane group- or urea group-containing vinyl monomers (m15):
   reaction products of an isocyanato group-containing vinyl monomers (m9) and a reaction terminator (a4) to be mentioned later (e.g. monohydric alcohols having 1 to 8 carbon atoms and monohydric amines having 1 to 10 carbon atoms); products of introducing a vinyl functional group into part of the active hydrogen component (A) for constituting the polyurethane resin (P) to be mentioned later using a hydroxy group-containing vinyl monomer (m1) and/or an amino group-containing vinyl monomer (m6); and commercially available urethane acrylates such as UF-8001G and DAUA-167 (Kyoeisha Chemical Co., Ltd.), U-200PA and UA-4200 (Shin Nakamura Chemical Co., Ltd.), NEW FRONTIER R-1235, R-1220, R-1301, R-1304, and R-1214 (Dai-ichi Kogyo Seiyaku Co., Ltd.), and KUA-4I and KUA-6I (KSM CO., LTD.)
(16) Other vinyl monomers (m16):
   vinyl sulfones, such as ethyl vinyl sulfone and divinyl sulfone; and divinyl sulfoxide

From the viewpoints of the film formability of the vinyl resin (V1) and the affinity with the polyurethane resin (P), the amount of the monomer (X) in the monomer components for producing the vinyl resin (V1) is preferably 1 to 40% by weight, more preferably 2 and 35% by weight, and particularly preferably 3 to 30% by weight, based on the sum of the amounts of the monomer components.

From the viewpoints of the affinity with a vinyl resin (V2) other than the resin (V1) and mechanical properties of a film of the resin (V1), the vinyl resin (V1) preferably has an ethylenic unsaturated bond-containing group similar to that of a monomer constituting the vinyl resin (V2) other than the resin (V1). With an acrylic resin as the resin (V2), the monomers constituting the resin (V1), including the monomer (X), each preferably have a (meth)acryloyl group as an ethylenic unsaturated bond-containing group; in other words, the resin (V1) is preferably a (meth)acrylic resin.

The vinyl resin (V2) other than the resin (V1) is obtainable by polymerizing the vinyl monomers (m1) to (m16). From the viewpoints of mechanical properties and weather resistance, the resin (V2) is preferably a (meth)acrylic resin.

A polyfunctional monomer among the vinyl monomers (m1) to (m16) used as part of the monomers other than the monomer (X) for constituting the vinyl resins (V1) and (V2) is capable of introducing a crosslinking structure into the resins (V1) and (V2), thereby improving the water resistance, solvent resistance, and mechanical strength thereof. Examples of such a polyfunctional monomer include diallyl esters such as diallyl phthalate and diallyl adipate; esters of a polyhydric alcohol (having 2 or 3 hydroxy groups) and an unsaturated carboxylic acid, such as ethylene glycol di(meth)acrylate; alkadienes having 4 to 20 carbon atoms such as butadiene; and aromatic divinyl hydrocarbons such as divinylbenzene and divinyltoluene.

A silanol group- or alkoxysilyl group-containing vinyl monomer (m8) used as at least part of the monomers other than the monomer (X) for constituting the resins (V1) and (V2) is capable of introducing a silanol group and/or an alkoxysilyl group into the vinyl resins (V1) and (V2), and heat-condensation of the introduced silanol group (including a silanol group derived from the alkoxysilyl group) provides a crosslinking structure for the resins (V1) and (V2). This improves the properties such as water resistance, solvent resistance, and mechanical strength of a film.

For the purpose of improving the dispersibility of substances such as pigments, the vinyl resin (V1) may be modified with an alkyd resin or a polyester resin having a functional group reactive with the vinyl resin (V1).

With no polyfunctional monomer in the monomer components, the vinyl resin (V1) preferably has a number average molecular weight (hereinafter, abbreviated as Mn) of 5,000 to 1,000,000, more preferably 8,000 to 800,000, and particularly preferably 10,000 to 500,000, from the viewpoints of mechanical strength and solvent resistance of the vinyl resin (V1).

The Mn of the vinyl resin (V1) and of the polyurethane resin (P) to be mentioned later of the present invention can be determined by gel permeation chromatography (hereinafter, abbreviated as GPC) in the following exemplary conditions.
- Device: HLC-8120GPC (TOSOH CORP.)
- Column: Guard column H_{XL}-H (one column), TSKgel GMH_{XL} (2 columns) (the columns are produced by TOSOH CORP.)
- Sample solution: 0.25% by weight tetrahydrofuran solution
- Amount of solution: 100 µL
- Flow rate: 1 ml/min
- Measurement temperature: 40°C
- Detector: refractive index detector
- Standard substance: polystyrene standard

The Mn of the polyol to be mentioned later and that of the compound (S) represented by the formula (7) to be mentioned later can be determined by GPC in the following exemplary conditions.
- Device: Waters Alliance 2695 (Waters Corp.)
- Column: Guard column Super H-L (one column), and TSKgel SuperH2000 (one column), TSKgel SuperH3000 (one column), and TSKgel SuperH4000 (one column) connected in series (the columns are produced by TOSOH CORP.)
- Sample solution: 0.25% by weight tetrahydrofuran solution
- Amount of solution: 10 µL
- Flow rate: 0.6 ml/min
- Measurement temperature: 40°C
- Detector: refractive index detector
- Standard substance: polyethylene glycol standard

The glass transition temperature of the vinyl resin (V1) is preferably -50 to 80°C, and particularly preferably -50 to 50°C from the viewpoint of mechanical strength of the vinyl resin (V1). The glass transition temperature can be determined by the method (DSC method) standardized in ASTM D3418-82 using Q-20 (TA Instruments Japan Inc.).

The vinyl resin (V1) of the present invention may optionally be mixed with any additives such as antioxidants, coloring inhibitors, ultraviolet absorbents, hindered amine light stabilizers, plasticizers, and release agents. The amount of these additives is usually 10% by weight or less, preferably 3% by weight or less, and more preferably 1% by weight or less, based on the weight of the vinyl resin (V1).

The vinyl resin (V1) of the present invention may be used in the form of an aqueous dispersion, a solution in an organic solvent, a medium-free solid resin, or the like. From the viewpoints of environmental load, safety, and handleability, the vinyl resin (V1) is preferably in the form of an aqueous dispersion. The following will describe methods of producing the vinyl resin (V1) in the respective forms.

The aqueous dispersion of the vinyl resin (V1) of the present invention is obtainable by emulsion polymerizing monomer components including the monomer (X) in an aqueous medium in the presence of a surfactant (C), for example.

Examples of the surfactant (C) include radical reactive group-containing reactive surfactants (C1) and nonreactive surfactants (C2). They may be used alone or in combination, including combined use of surfactants (C1) and (C2) .

The surfactant (C) in emulsion polymerization is usually used in an amount of 0.5 to 10% by weight based on the sum of the amounts of the vinyl monomers used in the polymerization. The amount thereof is preferably 1 to 5% by weight from the viewpoints of water resistance and emulsification stability of the vinyl resin (V1).

The reactive surfactant (C1) may be any of radical-reactive ones. Specific examples thereof include ADEKA REASOAP® series SE-10N, SR-10, SR-20, SR-30, ER-20, and ER-30 (ADEKA CORP.); AQUALON® series HS-10, KH-05, KH-10, and KH-1025 (Dai-ichi Kogyo Seiyaku Co., Ltd.); ELEMINOL® series JS-20 (Sanyo Chemical Industries, Ltd.); LATEMUL® series PD-104, PD-420, and PD-430 (Kao Corp.); and IONET® series MO-200 (Sanyo Chemical Industries, Ltd.).

Examples of the nonreactive surfactant (C2) include nonionic surfactants (C21), anionic surfactants (C22), cationic surfactants (C23), amphoteric surfactants (C24), and other emulsion dispersants (C25).

Examples of the surfactants (C21) include AO-added nonionic surfactants and polyhydric alcohol nonionic surfactants. Examples of the AO-added surfactants include EO adducts of aliphatic alcohols having 10 to 20 carbon atoms, EO adducts of phenols, EO adducts of nonyl phenols, EO adducts of alkylamines having 8 to 22 carbon atoms, and EO adducts of poly(oxypropylene)glycols. Examples of the polyhydric alcohol surfactants include esters of fatty acids (having 8 to 24 carbon atoms) and polyhydric alcohols (having 2 to 30 carbon atoms and 3 to 8 or more hydroxy groups) (e.g. glycerin monostearate, glycerin monooleate, sorbitan monolaurate, and sorbitan monooleate) and alkyl polyglycoside (whose alkyl has 4 to 24 carbon atoms) (polymerization degree: 1 to 10).

Examples of the surfactants (C22) include ether carboxylic acids having a hydrocarbon group with 8 to 24 carbon atoms and salts thereof (e.g. sodium lauryl ether sulfate and sodium (poly)oxyethylene lauryl ether sulfate (amount by mole of EO added: 1 to 100)); sulfuric acid esters and ether sulfuric acid esters having a hydrocarbon group with 8 to 24 carbon atoms and salts thereof (e.g. sodium lauryl sulfate, sodium (poly)oxyethylene lauryl ether sulfate (amount by mole of EO added: 1 to 100), (poly)oxyethylene triethanolamine lauryl ether sulfate (amount by mole of EO added: 1 to 100), and (poly)oxyethylene cocoyl monoethanolamide sodium sulfate (amount by mole of EO added: 1 to 100)); salts of sulfonic acid having a hydrocarbon group with 8 to 24 carbon atoms (e.g. sodium dodecylbenzene sulfonate); sulfosuccinic acid salts having 1 or 2 hydrocarbon group(s) having 8 to 24 carbon atoms; phosphoric acid esters and ether phosphoric acid esters having a hydrocarbon group with 8 to 24 carbon atoms, and salts thereof (e.g. sodium lauryl phosphate and sodium (poly)oxyethylene lauryl ether phosphate (amount by mole of EO added: 1 to 100)); salts of fatty acid having a hydrocarbon group with 8 to 24 carbon atoms (e.g. sodium laurate and triethanolamine laurate); salts of acylated amino acid having a hydrocarbon group with 8 to 24 carbon atoms (e.g. sodium methyl cocoyl taurate, sodium cocoyl sarcosinate, triethanolamine cocoyl sarcosinate, triethanolamine N-cocoyl acyl-L-glutamate, sodium N-cocoyl acyl-L-glutamate, and sodium lauroyl methyl-β-alanine).

Examples of the surfactants (C23) include quaternary ammonium salt surfactants (e.g. stearyl trimethyl ammonium chloride, behenyl trimethyl ammonium chloride, distearyl dimethyl ammonium chloride, and ethyl sulfate lanolin fatty acid aminopropyl ethyl dimethyl ammonium) and amine salt surfactants (e.g. stearic acid diethyl aminoethyl amide lactate, dilaurylamine hydrochloric acid salts, and oleyl amine lactate).

Examples of the surfactants (C24) include betaine amphoteric surfactants (e.g. cocamidopropyl betaine, lauryl betaine, 2-alkyl-N-carboxymethyl-N-hydroxyethyl imidazolinium betaine, lauryl hydroxysulfobetaine, and sodium lauroyl amidoethyl hydroxyethyl carboxymethyl betaine hydroxypropyl phosphate), and amino acid amphoteric surfactants (sodium β-lauryl aminopropionate).

Examples of the surfactants (C25) include polyvinyl alcohol, starch and derivatives thereof, cellulose derivatives such as carboxymethyl cellulose, methyl cellulose, and hydroxyethyl cellulose, and carboxyl group-containing (co)polymers such as sodium polyacrylate, and urethane group- or ester group-containing emulsion dispersant disclosed in US 5,906,704 (e.g. products of coupling polycaprolactone polyol and polyether diol with polyisocyanate).

Examples of the polymerization initiator to be used in emulsion polymerization include common radical polymerization initiators, including persulfate-type initiators such as potassium persulfate and ammonium persulfate; azo-type initiators such as azobisisobutyronitrile; organic peroxide-type initiators such as benzoyl peroxide, cumene hydroperoxide, and tertiary-butyl peroxybenzoate; and hydrogen peroxide. They may be used alone or in combination. The amount of the polymerization initiator is 0.05 to 5% by weight based on the total weight of the monomer components used in polymerization.

These initiators in required amounts may be added in one lot at the start of polymerization, or may be separately added at any timing.

In emulsion polymerization, the polymerization initiator may optionally be used in combination with a reducing agent. Examples of the reducing agent include reducible organic compounds such as ascorbic acid, tartaric acid, citric acid, glucose, and formaldehyde sulfoxylate metal salts, and reducible inorganic compounds such as sodium thiosulfate, sodium sulfite, sodium hydrogen sulfite, and sodium metabisulfite.

In emulsion polymerization, a chain-transfer agent may optionally be used. Examples of the chain-transfer agent include n-dodecyl mercaptan, tert-dodecyl mercaptan, n-butyl mercaptan, 2-ethylhexyl thioglycolate, 2-mercaptoethanol, β-mercaptopropionic acid, and α-methylstyrene dimer.

Further, appropriate amounts of a buffer and a protective colloid may optionally be used; examples of the former include sodium acetate, sodium citrate, and sodium bicarbonate, and examples of the latter include polyvinyl alcohol, water-soluble cellulose derivatives, and alkali metal salts of polymethacrylic acid.

Polymerization reaction in production of the vinyl resin (V1) is preferably performed at 20°C to 150°C, and more preferably 40°C to 100°C. Polymerization reaction at a temperature lower than 20°C may be slow. Polymerization reaction at a temperature exceeding 150°C may be difficult to control. The reaction time is preferably 1 minute to 50 hours. The polymerization reaction is preferably performed in the presence of inert gas.

In production of the vinyl resin (V1), use of a monomer having an acidic group or a basic group as one monomer component and neutralization of the resulting polymer to a pH of 5 to 10 using a neutralizer lead to an increase in the surface charge of the polymer, resulting in improved stability of the resin in an aqueous medium.

Examples of the neutralizer for neutralizing the acidic group include ammonia, amine compounds having 1 to 20 carbon atoms, and alkali-metal hydroxides (e.g. sodium hydroxide, potassium hydroxide, and lithium hydroxide).

Examples of the amine compounds having 1 to 20 carbon atoms include primary amines such as monomethylamine, monoethylamine, monobutylamine, and monoethanolamine; secondary amines such as dimethylamine, diethylamine, dibutylamine, diethanolamine, diisopropanolamine, and methylpropanolamine; and tertiary amines such as trimethylamine, triethylamine, dimethylethylamine, dimethylmonoethanolamine, and triethanolamine.

From the viewpoints of dryability of a vinyl resin aqueous dispersion (V1E) and water resistance of a film, the neutralizer for neutralizing an acidic group is a compound having high vapor pressure at 25°C. It is preferably ammonia, monomethylamine, monoethylamine, dimethylamine, diethylamine, trimethylamine, triethylamine, or dimethylethylamine, more preferably ammonia, monoethylamine, dimethylamine, or diethylamine, and particularly preferably ammonia.

From the viewpoint of storage stability of the vinyl resin aqueous dispersion (V1E), the neutralizer for neutralizing an acidic group is a neutralizer having a boiling point of 50°C or higher. It is preferably triethylamine, dimethylmonoethanolamine, or methylpropanolamine, and more preferably triethylamine or dimethylmonoethanolamine.

Examples of the neutralizer for neutralizing a basic group include monocarboxylic acids having 1 to 10 carbon atoms (e.g. formic acid, acetic acid, propanoic acid, and lactic acid), carbonic acid, hydrochloric acid, phosphoric acid, sulfuric acid, dimethyl carbonate, dimethyl sulfate, methyl chloride, and benzyl chloride.

From the viewpoints of dryability of the vinyl resin aqueous dispersion (V1E) and water resistance of a film, the neutralizer for neutralizing a basic group is a compound having high vapor pressure at 25°C. It is preferably a monocarboxylic acid having 1 to 10 carbon atoms or carbonic acid, more preferably formic acid or carbonic acid, and particularly preferably carbonic acid.

From the viewpoint of storage stability of the vinyl resin aqueous dispersion (V1E), the neutralizer for neutralizing a basic group is a neutralizer having a boiling point of 50°C or higher. It is preferably formic acid, acetic acid, or lactic acid, and more preferably formic acid or lactic acid.

In the reaction for producing the vinyl resin (V1), an organic solvent (J) may optionally be used. From the viewpoints of odor, temporal stability, environmental load, safety, production cost, and the like, the amount of the organic solvent (J) is 5% by weight or less, and more preferably 1% by weight or less, based on the weight of the aqueous dispersion. From the viewpoint of environmental pollution, the solvent (J) is particularly preferably not used.

Examples of the organic solvent (J) include ketone solvents (e.g. acetone, methyl ethyl ketone (hereinafter abbreviated as MEK)), ester solvents (e.g. ethyl acetate and γ-butyrolactone), ether solvents (e.g. THF), amide solvents (e.g. N,N-dimethylformamide, N,N-dimethylacetamide, N-methyl-2-pyrrolidone, and N-methylcaprolactam), alcohol solvents (e.g. isopropyl alcohol), and aromatic hydrocarbon solvents (e.g. toluene and xylene). These organic solvents (J) may be used alone or in combination.

The "aqueous medium" in the present invention means water and a mixture of water and an organic solvent (J). An organic solvent (J) used in an aqueous medium is preferably a water-soluble organic solvent from the viewpoint of dispersibility. In the case of using an organic solvent (J), the solvent may be distilled off after production of the vinyl resin aqueous dispersion (V1E).

From the viewpoint of dispersion stability of the dispersion (V1E), the volume average particle size of the vinyl resin (V1) in the vinyl resin aqueous dispersion (V1E) of the present invention is preferably 0.01 to 1 µm, more preferably 0.02 to 0.7 µm, and particularly preferably 0.03 to 0.5 µm.

The volume average particle size of the resin aqueous dispersion in the present invention is measured using a light scattering particle size distribution analyzer (ELS-8000, Otsuka Electronics Co., Ltd.) after the dispersion is diluted with ion exchange water such that the resin solids content is 0.01% by weight.

The volume average particle size of the resin (V1) can be adjusted in accordance with the type and amount of a hydrophilic group in the resin (V1) and the type and amount of a dispersant. The volume average particle size in the present invention is measured by the method to be described in EXAMPLES.

The vinyl resin aqueous dispersion (V1E) of the present invention may contain the aforementioned organic solvent (J). Still, from the viewpoints of odor, temporal stability, environmental load, safety, production cost, and the like, the amount of the organic solvent is preferably 10000 ppm or less, more preferably 8000 ppm or less, and particularly preferably 5000 ppm or less, based on the weight of the aqueous dispersion.

The solution of the vinyl resin (V1) in an organic solvent of the present invention is obtainable by polymerizing monomer components including the monomer (X) in an organic solvent. Examples of the organic solvent for the solution of the resin (V1) in an organic solvent include the aforementioned organic solvents (J).

Examples of the polymerization initiator for polymerization include similar ones exemplified as polymerization initiators to be used in the aforementioned emulsion polymerization. They may be used alone or in combination. The amount of the polymerization initiator is preferably 0.05 to 5% by weight for the total weight of the monomer components to be used in the polymerization.

A chain-transfer agent may optionally be used in polymerization, such as n-dodecylmercaptan, tert-dodecylmercaptan, n-butylmercaptan, 2-ethylhexyl thioglycolate, 2-mercaptoethanol, β-mercaptopropionic acid, and α-methylstyrene dimer.

The temperature of the polymerization reaction in production of the solution of the vinyl resin (V1) in an organic solvent is preferably 20°C to 150°C, and more preferably 40°C to 100°C, from the viewpoints of polymerization rate and easiness of controlling the reaction. The reaction time is preferably 1 minute to 50 hours. The polymerization reaction is preferably performed in the presence of inert gas.

The vinyl resin (V1) of the present invention in the form of a medium-free solid resin is obtainable by any of the following methods, including: a method of polymerizing monomer components without an organic solvent (J) in the method of producing the solution of the resin (V1) in an organic solvent; and a method of removing an aqueous medium or an organic solvent from an aqueous dispersion of the resin (V1), a dispersion of the resin (V1) obtained by suspension polymerization, or the solution of the resin (V1) in an organic solvent.

The vinyl resin (V2) other than the vinyl resin (V1) in the present invention can be produced in the same manner as for producing the resin (V1) except that the monomer components include no monomer (X). The resin (V2) may also be in the form of aqueous dispersion, solution in organic solvent, medium-free solid resin, or the like, similarly to the resin (V1). Preferable forms thereof are the same as those of the resin (V1).

Non-limiting examples of the polyurethane resin (P) in the present invention include polyurethane resin obtainable by reacting an active hydrogen component (A) and an organic polyisocyanate component (B).

The active hydrogen component (A) contains a polyol (a1), and optionally a compound (a2) having a hydrophilic group and active hydrogen, a chain extender (a3), and a reaction terminator (a4).

Examples of the polyol (a1) include high-molecular-weight polyols (a11) having a formula weight or Mn of 300 or higher and low-molecular-weight polyols (a12) having a formula weight or Mn of lower than 300.

Examples of the high-molecular-weight polyol (a11) having a formula weight or Mn of 300 or higher include polyether polyol (a111), polyester polyol (a112), and acrylic polyol (a113).

Examples of the polyether polyol (a111) include aliphatic polyether polyols and aromatic ring-containing polyether polyols.

Examples of the aliphatic polyether polyols include polyoxyethylene polyols (e.g. PEG), polyoxypropylene polyols (e.g. poly(oxypropylene)glycol), polyoxyethylene/propylene polyol, and poly(oxytetramethylene)glycol.

Examples of commercially available aliphatic polyether polyols include PTMG1000 (poly(oxytetramethylene)glycol, Mn = 1,000, Mitsubishi Chemical Corp.), PTMG2000 (poly(oxytetramethylene)glycol, Mn = 2,000, Mitsubishi Chemical Corp.), PTMG3000 (poly(oxytetramethylene)glycol, Mn = 3,000, Mitsubishi Chemical Corp.), and SANNIX triol GP-3000 (poly(oxypropylene)triol, Mn = 3,000, Sanyo Chemical Industries, Ltd.).

Examples of the aromatic polyether polyols include polyols having a bisphenol skeleton, including EO adducts of bisphenol A (e.g. 2 mole EO adduct of bisphenol A, 4 mole EO adduct of bisphenol A, 6 mole EO adduct of bisphenol A, 8 mole EO adduct of bisphenol A, 10 mole EO adduct of bisphenol A, and 20 mole EO adduct of bisphenol A) and PO adducts of bisphenol A (e.g. 2 mole PO adduct of bisphenol A, 3 mole PO adduct of bisphenol A, and 5 mole PO adduct of bisphenol A), and EO adducts or PO adducts of resorcin.

Examples of the polyester polyols (a112) include condensed polyester polyol, polylactone polyol, polycarbonate polyol, and castor oil polyol.

The condensed polyester polyol is a polyester polyol obtainable by reacting a low-molecular-weight polyhydric alcohol (with a formula weight or Mn of lower than 300) and a polyvalent carboxylic acid having 2 to 10 carbon atoms or an ester-formable derivative thereof.

Examples of the low-molecular-weight polyhydric alcohol (with a formula weight or Mn of lower than 300) include aliphatic polyhydric alcohols having 2 to 8 or more hydroxy groups and having a formula weight or Mn of lower than 300, and low-mole AO adducts of phenols having 2 to 8 or more hydroxy groups and having a formula weight or Mn of lower than 300. Preferable among these are ethylene glycol, propylene glycol, 1,4-butane diol, neopentyl glycol, 1,6-hexane diol, low-mole EO or PO adducts of bisphenol A, and any combination thereof.

Examples of the polyvalent carboxylic acids having 2 to 10 carbon atoms or ester-formable derivatives thereof to be used for condensed polyester polyols include aliphatic dicarboxylic acids (e.g. succinic acid, adipic acid, azelaic acid, sebacic acid, and fumaric acid, maleic acid), alicyclic dicarboxylic acids (e.g. dimer acids), aromatic dicarboxylic acids (e.g. terephthalic acid, isophthalic acid, and phthalic acid), polycarboxylic acids having 3 or more carboxyl groups (e.g. trimellitic acid and pyromellitic acid), anhydrides thereof (e.g. succinic anhydride, maleic anhydride, phthalic anhydride, and trimellitic anhydride), acid halides thereof (e.g. adipic acid dichloride), low-molecular-weight alkyl esters thereof (e.g. dimethyl succinate and dimethyl phthalate), and any combination thereof.

Specific examples of the condensed polyester polyols include polyethylene adipate diol, polybutylene adipate diol, polyhexamethylene adipate diol, polyhexamethylene isophthalate diol, polyneopentyl adipate diol, polyethylene propylene adipate diol, polyethylene butylene adipate diol, polybutylene hexamethylene adipate diol, polydiethylene adipate diol, poly(polytetramethylene ether)adipate diol, poly(3-methylpentylene adipate)diol, polyethylene azelate diol, polyethylene sebacate diol, polybutylene azelate diol, polybutylene sebacate diol, and polyneopentyl terephthalate diol.

Examples of commercially available condensed polyester polyols include SANESTOR 2610 (polyethylene adipate diol, Mn = 1,000, Sanyo Chemical Industries, Ltd.), SANESTOR 2620 (polyethylene adipate diol, Mn = 2,000, Sanyo Chemical Industries, Ltd.), and SANESTOR 5620 (polyneopentylene adipate diol, Mn = 2,000, Sanyo Chemical Industries, Ltd.).

Polylactone polyols are products of polyaddition of lactone to polyhydric alcohol having a low molecular weight (having a formula weight or Mn of lower than 300). Examples of the lactone include lactones having 4 to 12 carbon atoms (e.g. γ-butyrolactone, γ-valerolactone, and ε-caprolactone).

Specific examples of the polylactone polyols include polycaprolactone diol, polyvalerolactone diol, and polycaprolactone triol.

Examples of the polycarbonate polyols include polycarbonate polyols produced by condensing a polyhydric alcohol having a low molecular weight (formula weight or Mn of lower than 300) and a low molecular weight carbonate compound (e.g. dialkyl carbonates whose alkyl groups each has 1 to 6 carbon atoms, alkylene carbonates whose alkylene group has 2 to 6 carbon atoms, and diaryl carbonates whose aryl groups each has 6 to 9 carbon atoms) under dealcoholization. Two or more low molecular weight polyhydric alcohols may be used in combination and 2 or more alkylene carbonates may be used in combination.

Specific examples of the polycarbonate polyols include polyhexamethylene carbonate diol, polypentamethylene carbonate diol, polytetramethylene carbonate diol, poly(tetramethylene/hexamethylene)carbonate diols (e.g. a diol obtainable by condensing 1,4-butane diol and 1,6-hexane diol under dealcoholization with a dialkyl carbonate), and poly(cyclohexylenebis(methylene)/hexamethylene)carbonate diols (e.g. a diol obtainable by condensing 1,4-cyclohexanedimethanol and 1,6-hexane diol under dealcoholization with a dialkyl carbonate).

Examples of commercially available polycarbonate polyols include NIPPOLAN 980R (polyhexamethylene carbonate diol, Mn = 2,000, Nippon Polyurethane Industry Co., Ltd.), NIPPOLAN 981 (polyhexamethylene carbonate diol, Mn = 1,000, Nippon Polyurethane Industry Co., Ltd.), DURANOL G4672 (poly(tetramethylene/hexamethylene)carbonate diol, Mn = 2,000, Asahi Kasei Chemicals Corp.), ETERNACOLL UH-200 (polyhexamethylene carbonate diol, Mn = 2,000, Ube Industries, Ltd.), and ETERNACOLL UM-90 (poly(cyclohexylenebis(methylene)/hexamethylene)carbonate diol, Mn = 900, Ube Industries, Ltd.).

The castor oil polyols include castor oil and modified castor oils modified with polyol or AO. The modified castor oils can be produced by ester exchange between castor oil and polyol and/or AO addition. Examples of the castor oil polyols include castor oil, trimethylolpropane-modified castor oil, pentaerythritol-modified castor oil, and EO adducts of castor oil (amount by moles of EO added: 4 to 30).

From the viewpoints of mechanical strength and solvent resistance, preferable as the polyester polyol (a112) are condensed polyester polyols and polycarbonate polyols.

Examples of the acrylic polyol (a113) include copolymers of the vinyl monomers (m1) to (m16) which essentially include the hydroxy group-containing vinyl monomer (m1) as a structural monomer and which satisfy that the weight of the (meth)acrylic monomer(s) is 50% by weight or more. Examples of commercially available monomers (a113) include ARUFON UH-2000, UH-2032, UH-2041, and UH-2012 (TOAGOSEI CO., LTD.), and TAKELAC W, WS, and E (Mitsui Chemicals, Inc.).

The Mn of the polyol (a11) is usually 300 or higher, preferably 300 to 10,000, and more preferably 300 to 6,000, from the viewpoint of mechanical strength of the polyurethane resin (P).

Examples of the low molecular weight polyols (a12) having a formula weight or Mn of lower than 300 include dihydric aliphatic alcohols, trihydric aliphatic alcohols, and aliphatic alcohols having 4 or more hydroxy groups. From the viewpoints of properties such as tensile strength at break and elongation at break, dihydric and trihydric aliphatic alcohols are preferred among the polyols (a1). Particularly preferred as the dihydric aliphatic alcohols are ethylene glycol, propylene glycol, 1,4-butane diol, neopentyl glycol, and 1,6-hexane diol. Particularly preferred as the trihydric aliphatic alcohols is trimethylolpropane.

Examples of the compound (a2) having a hydrophilic group and active hydrogen include compounds (a21) having an anionic group and active hydrogen and compounds (a22) having a cationic group and active hydrogen.

Examples of the compounds (a21) having an anionic group and active hydrogen include compounds having 2 to 10 carbon atoms and a carboxyl group as an anionic group, such as dialkylol alkanoic acids (e.g. 2,2-dimethylol propionic acid, 2,2-dimethylol butanoic acid, 2,2-dimethylol heptanoic acid, and 2,2-dimethylol octanoic acid), tartaric acid, and amino acids (e.g. glycine, alanine, and valine)); compounds having 2 to 16 carbon atoms and a sulfo group as an anionic group, such as 3-(2,3-dihydroxypropoxy)-1-propanesulfonic acid and sulfoisophthalic acid di(ethylene glycol)ester; compounds having 2 to 10 carbon atoms and a sulfamic acid group as an anionic group, such as N,N-bis(2-hydroxylethyl)sulfamic acid; and salts obtainable by neutralizing these compounds with a neutralizer.

Examples of the neutralizer for salts of the compounds (a21) include the same neutralizers as for neutralizing the acidic group of the vinyl resin (V1), and preferable examples thereof are the same.

From the viewpoints of resin properties of a film and dispersion stability of an aqueous dispersion of the resin (P), the compound (a21) is preferably any of 2,2-dimethylol propionic acid, 2,2-dimethylol butanoic acid, and salts thereof, and more preferably salts of 2,2-dimethylol propionic acid and 2,2-dimethylol butanoic acid neutralized with ammonia or an amine compound having 1 to 20 carbon atoms.

Examples of the compounds (a22) having a cationic group and active hydrogen include salts of compounds such as diols having a tertiary amino group with 1 to 20 carbon atoms (e.g. N-alkyl dialkanolamines (e.g. N-methyldiethanolamine, N-propyldiethanolamine, N-butyldiethanolamine, and N-methyl dipropanolamine), and N,N-dialkyl monoalkanolamines (e.g. N,N-dimethylethanolamine)) neutralized with a neutralizer.

Examples of the neutralizer for the compounds (a22) include the same as the neutralizers for neutralizing a basic group of the vinyl resin (V1), and preferable examples thereof are the same.

The neutralizers for the compounds (a21) and (a22) are mainly used for dispersing the polyurethane resin (P) in an aqueous dispersion. The neutralizers for the compounds (a21) and (a22) may be added before urethanization, during urethanization, after urethanization, before dispersion in an aqueous medium, during dispersion in an aqueous medium, or after dispersion in an aqueous medium. From the viewpoints of stability of the polyurethane resin (P) and stability of the aqueous dispersion, the neutralizers are preferably added before dispersion in an aqueous medium or during dispersion in an aqueous medium.

In the case of dispersing the polyurethane resin (P) in an aqueous dispersion, the amount of the compound (a2) is adjusted such that the amount of hydrophilic groups in the resin (P) is preferably 0.01 to 5% by weight, more preferably 0.1 to 4% by weight, and particularly preferably 0.5 to 3% by weight, based on the weight of the resin (P).

The amount of hydrophilic groups in the present invention means % by weight of nonneutralized cationic or anionic groups, excluding the weight of counterions. For example, the amount of hydrophilic groups in a triethylamine salt of 2,2-dimethylol propionic acid as the compound (a21) means % by weight of the carboxyl groups (-COOH), and that in a triethylamine salt of 3-(2,3-dihydroxypropoxy)-1-propanesulfonic acid means % by weight of sulfo groups (-SO₃H). The amount of hydrophilic groups in the compounds (a22) means % by weight of only the nitrogen atoms in the tertiary amino group.

Examples of the chain extender (a3) include water; diamines having 2 to 10 carbon atoms, such as ethylenediamine, propylenediamine, hexamethylenediamine, isophoronediamine, toluenediamine, and piperazine; polyalkylene (n = 2 to 6) polyamines (n = 3 to 7) (whose alkylenes each have 2 to 6 carbon atoms), such as diethylenetriamine, dipropylenetriamine, dihexylenetriamine, triethylenetetramine, tetraethylenepentamine, pentaethylenehexamine, and hexaethyleneheptamine; hydrazines and derivatives thereof, such as dibasic acid dihydrazides (e.g. adipic acid dihydrazide); and amino alcohols having 2 to 10 carbon atoms, such as ethanolamine, diethanolamine, 2-amino-2-methylpropanol, and triethanolamine.

Examples of the reaction terminator (a4) include monoalcohols having 1 to 8 carbon atoms, such as methanol, ethanol, isopropanol, cellosolves, and carbitols; monoamines having 1 to 10 carbon atoms, such as mono or dialkylamines (e.g. monomethylamine, monoethylamine, monobutylamine, and dibutylamine, monooctylamine), and mono or dialkanolamines (e.g. monoethanolamine, diethanolamine, and diisopropanolamine).

Examples of the chain extender (a3) and the reaction terminator (a4) further include compounds having a hydroxy or amino group and a keto group, and compounds having an aldehyde group and a hydroxy group.

The organic isocyanate component (B) in the present invention may be one conventionally used in production of polyurethane, and examples thereof include aromatic polyisocyanates (B1) having 8 to 26 carbon atoms, aliphatic polyisocyanates (B2) having 4 to 22 carbon atoms, alicyclic polyisocyanates (B3) having 8 to 18 carbon atoms, and aromatic-aliphatic polyisocyanates (B4) having 10 to 18 carbon atoms, having 2 or 3 or more isocyanato groups, and modified products (B5) of these polyisocyanates. These organic isocyanate components (B) may be used alone or in combination.

Examples of the aromatic polyisocyanates (B1) having 8 to 26 carbon atoms include 1,3- or 1,4-phenylenediisocyanate, 2,4- or 2,6-tolylenediisocyanate (hereinafter, tolylene diisocyanate is abbreviated as TDI), crude TDI, 4,4'- or 2,4'-diphenylmethanediisocyanate (hereinafter, diphenylmethanediisocyanate is abbreviated as MDI), crude MDI, polyaryl polyisocyanate, 4,4'-diisocyanatobiphenyl, 3,3'-dimethyl-4,4'-diisocyanatobiphenyl, 3,3'-dimethyl-4,4'-diisocyanatodiphenylmethane, 1,5-naphthylenediisocyanate, 4,4',4"-triphenylmethanetriisocyanate, and m- or p-isocyanatophenylsulfonyl isocyanate.

Examples of the aliphatic polyisocyanates (B2) having 4 to 22 carbon atoms include ethylene diisocyanate, tetramethylene diisocyanate, hexamethylene diisocyanate (hereinafter, abbreviated as HDI), dodecamethylene diisocyanate, 1,6,11-undecanetriisocyanate, 2,2,4-trimethylhexamethylenediisocyanate, lysine diisocyanate, 2,6-diisocyanatomethyl caproate, bis(2-isocyanatoethyl)fumarate, bis(2-isocyanatoethyl)carbonate, and 2-isocyanatoethyl-2,6-diisocyanatohexanoate.

Examples of the alicyclic polyisocyanates (B3) having 8 to 18 carbon atoms include isophorone diisocyanate (hereinafter, abbreviated as IPDI), 4,4-dicyclohexylmethane diisocyanate (hereinafter, abbreviated as hydrogenated MDI), cyclohexylene diisocyanate, methylcyclohexylene diisocyanate, bis(2-isocyanatoethyl)-4-cyclohexene-1,2-dicarboxylate, and 2,5- or 2,6-norbornanediisocyanate.

Examples of the aromatic-aliphatic polyisocyanates (B4) having 10 to 18 carbon atoms include m- or p-xylylene diisocyanate and α,α,α',α'-tetramethylxylylene diisocyanate.

Examples of the modified products (B5) of the polyisocyanates (B1) to (B4) include modified products of the polyisocyanates (e.g. modified products having a urethane group, a carbodiimide group, an allophanate group, a urea group, a biuret group, a uretdione group, a uretimine group, an isocyanurate group, or an oxazolidone group; those having a free isocyanato group content of usually 8 to 33% by weight, preferably 10 to 30% by weight, and particularly 12 to 29% by weight), such as modified MDIs (e.g. urethane-modified MDI, carbodiimide-modified MDI, and trihydrocarbyl phosphate-modified MDI), urethane-modified TDI, biuret-modified HDI, isocyanurate-modified HDI, and isocyanurate-modified IPDI.

From the viewpoints of solvent resistance and yellowing resistance of a film, the organic polyisocyanate component (B) is preferably the component (B2) or (B3), more preferably the component (B3), and particularly preferably IPDI or hydrogenated MDI.

A polyol having 3 or more hydroxy groups (e.g. poly(oxypropylene)triol and polyester triol), a chain extender having a valence of 3 or greater (e.g. polyalkylene (n = 2 to 6) polyamine (n = 3 to 7) (whose alkylenes each have 2 to 6 carbon atoms)), and/or an organic isocyanate compound having a valence of 3 or greater (e.g. isocyanurate-modified HDI and isocyanurate-modified IPDI) used as the polyol (a1), the chain extender (a3), and/or the organic polyisocyanate component (B), respectively, for the polyurethane resin (P) allow for introduction of a crosslinking structure into the polyurethane resin (P). This improves the properties such as mechanical strength, water resistance, and solvent resistance of the polyurethane resin (P).

Mixing the active hydrogen component (A) used in the polyurethane resin (P) with a compound (S1) represented by the formula (7) and containing at least one active hydrogen atom allows for introduction of the compound (S1) into the molecular structure of the polyurethane resin (P), thereby improving the properties such as mechanical strength, water resistance, and solvent resistance of the polyurethane resin (P). Combination use of the vinyl resin (V1) and the polyurethane resin (P) and combination use of the vinyl resin (V1), the polyurethane resin (P), and the vinyl resin (V2) other than the resin (V1) provide a film much better in properties such as mechanical strength, water resistance, and solvent resistance.

Addition and/or mixing of the compound (S) represented by the formula (7) to/with the polyurethane resin (P) also improve(s) the properties such as mechanical strength, water resistance, and solvent resistance of the polyurethane resin (P). Combination use of the vinyl resin (V1) and the polyurethane resin (P) and combination use of the vinyl resin (V1), the polyurethane resin (P), and the vinyl resin (V2) other than the resin (V1) provide a film much better in properties such as mechanical strength, water resistance, and solvent resistance.

The compound (S) represented by the formula (7) comprises a compound (S1) having at least one active hydrogen atom and a compound (S2) having no active hydrogen.

In order to introduce the compound (S) into the molecule of the polyurethane resin (P), the compound (S1) having at least one active hydrogen atom is used. In order to add/mix the compound (S) to/with the polyurethane resin (P), either of the compound (S1) and the compound (S2) may be used. These compounds (S1) and (S2) may be used alone or in combination.

The compound (S) represented by the formula (7) will be described below. Unless otherwise specified, the compound (S1) having at least one active hydrogen atom to be introduced into the polyurethane resin (P) and the compound (S) to be added to/mixed with the polyurethane resin (P) have the same preferable properties such as composition and various values.

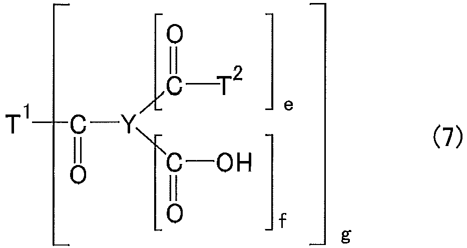

In the formula (7), T¹ is a residue of an m-valent active hydrogen-containing organic compound from which g number of active hydrogen atoms are removed.

Examples of m-valent active hydrogen-containing organic compounds include the same as those exemplified as mono- to 20-valent active hydrogen-containing organic compounds for introducing M¹ in the formula (1).

From the viewpoints of water resistance and solvent resistance of the polyurethane resin, the amount by mole of AOs in an AO adduct as the active hydrogen-containing organic compound is preferably 8 to 100, and more preferably 10 to 80. The hydroxy value of the AO adduct is preferably 18 to 360 mgKOH/g.

From the viewpoints of mechanical strength and water resistance of the polyurethane resin, preferable examples of the active hydrogen-containing organic compounds for introducing T¹ into the compound (S) include hydroxy group-containing compounds and amino group-containing compounds. The active hydrogen-containing organic compound is more preferably a polyhydric alcohol having 2 to 20 carbon atoms or a polyether polyol obtainable by adding AO to a polyhydric alcohol having 2 to 20 carbon atoms, an aliphatic polyamine having 2 to 20 carbon atoms, or a polythiol compound. It is particularly preferably a polyhydric alcohol having 2 to 20 carbon atoms or a polyether polyol obtainable by adding AO to a polyhydric alcohol having 2 to 20 carbon atoms. It is most preferably a polyether polyol obtainable by adding AO to a polyhydric alcohol having 2 to 20 carbon atoms.

From the viewpoints of mechanical strength and water resistance of the polyurethane resin, the valence m of the active hydrogen-containing organic compound is usually 1 to 20, preferably 1 to 8, more preferably 1 to 4, and particularly preferably 2.

In the formula (7), g is an integer of 1 to 20 satisfying 1 ≤ g ≤ m. From the viewpoints of mechanical strength and water resistance of the polyurethane resin, g is preferably 1 to 8, more preferably 1 to 4, and particularly preferably 2.

In the formula (7), T² represents a residue of an active hydrogen-containing organic compound having a valence of 1 to 20 from which one active hydrogen atom is removed. Multiple T²s may be the same as or different from each other.

Examples of the active hydrogen-containing organic compound for constituting T² include the same as the active hydrogen-containing organic compounds for the aforementioned T¹. T² and T¹ may be the same as or different from each other. From the viewpoints of mechanical strength and water resistance of the polyurethane resin, T¹ and at least one T² are preferably different groups.

From the viewpoints of mechanical strength and water resistance of the polyurethane resin, the valence of T² is usually 1 to 20, preferably 1 to 8, more preferably 1 to 4, particularly preferably 1 to 2, and most preferably 2.

T¹ and T² can be introduced into the compound (S) by reacting the active hydrogen-containing organic compound with a polycarboxylic acid having 3 or more carboxylic acids for constituting Y to be mentioned later. In the case that T¹ and T² are each a diol having 2 to 4 carbon atoms or a polyether polyol having a repeating unit with 2 to 4 carbon atoms, an equivalent compound is obtainable by adding an AO having 2 to 4 carbon atoms to the carboxyl groups of the polycarboxylic acid.

In the formula (7), Y represents a residue of an aromatic polycarboxylic acid having 3 or more carboxyl groups from which all the carboxyl groups are removed. The aromatic ring of Y is constituted by carbon atoms, and each of the carbon atoms may optionally have a substituent which is not a carboxyl group and/or a halogen atom. Still, at least one carbon atom needs to have no substituent and have a hydrogen atom.

Examples of the substituent other than the carboxyl group include alkyl, vinyl, allyl, cycloalkyl, amino, hydroxy, hydroxyamino, nitro, thiol, aryl, and cyano groups.

Examples of the aromatic polycarboxylic acid having 3 or more carboxyl groups for constituting Y include the same as those exemplified as aromatic polycarboxylic acids having 3 or more carboxyl groups for constituting L in the formula (1). Preferable examples thereof are the same.

In the formula (7), e is an integer of 1 or greater, f is an integer of 0 or greater, and e and f satisfy 2 ≤ (e + f) ≤ (h - 2); h is the number of hydrogen atoms bonding to the carbon atoms constituting the aromatic ring assuming that all the substituents including the carboxyl groups of the aromatic polycarboxylic acid are replaced by hydrogen atoms, in other words, the number of moieties capable of being replaced on the aromatic ring. In the case that the aromatic ring is a benzene ring having 6 carbon atoms, h is 6 and (e + f) may be 2 to 4. In the case that the aromatic ring is a naphthalene ring having 10 carbon atoms, h is 8 and (e + f) may be 2 to 6. In the case that the aromatic ring is a monocyclic aromatic ring, (e + f) is preferably 2 or 3 from the viewpoints of mechanical strength and water resistance of the polyurethane resin. From the viewpoints of mechanical strength and water resistance of the polyurethane resin, f is preferably 1/2 or smaller of e, and particularly preferably 0.

The hydroxy value of the compound (S) in the present invention is preferably 0 or 70 to 500 mgKOH/g from the viewpoints of elongation at break and tensile strength at break of the polyurethane resin. With the compound (S) having a hydroxy group, the hydroxy value is more preferably 75 to 350 mgKOH/g. A compound (S) having a hydroxy group and having a hydroxy value of less than 70 mgKOH/g tends to cause a resulting polyurethane resin to have a poor tensile strength at break. A compound (S) having a hydroxy value of greater than 500 mgKOH/g tends to cause the polyurethane resin to have a poor elongation at break.

The phrase "the compound (S) has a hydroxy value of 0" herein means that all of T¹, T², and Y in the formula (7) have no hydroxy group.

The Y concentration in the compound (S) means the amount by millimole of residue Y per gram of the compound (S). From the viewpoints of elongation at break, tensile strength at break, and water resistance of the polyurethane resin, the Y concentration is preferably 0.5 to 8 mmol/g, more preferably 0.7 to 6 mmol/g, and particularly preferably 0.9 to 4 mmol/g.

From the viewpoints of mechanical strength and water resistance of the polyurethane resin, the carbonyl concentration in the compound (S) is preferably 3 to 24 mmol/g, more preferably 3.5 to 18 mmol/g, and particularly preferably 4 to 12 mmol/g. The carbonyl groups relating to the carbonyl concentration in the present invention means the carbonyl groups bonding to Y in the formula (7), in other words, the carboxyl groups in the carboxyl groups of the aromatic polycarboxylic acid having 3 or more carboxyl groups for introducing Y, and the carbonyl groups in functional groups derived therefrom, such as ester groups, thioester groups, and amide groups.

From the viewpoints of mechanical strength, solvent resistance, and water resistance of the polyurethane resin, the mole average number of functional groups in the compound (S) for the active hydrogen component (A) is preferably 1 to 8, more preferably 1 to 6, particularly preferably 1 to 4, and most preferably 4.

The mole average number of functional groups in the present invention is a value calculated as follows: multiplying the number of functional groups having an active hydrogen atom in each component in the composition by the amount by mole of each component; adding the products; and dividing the sum of the products by the sum of the amounts by mole of the components. The amount by mole of the component is a value calculated by dividing the weight of each component by the molecular weight of each component. The molecular weight for calculation is the formula weight for components having no molecular weight distribution, such as low molecular weight compounds, and it is Mn for components having a molecular weight distribution.

The compound (S1) having at least one active hydrogen atom is a compound represented by the formula (7) wherein at least one of T¹, T², and Y has an active hydrogen atom or f is 1 or greater. More specifically, the compound (S1) has at least one active hydrogen atom when it satisfies at least one of the following conditions: the valence m of T¹ and g satisfy m > g; Y is substituted with a substituent having active hydrogen, such as an amino group, a hydroxy group, a hydroxyamino group, and a thiol group; the active hydrogen-containing organic compound constituting T² has a valence of 2 or greater; and f is 1 or greater.

From the viewpoints of mechanical strength, solvent resistance, and water resistance, the amount of the compound (S1) to be introduced into the molecule of the polyurethane resin (P) is preferably 0.01 to 10% by weight, and more preferably 0.1 to 8% by weight, based on the total weight of the active hydrogen component (A) and the organic polyisocyanate component (B).

In the case of adding/mixing the compound (S) to/with the polyurethane resin (P), the amount of the compound (S) is preferably 0.01 to 10% by weight, and more preferably 0.1 to 5% by weight, based on the weight of the polyurethane resin (P).

The polyurethane resin (P) in the present invention may optionally be mixed with any additives such as antioxidants, coloring inhibitors, ultraviolet absorbents, hindered amine light stabilizers, plasticizers, and release agents. The amount of these additives is usually 10% by weight or less, preferably 3% by weight or less, and more preferably 1% by weight or less, based on the weight of the polyurethane resin (P).

With the polyurethane resin (P) in the present invention which has no crosslinking structure, is soluble in an organic solvent, and the Mn of which is measurable, the Mn of the resin (P) is preferably 2,000 to 1,000,000, more preferably 5,000 to 500,000, particularly preferably 7,500 to 200,000, and most preferably 10,000 to 100,000, from the viewpoints of mechanical strength, solvent resistance, and water resistance.

Similar to the case of the resin (V1), the polyurethane resin (P) is used in the form of an aqueous dispersion, a solution in an organic solvent, a medium-free solid resin, or the like. Preferable among these forms is an aqueous dispersion from the viewpoints of environmental load, safety, and handleability.

An aqueous dispersion (PE) of the polyurethane resin (P) can be produced by one of the following methods [1] and [2] :
[1] a method including: reacting a polyol (a1), a hydrophilic group-containing compound (a2), and optionally a chain extender (a3) and a reaction terminator (a4) as active hydrogen components (A), and an organic polyisocyanate component (B) in the presence or absence of an organic solvent (J) in one stage or multiple stages to form a polyurethane resin (P); optionally neutralizing or quaternarizing the hydrophilic group introduced by the compound (a2) to form a salt; and dispersing the product in an aqueous medium in the presence or absence of the organic solvent (J) and/or the aforementioned nonreactive surfactant (C2); and
[2] a method including: reacting a polyol (a1), a hydrophilic group-containing compound (a2), and optionally a chain extender (a3) and a reaction terminator (a4) as active hydrogen components (A), and an organic polyisocyanate component (B) in the presence or absence of an organic solvent (J) in one stage or multiple stages to form a urethane prepolymer; optionally neutralizing or quaternarizing the hydrophilic groups introduced by the compound (a2) of the prepolymer to form a salt; dispersing the product in an aqueous medium in the presence or absence of the organic solvent (J), a nonreactive surfactant (C2), the chain extender (a3), and/or the chain terminator (a4); and reacting (e.g. chain extension by water and/or the extender (a3), and optionally chain termination by the terminator (a4)) the components until the isocyanato groups are substantially exhausted.

The following will describe the method [1] of producing a polyurethane resin aqueous dispersion (PE).

The polyurethane resin in this method is obtainable by reacting a polyol (a1), a hydrophilic group-containing compound (a2), and optionally a chain extender (a3) and a reaction terminator (a4) as active hydrogen components (A), and an organic polyisocyanate component (B) in the presence or absence of an organic solvent (J). The reaction temperature is preferably 100 to 250°C, more preferably 150°C to 250°C, and particularly preferably 180°C to 220°C.

The urethanization may optionally be accelerated using a catalyst used in usual urethanization. Examples of the catalyst include amine catalysts, such as triethylamine, N-ethylmorpholine, triethylenediamine, and cycloamidines (e.g. 1,8-diaza-bicyclo[5.4.0]-7-undecene ("DBU", San-Apro Ltd.)) disclosed in US 4,524,104; tin catalysts, such as dibutyltin dilaurylate, dioctyltin dilaurylate, and tin octylate; titanium catalysts, such as tetrabutyl titanate; and bismuth catalysts, such as bismuth trioctylate.

Any reaction vessel equipped with a stirring and heating device may be used for urethanization. From the viewpoints of stirring intensity, sealability, and heating capacity, a single- or twin-screw kneader is preferably used. Examples of the single- or twin-screw kneader include a continuous kneader (Kurimoto, Ltd.) and PCM30 (Ikegai Corp.).

Optionally after the hydrophilic groups introduced by the compound (a2) are neutralized or quaternarized to be a salt, or in the presence of the aforementioned nonreactive surfactant (C2), the polyurethane resin (P) or a solution thereof in an organic solvent is dispersed in an aqueous medium, thereby providing the polyurethane resin aqueous dispersion (PE) in the present invention.

The organic solvent (J) used as an aqueous medium is preferably a water-soluble organic solvent from the viewpoint of dispersibility. The organic solvent (J) may optionally be distilled off after the polyurethane resin aqueous dispersion (PE) is produced.

With the organic solvent (J), the ratio by weight between water and the organic solvent (J) (water/solvent (J)) is preferably 99/1 to 50/50 from the viewpoint of dispersibility of the polyurethane resin (P).

The polyurethane resin (P) or a solution thereof in an organic solvent may be dispersed in an aqueous medium using a dispersion mixer, such as a rotary dispersion mixer, a media-type dispersion mixer, and a high-pressure dispersion mixer. From the viewpoints of temperature control, supply of solid particles, and dispersibility, a rotary dispersion mixer is preferred.

Examples of the rotary dispersion mixer include T.K. HOMO MIXER (PRIMIX Corp.), CLEARMIX (M Technique Co., Ltd.), FILMIX (PRIMIX Corp.), ULTRA-TURRAX (IKA), Ebara milder (EBARA CORP.), CAVITRON (EUROTEC. CO., LTD.), and BIO MIXER (NISSEI Corp.).

Two or more rotary dispersion mixers selected therefrom may be used in combination.

From the viewpoint of dispersion stability of the polyurethane resin aqueous dispersion (PE), the number of rotation of the rotary dispersion mixer is usually 100 to 30,000 rpm, preferably 500 to 30,000 rpm, more preferably 1,000 to 30,000 rpm, and particularly preferably 2,000 to 30,000 rpm.

From the viewpoint of preventing decomposition and degradation of the polyurethane resin (P), the temperature of the dispersion in dispersion mixing using a rotary dispersion mixer is lower than the melting temperature of the polyurethane resin (P), preferably 5°C or more lower than the melting temperature but not lower than room temperature, more preferably 10°C to 120°C lower than the melting temperature but not lower than room temperature.

The ratio by weight between the polyurethane resin (P) and the aqueous medium supplied to the rotary dispersion mixer may appropriately be adjusted depending on the target resin content in a resulting aqueous dispersion, and it is preferably 10/2 to 10/100, and more preferably 10/5 to 10/50 (polyurethane resin/aqueous medium).

The polyurethane resin (P) and the aqueous medium preferably remain in the rotary dispersion mixer 0.1 to 60 minutes, and more preferably 10 to 30 minutes.

The following will describe the method [2] of producing a polyurethane resin aqueous dispersion (PE).

The urethane prepolymer in this method can be produced by urethanizing a polyol (a1), a hydrophilic group-containing compound (a2), and optionally a chain extender (a3) and a reaction terminator (a4) as active hydrogen components (A), and an organic polyisocyanate component (B) in the presence or absence of an organic solvent (J) such that the equivalent ratio of the isocyanato group to the active hydrogen-containing group (excluding carboxyl groups, sulfo groups, and sulfamic acid groups) is preferably 1.01 to 3, and more preferably 1.1 to 2.

The urethane prepolymerization reaction is preferably performed at a reaction temperature of 20°C to 150°C, and more preferably 60°C to 110°C. The reaction time is preferably 2 to 15 hours. The urethane prepolymer preferably has 0.1 to 5% by weight of isocyanato groups.

The urethane prepolymerization reaction may optionally be accelerated using a catalyst used in the aforementioned urethanization.

After the hydrophilic groups introduced into the prepolymer by the compound (a2) is optionally neutralized or quaternarized to be a salt, the resulting urethane prepolymer or a solution thereof in an organic solvent is dispersed in an aqueous medium in the presence or absence of the organic solvent (J), the nonreactive surfactant (C2), the chain extender (a3), and/or the chain terminator (a4) and reacted (chain extension by water and optionally chain extension by the extender (a3) and chain termination by the terminator (a4)) until the isocyanato groups are substantially exhausted, thereby providing the polyurethane resin aqueous dispersion (PE) in the present invention.

The urethane prepolymer or a solution thereof in an organic solvent may be emulsion-dispersed in an aqueous medium by any type of device. Examples thereof include emulsifying devices of (1) anchor type, (2) rotor and stator type (e.g. Ebara milder (EBARA CORP.)), (3) line mill type (e.g. Line Flow Mixer), (4) static pipe type (e.g. static mixers), (5) vibration type (e.g. "VIBRO MIXER" (REICA Co., Ltd.)), (6) ultrasonic impact type (e.g. ultrasonic homogenizers), (7) high-pressure impact type (e.g. Gaulin Homogenizer (Gaulin)), (8) membrane emulsification type (e.g. membrane emulsification module), and (9) centrifugal thin-film contact type (e.g. "FILMIX" (PRIMIX Corp.)). Preferable among these are devices of type (2).

The nonreactive surfactant (C2) may be added before urethanization, during urethanization, or after urethanization of the polyurethane resin (P), or before dispersion thereof in an aqueous medium, during dispersion thereof in an aqueous medium, or after dispersion thereof in an aqueous medium. From the viewpoints of dispersibility of the resin (P) and stability of the aqueous medium dispersion, the surfactant (C) is preferably added before dispersion of the resin (P) in an aqueous medium or during dispersion thereof in an aqueous medium.

It is preferable to use no surfactant (C2) from the viewpoint of water resistance of the polyurethane resin (P). Still, if a surfactant (C2) is used, the amount thereof is preferably 0.01 to 20% by weight, more preferably 0.1 to 10% by weight, and particularly preferably 1 to 5% by weight, based on the weight of the polyurethane resin (P).

From the viewpoint of dispersion stability of the polyurethane resin aqueous dispersion (PE), the volume average particle size of the polyurethane resin (P) in the present invention is preferably 0.01 to 1 µm, more preferably 0.02 to 0.7 µm, and particularly preferably 0.03 to 0.5 µm.

The polyurethane resin aqueous dispersion (PE) in the present invention may contain the aforementioned organic solvent (J). From the viewpoints of odor, temporal stability, environmental load, safety, production cost, and the like, the amount of the organic solvent is preferably 10,000 ppm or less, more preferably 8,000 ppm or less, and particularly preferably 5,000 ppm or less, based on the weight of the aqueous dispersion.

A solution of the polyurethane resin (P) in an organic solvent may be produced by reacting the active hydrogen component (A) and the organic polyisocyanate component (B) in the organic solvent (J), for example.

The reaction may be performed in any reaction form usually used for production of a polyurethane resin. Examples thereof include: a method of collectively put the components (A), (B), and (J) into a reaction vessel and reacting them; a method of reacting the components (A) and (B) separately in the presence of the component (J) in a multi-stage manner; and a method of passing the preliminarily mixed components (A), (B), and (J) through a heated multi-screw extruder and reacting them.

The reaction temperature is usually 30°C to 180°C, and preferably 60°C to 120°C. The reaction may be accelerated using the urethanizing catalyst.

Examples of methods of producing the polyurethane resin (P) in the form of a medium-free solid resin include: a method of reacting the components (A) and (B) without an organic solvent (J) in the method of producing a solution of the resin (P) in an organic solvent; and a method of removing an aqueous medium or an organic solvent from the aqueous dispersion (PE) of the resin (P), the dispersion of the resin (P) obtained by suspension polymerization, or the solution of the resin (P) in an organic solvent.

As mentioned above, the affinity between the vinyl resin (V1) and the polyurethane resin (P) is excellent in the case of combining the vinyl resin (V1) of the present invention and the polyurethane resin (P), and in the case of further combining the vinyl resin (V2) other than the resin (V1). This results in excellent mechanical strength, solvent resistance, and water resistance of a film formed from an aqueous dispersion of the resins. The mechanical strength, solvent resistance, and water resistance of the film formed from an aqueous dispersion thereof can be further improved by introducing reactive groups into the vinyl resin (V1), the polyurethane resin (P), and the vinyl resin (V2) other than the resin (V1) to form a chemical bond between these resins.

Examples of methods of forming a chemical bond include a method of directly reacting the introduced reactive groups with the resins and a method of using a crosslinker (D) reactive with the reactive groups introduced into the resins.

Examples of the reactive groups to be introduced into the vinyl resin (V1) and the vinyl resin (V2) other than the resin (V1) include silanol, alkoxysilyl, epoxy, carboxyl, hydroxy, primary or secondary amino, isocyanato, blocked isocyanato, vinyl, oxazoline, carbodiimide, sulfo, keto, and aldehyde groups. These reactive groups may be introduced alone or in combination.

Examples of the reactive groups to be introduced into the polyurethane resin (P) include silanol, alkoxysilyl, epoxy, carboxyl, hydroxy, primary or secondary amino, isocyanato, blocked isocyanato, vinyl, sulfo, keto, and aldehyde groups. These reactive groups may be introduced alone or in combination.

The following Table 1 shows examples of combination of the reactive groups to be introduced into the resins and the groups reactive with the introduced groups in the method of directly reacting the reactive groups introduced into the vinyl resin (V1), vinyl resin (V2) other than the resin (V1), and polyurethane resin (P). In the matrix of Table 1, the combinations marked as "○" are preferable ones in the direct reaction method. The "vinyl group" in Table 1 includes a (meth)acryloyl group. Combination of a carboxyl group and a vinyl group in Table 1 forms a chemical bond by the Michael addition. Combination of vinyl groups forms a chemical bond by reaction in the presence of an additive such as a radical initiator. A sulfo group, a keto group, and an aldehyde group, not shown in Table 1, are used as reactive groups in the case of combining a crosslinker (D).

In the case that the vinyl resins (V1) and (V2) and the polyurethane resin (P) each have multiple reactive groups, the reactive groups may be the same as or different from each other.

**[Table 1]**

| | | Reactive group introduced into polyurethane resin | | | | | | | |
|---|---|---|---|---|---|---|---|---|---|
| | | Silanol and/or alkoxysilyl | Epoxy | Carboxyl | Hydroxy | Primary or secondary amino | Isocyanate | Blocked isocyanate | Vinyl |
| Reactive group introduced into vinyl resin | Silanol and/or alkoxysilyl | ○ | - | - | - | - | - | - | - |
| | Epoxy | - | - | ○ | - | ○ | - | - | - |
| | Carboxyl | - | ○ | - | - | - | - | - | ○ |
| | Hydroxy | - | - | - | - | - | ○ | ○ | - |
| | Primary or secondary amino | - | ○ | - | - | - | ○ | ○ | - |
| | Isocyanato | - | - | - | ○ | ○ | - | - | - |
| | Blocked isooyanato | - | - | - | ○ | ○ | - | - | - |
| | Vinyl | - | - | ○ | - | - | - | - | ○ |
| | Oxazoline | - | - | ○ | - | - | - | - | - |
| | Carbodiimide | - | - | ○ | - | - | - | - | - |

Any of silanol, alkoxysilyl, epoxy, carboxyl, hydroxy, primary or secondary amino, isocyanato, blocked isocyanato, oxazoline, carbodiimide, keto, and aldehyde groups may be introduced into the vinyl resin (V1) and the vinyl resin (V2) other than the resin (V1) by, for example, a method of using a monomer having any of these reactive groups as part of the monomer components (e.g. silanol or alkoxysilyl group-containing vinyl monomer (m8), epoxy group-containing vinyl monomer (m7), carboxyl group-containing vinyl monomer (m2), hydroxy group-containing vinyl monomer (m1), primary or secondary amino group-containing vinyl monomer (m6), isocyanato group-containing vinyl monomer (m9), blocked isocyanato group-containing vinyl monomer (m12), oxazoline group-containing vinyl monomer (m10), carbodiimide group-containing vinyl monomer (m11), sulfo group-containing vinyl monomer (m3), keto group-containing vinyl monomer (m13), and aldehyde group-containing vinyl monomer (m14)). In order to introduce a silanol group, the alkoxysilyl group-containing vinyl monomer may be polymerized and then the alkoxysilyl group may be hydrolyzed into a silanol group.

A vinyl group may be introduced into the vinyl resin (V1) and the vinyl resin (V2) other than the resin (V1) by, for example, a method including: polymerizing monomer components which at least partially include a monomer having a reactive group other than the vinyl functional group (monomers (m1) to (m3) and (m6) to (m12)) among the vinyl monomers, and reacting a monomer having a functional group which is reactive with the functional group of the above reactive functional group-containing monomer (for example, the isocyanato group-containing vinyl monomer (m9) is (co)polymerized, and then the hydroxy group-containing vinyl monomer (m1) is reacted thereto).

A silanol group or an alkoxysilyl group may be introduced into the polyurethane resin (P) by, for example, a method of using an aminoalkylalkoxysilane having 6 to 20 carbon atoms as part of the active hydrogen component (A) for forming the resin (P); a method of using an isocyanatoalkylalkoxysilane having 5 to 15 carbon atoms together with the organic polyisocyanate component (B) for forming the resin (P); a method in which a carboxyl group is introduced into the resin (P) using a compound having 2 to 10 carbon atoms and a carboxyl group as an anionic group, and then this carboxyl group is reacted with a glycidoxyalkylalkoxysilane having 6 to 15 carbon atoms; or a method of hydrolyzing the alkoxysilyl group, which is introduced by any of the above method, into a silanol group.

Examples of the aminoalkylalkoxysilane having 6 to 20 carbon atoms include 3-aminopropyltrimethoxysilane, 3-aminopropyltriethoxysilane, N-2-(aminoethyl)-3-aminopropylmethyldimethoxysilane, N-2-(aminoethyl)-3-aminopropyltrimethoxysilane, N-2-(aminoethyl)-3-aminopropyltriethoxysilane, and 3-triethoxyltrimethoxysilane.

Examples of the isocyanatoalkylalkoxysilane having 5 to 15 carbon atoms include 3-isocyanatopropyltriethoxysilane.

Examples of the glycidoxyalkylalkoxysilane having 6 to 15 carbon atoms include 3-glycidoxypropylmethyldimethoxysilane, 3-glycidoxypropyltrimethoxysilane, 3-glycidoxypropylmethyldiethoxysilane, 2-(3,4-epoxycyclohexyl)ethyltrimethoxysilane, and 3-glycidoxypropyltriethoxysilane.

An epoxy group may be introduced into the polyurethane resin (P) by, for example, a method of using a compound having at least one glycidyl group and at least one hydroxy or amino group in the molecule as part of the active hydrogen component (A) for forming the resin (P); a method of using a compound having at least one glycidyl group and at least one isocyanato or blocked isocyanato group in the molecule together with the organic polyisocyanate component (B) for forming the resin (P); or a method in which a carboxyl group is introduced into the resin (P) using a compound having 2 to 10 carbon atoms and a carboxyl group as an anionic group, and then this carboxyl group is reacted with a polyfunctional epoxy compound.

Examples of the compound having at least one glycidyl group and at least one hydroxy group in the molecule include copolymers of a hydroxy group-containing vinyl monomer (m1) and an epoxy group-containing vinyl monomer (m7), and glycidol.

Examples of the compound having at least one glycidyl group and at least one amino group in the molecule include glycidylamines such as tert-butylglycidylamine and N,N-bis[2-(3-heptenoylamino)-1-methylethyl]glycidylamine, and copolymers of an epoxy group-containing vinyl monomer (m7) and an amino group-containing vinyl monomer (m6).

Examples of the compound having at least one glycidyl group and at least one isocyanato group in the molecule include copolymers of an epoxy group-containing vinyl monomer (m7) and an isocyanato group-containing vinyl monomer (m9).

Examples of the compound having at least one glycidyl group and at least one blocked isocyanato group in the molecule include copolymers of an epoxy group-containing vinyl monomer (m7) and a blocked isocyanato group-containing vinyl monomer (m12).

The polyfunctional epoxy compound may be any compound having 2 or more carboxyl groups in the molecule. Examples thereof include resorcinol diglycidyl ether, neopentyl glycol diglycidyl ether, 1,6-hexanediol diglycidyl ether, glycerol polyglycidyl ether, hydrogenated bisphenol A diglycidyl ether, trimethylolpropane polyglycidyl ether, pentaerythritol polyglycidyl ether, and poly(oxypropylene)glycol diglycidyl ether.

A carboxyl group may be introduced into the polyurethane resin (P) by, for example, a method of using a compound having 2 to 10 carbon atoms and a carboxyl group as an anionic group as part of the active hydrogen component (A) for forming the resin (P).

A hydroxy group may be introduced into the polyurethane resin (P) by, for example, a method of reacting an active hydrogen component (A) containing a polyol (a1), a compound (a2) having a hydrophilic group and an active hydrogen, and/or a chain extender (a3) having only a hydroxy group as an active hydrogen-containing group, and an organic polyisocyanate component (B) such that the hydroxy group equivalent in the active hydrogen component (A) is excessive to the isocyanate equivalent in the organic polyisocyanate component (B).

A primary or secondary amino group may be introduced into the polyurethane resin (P) by, for example, a method in which an isocyanato-terminated urethane prepolymer is prepared, and this urethane prepolymer is reacted with a diamine having 2 to 10 carbon atoms and/or polyalkylene (n = 2 to 6) polyamine (n = 3 to 7) whose alkylenes each have 2 to 6 carbon atoms as chain extenders (a3) in equivalents excessive to the isocyanate equivalent of the prepolymer.

An isocyanato group may be introduced into the polyurethane resin (P) by, for example, a method of reacting the active hydrogen component (A) with the organic polyisocyanate component (B) such that the isocyanate equivalent of the component (B) is excessive to the hydroxy group equivalent of the component (A).

A blocked isocyanato group may be introduced into the polyurethane resin (P) by, for example, a method of blocking the isocyanato group at an end of the urethane prepolymer using a blocking agent exemplified in the description about the blocked isocyanato group-containing vinyl monomer (m12).

A vinyl group may be introduced into the polyurethane resin (P) by, for example, a method of using the hydroxy group-containing vinyl monomer (m1) as part of the active hydrogen component (A); or a method in which a carboxyl group is introduced into the resin (P) using a compound having 2 to 10 carbon atoms and a carboxyl group as an anionic group, and then this carboxyl group is reacted with an epoxy group-containing vinyl monomer (m7).

A sulfo group may be introduced into the polyurethane resin (P) by, for example, a method of using a compound having 2 to 16 carbon atoms and a sulfo group as an anionic group as a compound (a21) having an anionic group and active hydrogen as part of the active hydrogen component (A) for forming the resin (P).

A keto group may be introduced into the polyurethane resin (P) by, for example, a method of using a compound having a hydroxy or amino group and a keto group (e.g. 3-hydroxy-2-butanone, 5-hydroxy-2-pentanone, 6-hydroxy-2-hexanone, hydroxyacetone, hydroxyacetophenone, aminoacetophenone, aminobenzophenone, 1,3-dihydroxy-2-propanone, dihydroxyacetophenone, and dihydroxybenzophenone) as part of the active hydrogen component (A) for forming the resin (P).

An aldehyde group may be introduced into the polyurethane resin (P) by, for example, a method of using a compound having an aldehyde group and a hydroxy group (e.g. 2-hydroxyethanal, 2-hydroxypropanal, 3-hydroxybutanal, 2,2-dimethyl-3-hydroxypropanal, dihydroxyacetaldehyde, 2,3-dihydroxypropanal, 3-hydroxy-2,2-bis(hydroxymethyl)propanal, and 2-hydroxypropanedial) as part of the active hydrogen component (A) for forming the resin (P).

From the viewpoint of mechanical strength of a film, the amount of the reactive functional groups introduced into the vinyl resin (V1) and the polyurethane resin (P) is 0.01 to 10 mmol/g, preferably 0.02 to 8 mmol/g, and more preferably 0.05 to 6 mmol/g.

With a silanol or alkoxysilyl group-containing vinyl monomer (m8) as a monomer component of the vinyl resin (V1), the silanol or alkoxysilyl group introduced into the resin (V1) can be condensed to form internal crosslinking, thereby improving the water resistance, the solvent resistance, and the mechanical strength of the resin (V1).

Examples of the crosslinker (D) to be used in forming a chemical bond among the vinyl resin (V1), the vinyl resin (V2) other than the resin (V1), and the polyurethane resin (P) by introducing reactive groups thereinto include those having, in the molecule, 2 or more groups reactive with the reactive groups introduced into the resins and those capable of forming a metal salt crosslinking structure. Specific examples thereof include isocyanate compounds (D1), blocked isocyanate compounds (D2), melamine compounds (D3), oxazoline compounds (D4), carbodiimide compounds (D5), aziridine compounds (D6), epoxy compounds (D7), hydrazine compounds (D8), amine compounds (D9), and compounds (D10) capable of forming a metal salt crosslinking structure with a carboxyl group and a sulfo group. These crosslinkers (D) may be used alone or in combination.

With the vinyl resins (V1) and (V2) and the polyurethane resin (P) having a hydroxy group and/or a primary or secondary amino group introduced thereinto, an isocyanate compound (D1) and/or a blocked isocyanate compound (D2) can be used as a crosslinker.

The isocyanate compound (D1) may be any compound having 2 or more isocyanato groups in the molecule. Examples thereof include those exemplified as the organic polyisocyanate component (B).

The blocked isocyanate compound (D2) may be any compound having 2 or more blocked isocyanato groups in the molecule. Examples thereof include those obtainable by blocking any isocyanate compound (D1) with any blocking agent exemplified in the description about the blocked isocyanato group-containing vinyl monomer (m12). Examples of commercially available products thereof include DURANATE series (Asahi Kasei Chemicals Corp., e.g. DURANATE 22A-75P, 24A-100, 21S-75E, TPA-100, TKA-100, MFA-75B, MHG-80B, TLA-100, TSA-100, TSS-100, TSE-100, P301-75E, E402-80B, E405-70B, AE700-100, D101, D201, MF-K60X, and A201H) and TAKENATE series (Mitsui Chemicals, Inc., e.g. TAKENATE D-103N, D-160N, D-140N, D-110N, D-181N, D-120N, D-165N90CX, D-204, D-170N, PW series, and B series).

From the viewpoints of both the reactivity and the storage stability, preferable examples of the blocking agents to be used as the compound (D2) are methyl ethyl ketoxime among the oximes, secondary amines having secondary carbon (especially diisopropylamine) among the aliphatic secondary amines having 2 to 15 carbon atoms, diethyl malonate among the active methylene compounds, and 3,5-dimethylpyrazole among the pyrazole compounds.

With the vinyl resins (V1) and (V2) and the polyurethane resin (P) having a hydroxy group and/or a carboxyl group introduced thereinto, a melamine compound (D3) and/or an oxazoline compound (D4) can be used as a crosslinker.

The melamine compound (D3) may be any of methylolated melamine compounds and methoxymethylolated melamine compounds having 2 or more methylol or methoxymethylol groups in the molecule. Examples thereof include U-VAN series (Mitsui Chemicals, Inc., e.g. U-VAN 120, 20HS, 2021, 2028, 228, 2860, and 22R), CYMEL series (Nihon Cytec Industries Inc., e.g. CYMEL 202, 232, 235, 238, 254, 266, 267, 272, 285, 301, 303, 325, 327, 350, 370, 701, 703, 736, 738, 771, 114, 1156, and 1158), and SUMIMAL series (Sumitomo Chemical Co., Ltd., e.g. SUMIMAL M-30W, M-50W, M-55, M-66B, and 50B).

The oxazoline compound (D4) may be any compound having 2 or more oxazoline groups (oxazoline skeletons) in the molecule. Examples thereof include compounds having 2 or more oxazoline groups, such as 2,2'-isopropylidenebis(4-phenyl-2-oxazoline); (co)polymers of polymerizable oxazoline compounds, such as 2-isopropenyl-2-oxazoline, 2-vinyl-2-oxazoline, and 2-vinyl-4-methyl-2-oxazoline; and copolymers of any of the above polymerizable oxazoline compounds and a copolymerizable monomer nonreactive with an oxazoline group (e.g. (meth)acrylic acid esters such as methyl (meth)acrylate, ethyl (meth)acrylate, hydroxyethyl (meth)acrylate, and polyethylene glycol (meth)acrylate, amide (meth)acrylate vinyl acetate, styrene, and α-methylstyrene sodium styrene sulfonate).

With the vinyl resins (V1) and (V2) and the polyurethane resin (P) having a carboxyl group introduced thereinto, a carbodiimide compound (D5) can be used as a crosslinker.

The carbodiimide compound (D5) may be any compound having 2 or more carbodiimide groups in the molecule. Examples thereof include aliphatic polycarbodiimides (e.g. poly(hexamethylene carbodiimide)), alicyclic polycarbodiimides (e.g. poly(4,4'-dicyclohexylmethane carbodiimide)), and aromatic polycarbodiimides (e.g. poly(p-phenylene carbodiimide), poly(4,4'-diphenylmethane carbodiimide), and poly(diisopropylphenyl carbodiimide)) obtainable by polymerizing any of aromatic polyisocyanates (B1) having 8 to 26 carbon atoms, aliphatic polyisocyanates (B2) having 4 to 22 carbon atoms, alicyclic polyisocyanates (B3) having 8 to 18 carbon atoms, or aromatic-aliphatic polyisocyanates (B4) having 10 to 18 carbon atoms.

With the vinyl resins (V1) and (V2) and the polyurethane resin (P) having at least one reactive group selected from the group consisting of a hydroxy group, primary or secondary amino groups, and a carboxyl group introduced thereinto, an aziridine compound (D6) and/or an epoxy compound (D7) can be used as a crosslinker.

The aziridine compound (D6) may be any compound having 2 or more aziridinyl groups in the molecule. Examples thereof include tetramethylolmethane tris(β-aziridinyl propionate) and trimethylolpropane tris(β-aziridinyl propionate).

The epoxy compound (D7) may be any compound having 2 or more epoxy groups in the molecule. Examples thereof include phenyl glycidyl ether, resorcinol diglycidyl ether, neopentyl glycol diglycidyl ether, 1,6-hexanediol diglycidyl ether, glycerol polyglycidyl ether, hydrogenated bisphenol A diglycidyl ether, trimethylolpropane polyglycidyl ether, pentaerythritol polyglycidyl ether, and polypropylene glycol diglycidyl ether.

With the vinyl resins (V1) and (V2) and the polyurethane resin (P) having at least one reactive group selected from the group consisting of an isocyanato group, a blocked isocyanato group, an epoxy group, a carboxyl group, a keto group, and an aldehyde group introduced thereinto, a hydrazine compound (D8) can be used as a crosslinker.

Examples of the hydrazine compound (D8) include hydrazine and compounds having 2 or more hydrazine groups (hydrazine skeletons) in the molecule, such as dicarboxylic acid dihydrazides having 2 to 10 carbon atoms (e.g. oxalyl dihydrazide, malonic dihydrazide, succinic dihydrazide, glutaric dihydrazide, adipic dihydrazide, sebacic dihydrazide, maleic dihydrazide, fumaric dihydrazide, and itaconic dihydrazide), and alkylene dihydrazines having 2 to 10 carbon atoms (e.g. ethylene dihydrazine, 1,3-propylene dihydrazine, 1,4-butylene dihydrazine, and 1,6-hexylene dihydrazine)).

With the vinyl resins (V1) and (V2) and the polyurethane resin (P) having at least one reactive group selected from the group consisting of an isocyanato group, a blocked isocyanato group, a carboxyl group, and an epoxy group introduced thereinto, an amine compound (D9) can be used as a crosslinker.

The amine compound (D9) may be any compound having 2 or more primary amino groups or secondary amino groups in the molecule. Examples thereof include diamines having 2 to 10 carbon atoms and polyalkylene (n = 2 to 6) polyamines (n = 3 to 7) whose alkylenes each have 2 to 6 carbon atoms exemplified as the chain extender (a3).

With the vinyl resins (V1) and (V2) and the polyurethane resin (P) having a carboxyl group and/or a sulfo group introduced thereinto, a compound (D10) capable of forming a metal salt crosslinking structure with these groups can be used as a crosslinker.

Examples of the compound (D10) capable of forming a metal salt crosslinking structure with a carboxyl group and a sulfo group include salts and hydroxides of metals (e.g. alkaline earth metals such as magnesium, calcium, and barium; metals in groups 13 and 14 such as aluminum and tin; and transition metals such as iron, cobalt, nickel, copper, and zinc). Any metal salts may be used, and examples thereof include carbonates, sulfates, acetates, borates, phosphates, and nitrates. Preferable are salts and hydroxides of at least one polyvalent metal selected from the group consisting of calcium, magnesium, zinc, barium, aluminum, and iron.

In the case of using a crosslinker (D), the reactive groups in the vinyl resins (V1) and (V2) and the polyurethane resin (P) may be the same as or different from each other. With the resins (V1), (V2), and (P) each having multiple reactive groups, these reactive groups may be the same as or different from each other.

The amount of the crosslinker (D) is preferably such that the amount by mole of the reactive groups capable of forming a chemical bond of the crosslinker (D) is 0.1 to 2.0 times, and more preferably 0.3 to 1.5 times, as large as the amount by mole of the reactive groups capable of forming a chemical bond of the vinyl resins (V1) and (V2) and the polyurethane resin (P).

The conditions such as the reaction temperature and the reaction time for forming a chemical bond in the method of directly reacting the reactive groups in the vinyl resins (V1) and (V2) and the polyurethane resin (P) or in the method using a crosslinker (D) depend on the types of reactive groups. Still, usual conditions such as temperature and time for reactions of these reactive groups can be applied.

Introduction of a urethane group and/or a urea group into the vinyl resin (V1) and/or the vinyl resin (V2), acrylic modification of the polyurethane resin (P), or combination thereof further enhances the affinity between the vinyl resin (V1) and/or the vinyl resin (V2) and the polyurethane resin (P), further enhancing the properties such as water resistance, solvent resistance, and mechanical strength of a film.

A urethane group and/or a urea group may be introduced into the vinyl resins (V1) and (V2) by, for example, a method of using a vinyl monomer (m15) having a urethane group or a urea group as part of monomer components for forming the vinyl resins (V1) and (V2).

The polyurethane resin (P) may be acrylic modified by, for example, a method of using an acrylic polyol as part of the active hydrogen component (A) for forming the resin (P).

The resin composition containing the vinyl resin (V1), the polyurethane resin (P), and optionally the vinyl resin (V2) other than the resin (V1) of the present invention may be used in the form of an aqueous dispersion, a solution in an organic solvent, or a medium-free solid resin. Preferable is an aqueous dispersion from the viewpoints of environmental load, safety, and handleability. The following will describe the production methods regarding the respective forms.

An aqueous dispersion containing the vinyl resin (V1) and the polyurethane resin (P) is obtainable by any of the following methods (1) to (3), for example.
(1) A method including preparing an aqueous dispersion (V1E) of the vinyl resin (V1) and an aqueous dispersion (PE) of the polyurethane resin (P) by the aforementioned methods and then mixing the aqueous dispersions
(2) A method including preparing an aqueous dispersion (V1E) of the vinyl resin (V1) by the aforementioned method, and then dispersing this aqueous dispersion in the polyurethane resin (P) by the aforementioned method; in other words, a method in which an aqueous dispersion (V1E) of the vinyl resin (V1) is used instead of the aqueous medium in the aforementioned method of producing an aqueous dispersion (PE) of the polyurethane resin (P)
(3) A method including preparing an aqueous dispersion (PE) of the polyurethane resin (P) by the aforementioned method, and then emulsion polymerizing structural monomers for the resin (V1) in this aqueous dispersion; in other words, a method in which an aqueous dispersion (PE) of the polyurethane resin (P) is used instead of the aqueous medium in the aforementioned method of producing a vinyl resin aqueous dispersion (V1E)

In the case of combining the vinyl resin (V2) other than the resin (V1), an aqueous dispersion containing the resin (V2) may be mixed with the aqueous dispersion containing the resins (V1) and (P) obtained by one of the methods (1) to (3); an aqueous dispersion of the resin (V1) in the method (2) may be replaced by an aqueous dispersion containing the resins (V1) and (V2); or an aqueous dispersion of the polyurethane resin (P) in the method (3) may be replaced by an aqueous dispersion containing the resins (P) and (V1).

The aforementioned crosslinker (D) may be added at any stage in the methods (1) to (3).

In the cases of mixing aqueous dispersions, including the case of combining the resin (V2), the aqueous dispersions may be put into a vessel at any order. The aqueous dispersions may be mixed stepwise; for example, 2 aqueous dispersions are first mixed and then the other aqueous dispersion is mixed therewith. Alternatively, all the dispersions may be mixed at once.

A solution containing the vinyl resin (V1) and the polyurethane resin (P) in an organic solvent is obtainable by one of the following methods (1) to (4).
(1) A method including preparing a solution of the vinyl resin (V1) in an organic solvent and a solution of the polyurethane resin (P) in an organic solvent by the aforementioned methods, and then mixing the solutions
(2) A method including preparing a solution of the vinyl resin (V1) in an organic solvent by the aforementioned method, and producing the polyurethane resin (P) in this solution
(3) A method including a solution of the polyurethane resin (P) in an organic solvent by the aforementioned method, and polymerizing structural monomers for the resin (V1) in this solution
(4) A method of dissolving a solid resin (V1) or (P) in a solution of the vinyl resin (V1) or the polyurethane resin (P) in an organic solvent

In the case of combining the vinyl resin (V2) other than the resin (V1), a solid resin (V2) or a solution containing the resin (V2) in an organic solvent may be mixed with the solution containing the resins (V1) and (P) in an organic solvent obtained by any of the methods (1) to (4); or the aqueous dispersion of the resin (V1) in the method (2) may be replaced by a mixture of a solution of the resin (V1) in an organic solvent and a solution containing the resin (V2) in an organic solvent. The aforementioned crosslinker (D) may be mixed at any stage of the methods (1) to (4).

In the cases of mixing organic solvent solutions, including the case of combining the resin (V2), the organic solvent solutions may be put into a vessel at any order. The solutions may be mixed stepwise; for example, 2 organic solvent solutions are first mixed and then the other solution is mixed therewith. Alternatively, all the solutions may be mixed at once.

A solid resin composition containing the vinyl resin (V1) and the polyurethane resin (P) is obtainable by any of the following methods (1) to (3).
(1) A method of removing the medium (an aqueous medium or an organic solvent) from the aqueous dispersion of the resins (V1), (P), and optionally (V2) or the solution thereof in an organic solvent produced by any of the aforementioned methods
(2) A method of melt-mixing the solid resins (V1), (P), and optionally (V2)
(3) A method including forming the solid resins (V1), (P), and optionally (V2) into particles, and then mixing the particles

From the viewpoints of impact resistance of a film and strength of a film, the ratio by weight between the vinyl resin (V1) and the polyurethane resin (P) ((V1):(P)) is 1:99 to 99:1, more preferably 10:90 to 90:10, particularly preferably 20:80 to 80:20, and most preferably 25:75 to 75:25.

In the optional case of combining the vinyl resin (V2) other than the resin (V1), the ratio between the total weight of the vinyl resin (V1) and the polyurethane resin (P) and the weight of the resin (V2) ({(V1) + (P)}:(V2)) is preferably 1:99 to 99:1, and more preferably 5:95 to 95:5, from the viewpoints of impact resistance of a film and strength of a film.

Combination use of a compound (F) having 2 or more ethylenic unsaturated bond-containing groups in the molecule with the resin composition containing the vinyl resin (V1), the polyurethane resin (P), and optionally the vinyl resin (V2) improves the weather resistance of the resin composition. The compound (F) captures radicals generated from a film containing the resin composition when the film is deteriorated by light (ultraviolet rays) or heat, thereby restraining decomposition of the film, and leads to crosslinking, thereby restraining reduction in the molecular weight. This restrains reduction in the resin strength and surface smoothness.

Examples of the compound (F) having 2 or more ethylenic unsaturated bond-containing groups in the molecule in the present invention include esters of (meth)acrylic acid and a polyhydric alcohol, such as polyhydric alcohols having 2 to 20 carbon atoms and 2 to 10 or more hydroxy groups (the same shall apply to the following) (e.g. ethylene glycol di(meth)acrylate, trimethylolpropane tri(meth)acrylate, pentaerythritol tetra(meth)acrylate, dipentaerythritol penta(meth)acrylate, and dipentaerythritol hexa(meth)acrylate); esters of a (meth)allyl alcohol and a polyvalent carboxylic acid having 2 to 20 carbon atoms and 2 to 6 or more carboxyl groups (e.g. diallyl phthalate and triallyl trimellitate); poly(meth)allyl ethers of polyhydric alcohols (e.g. pentaerythritol tri(meth)allyl ether); polyvinyl ethers of polyhydric alcohols (e.g. ethylene glycol divinyl ether); polypropenyl ethers of polyhydric alcohols (e.g. ethylene glycol dipropenyl ether); and polyvinyl benzenes (e.g. divinylbenzene). These compounds (F) may be used alone or in combination.

From the viewpoint of function of restraining reduction in the molecular weight, esters of (meth)acrylic acid and a polyhydric alcohol are preferred, and trimethylolpropane tri(meth)acrylate, pentaerythritol tetra(meth)acrylate, dipentaerythritol penta(meth)acrylate, and dipentaerythritol hexa(meth)acrylate are particularly preferred.

The number of ethylenic unsaturated bond-containing groups in the compound (F) per molecule is usually 2 to 10, and preferably 3 to 6. If the number of functional groups is less than 2, the weather resistance is less improved. If the number of functional groups exceeds 10, the compound (F) has a high molecular weight, so that it has too high a viscosity to handle easily.

An aqueous dispersion containing the vinyl resin (V1), the polyurethane resin (P), and the compound (F) having 2 or more ethylenic unsaturated bond-containing groups in the molecule is obtainable by any of the following methods (1) to (3).
(1) A method of mixing the compound (F) by the method to be mentioned later in the method of mixing an aqueous dispersion (V1E) of the resin (V1) and an aqueous dispersion (PE) of the resin (P)
(2) A method of mixing the compound (F) by the method to be mentioned later in the method of dispersing the resin (P) in an aqueous dispersion (V1E) of the resin (V1), in other words, in the aforementioned method of using an aqueous dispersion (V1E) of the resin (V1) instead of an aqueous medium in the aforementioned method of producing a dispersion (PE)
(3) A method of mixing the compound (F) by the method to be mentioned later in the aforementioned method of emulsion polymerizing the structural monomers for the resin (V1) in an aqueous dispersion (PE) of the resin (P), in other words, in the aforementioned method of using an aqueous dispersion (PE) of the resin (P) instead of an aqueous medium in the aforementioned method of producing a vinyl resin aqueous dispersion (V1E)

Examples of the method of mixing the compound (F) in any of the methods (1) to (3) include a method of mixing an aqueous dispersion of the compound (F); and a method of adding the compound (F) to the polyurethane resin (P) or a urethane prepolymer which is a precursor of the resin (P). Examples of the method of mixing the aqueous dispersion (F) include a method of mixing the aqueous dispersion (F) with the dispersions (V1E) and (PE) in the method (1); a method of mixing the dispersion (F) with the dispersion (V1E) in the method (2); and a method of mixing the dispersion (F) with the dispersion (PE) in the method (3).

Examples of the method of preparing an aqueous dispersion of the compound (F) include a method of dispersing the compound (F) in an aqueous medium in the presence of the aforementioned surfactant (C2).

In preparing an aqueous dispersion of the compound (F), an organic solvent such as benzyl alcohol, Texanol, and N-methylpyrrolidone is preferably used in combination from the viewpoint of stability of the aqueous dispersion. Specific examples of the above method include a method including dissolving the compound (F) in an organic solvent and then dispersing the solution in an aqueous medium in the presence of the surfactant (C2); and a method including dispersing an organic solvent in an aqueous medium in the presence of the surfactant (C2) to prepare an aqueous dispersion of the organic solvent, and then immersing the compound (F) in the dispersed particles of the organic solvent.

In the case of combining the vinyl resin (V2) other than the resin (V1), an aqueous dispersion (V2E) of the vinyl resin (V2) other than the resin (V1) may be mixed with the aqueous dispersion obtained by any of the methods (1) to (3), or part or the whole of the aqueous dispersion of the vinyl resin (V1) in the method (2) may be replaced by an aqueous dispersion (V2E) of the resin (V2) and an aqueous dispersion of the resin (V1) may optionally be added thereto. The aforementioned crosslinker (D) for the polyurethane resin (P) may be mixed at any stage in the methods (1) to (3).

In the case of mixing at least two of the aqueous dispersions (V1E), (V2E), (PE), and (FE), the aqueous dispersions may be put into a vessel at any order. The aqueous dispersions may be mixed stepwise; for example, at least two aqueous dispersions may be first mixed and then the other aqueous dispersion(s) may be mixed therewith. Alternatively, all the aqueous dispersions may be mixed at once.

In the case that the resin composition containing the resins (V1), (P), and optionally (V2) is in the form of a solution in an organic solvent or a solid, the compound (F) may be added to the resin composition by any method. For example, the compound (F) may be added at any stage in producing solutions of the resins (V1), (P), and (V2) in an organic solvent or solids thereof, or in producing a solution of the resin composition in an organic solvent or a solid thereof.

The amount of the compound (F) in the present invention is preferably 0.1 to 20% by weight, and more preferably 1.0 to 10% by weight, based on the total weight of the vinyl resin (V1) and the polyurethane resin (P) in the case of using no vinyl resin (V2), or based on the total weight of the resins (V1), (V2), and (P) in the case of using the vinyl resin (V2). Less than 0.1% by weight of the compound (F) may insufficiently improve the weather resistance. More than 20% by weight of the compound (F) may cause a film to have poor strength.

Since the resin composition containing the vinyl resin (V1), the polyurethane resin (P), and optionally the vinyl resin (V2) of the present invention provides a film excellent in properties such as mechanical strength, water resistance, and solvent resistance, it can be used in a wide variety of applications such as paints, coating agents (e.g. anticorrosive coating agents, waterproof coating agents, water-repellent coating agents, and antifouling coating agents), adhesives, fiber-treating agents (e.g. binders for pigment printing, binders for nonwoven fabric, sizing agents for reinforcing fibers, binders for antibacterial agents, and materials of artificial leather and synthetic leather), paper-treating agents, and inks. In particular, the resin composition can suitably be used as resins for aqueous paints, aqueous anticorrosive coating agents, aqueous fiber-treating agents, and aqueous adhesives.

For these applications, the resin composition may be mixed with one or more of any other additives, such as resins for assisting coating film formation, catalysts, pigments, pigment dispersants, viscosity modifiers, defoamers, leveling agents, antiseptics, deterioration inhibitors, stabilizers, and antifreezing agents. The crosslinker (D) may be added together with these additives. Additionally, a crosslinker other than the crosslinker (D), which is usually used in each application, may be further used.

In the case of using the resin aqueous dispersion of the present invention as an aqueous paint, an aqueous medium-dispersible resin or water-soluble resin other than the resins (V1) and (P) may be used in combination for the purpose of assisting coating film formation and improving the binding effect.

Examples of such aqueous medium-dispersible resin or water-soluble resin combined with an aqueous paint include aqueous medium-dispersible or water-soluble polyurethane resins, vinyl resins (V2), and polyester resin other than the vinyl resin (V1) and the polyurethane resin (P) in the present invention. Such resins may appropriately be selected from those usually used in the respective applications of the aqueous paint.

The total amount of the vinyl resin (V1) and the polyurethane resin (P) in the aqueous paint of the present invention is preferably 0.1 to 100% by weight, and more preferably 1 to 100% by weight, based on the weight of solid resin in the aqueous paint.

The aqueous paint may be mixed with one or more of additives such as the crosslinker (D), crosslinkers other than the crosslinker (D), pigments, pigment dispersants, viscosity modifiers, defoamers, antiseptics, deterioration inhibitors, stabilizers, antifreezing agents, and water.

Examples of the pigments include inorganic pigments and organic pigments having a solubility in water of 1 or lower. Examples of such inorganic pigments include white pigments, black pigments, grey pigments, red pigments, brown pigments, yellow pigments, green pigments, blue pigments, purple pigments, and metallic pigments. Examples of such organic pigments include natural organic pigments, synthetic organic pigments, nitroso pigments, nitro pigments, pigment-colorant-type azo pigments, azo lakes obtainable from water-soluble dyes, azo lakes obtainable from slightly insoluble dyes, lakes obtainable from basic dyes, lakes obtainable from acidic dyes, xanthan lakes, anthraquinon lakes, pigments obtainable from vat dyes, and phthalocyanine pigments. The amount of the pigment is preferably 50% by weight or less, and more preferably 30% by weight or less, based on the weight of the aqueous paint.

The aforementioned nonreactive surfactant (C2) may be used as a pigment dispersant. The amount of the pigment dispersant is preferably 20% by weight or less, and more preferably 15% by weight or less, based on the weight of the pigment.

Examples of the viscosity modifier include thickening agents, such as inorganic viscosity modifiers (e.g. sodium silicate and bentonite), cellulose viscosity modifiers (e.g. methylcellulose, carboxymethyl cellulose, and hydroxymethyl cellulose, with an Mn of 20,000 or higher), protein viscosity modifiers (e.g. casein, sodium caseinate and ammonium caseinate), acrylic viscosity modifiers (e.g. sodium polyacrylate and ammonium polyacrylate, with an Mn of 20,000 or higher), vinyl viscosity modifiers (e.g. polyvinyl alcohols with an Mn of 20,000 or higher), and associated viscosity modifiers.

Examples of the defoamer include long-chain alcohols (e.g. octyl alcohol), sorbitan derivatives (e.g. sorbitan monooleate), and silicone oils (e.g. polymethylsiloxane and polyether-modified silicones).

Examples of the antiseptic include organic sulfur-nitrogen compound antiseptics and organic sulfur-halide antiseptics.

Examples of the deterioration inhibitor and the stabilizer (e.g. ultraviolet absorbents and antioxidants) include hindered phenol-, hindered amine-, hydrazine-, phosphorus-, benzophenone-, and benzotriazole-type deterioration inhibitors and stabilizers.

Examples of the antifreezing agent include ethylene glycol and propylene glycol.

The amounts of the viscosity modifier, defoamer, antiseptic, deterioration inhibitor, stabilizer, and antifreezing agent are each preferably 5% by weight or less, and more preferably 3% by weight or less, based on the weight of the aqueous paint.

The aqueous paint may further contain a solvent for the purpose of improving the appearance of a dried coating film. Examples of the solvent to be added include monohydric alcohols having 1 to 20 carbon atoms (e.g. methanol, ethanol, propanol, and 2-ethylhexanol), glycols having 1 to 20 carbon atoms (e.g. ethylene glycol, propylene glycol, and diethylene glycol), alcohols having 1 to 20 carbon atoms and 3 or more hydroxy groups (e.g. glycerin), and cellosolves having 1 to 20 carbon atoms (e.g. methyl and ethyl cellosolves). The amount of the solvent to be added is preferably 20% by weight or less, and more preferably 15% by weight or less, based on the weight of the aqueous paint.

The aqueous paint produced using the resin aqueous dispersion of the present invention is produced by mixing and stirring the resin aqueous dispersion of the present invention and the aforementioned components. All the components may be mixed at once or the components may be mixed stepwise.

The solids content in the aqueous paint is preferably 10 to 70% by weight, and more preferably 15 to 60% by weight.

In the case of using the resin aqueous dispersion of the present invention for an aqueous anticorrosive coating agent, the resins to be used may consist of the vinyl resin (V1) and the polyurethane resin (P) in the present invention. Still, other resins may be combined therewith, such as SBR latex resin, aqueous medium-dispersible or water-soluble resins, including the vinyl resins (V2) other than the resin (V1) in the present invention and ester resins, and water-soluble polyurethane resins.

The sum of the amounts of the vinyl resin (V1) and the polyurethane resin (P) in the present invention in the aqueous anticorrosive coating agent is preferably 0.1 to 100% by weight, and more preferably 1 to 100% by weight, based on the weight of the solid resin content in the aqueous anticorrosive coating agent.

Any of secondary materials and additives used for usual aqueous anticorrosive coating agents, such as crosslinkers (D), crosslinkers other than the crosslinkers (D), plasticizers, fillers, pigments, thickening agents, antioxidants, ultraviolet absorbents, surfactants, and flame retarders, may also be used in amounts such that they do not inhibit the performance of the aqueous anticorrosive coating agent containing the resin aqueous dispersion of the present invention.

In the case of using the resin aqueous dispersion of the present invention for aqueous fiber-treating agents, the resin aqueous dispersion may optionally be mixed with known defoamers, wetting agents, various aqueous medium-dispersible or water-soluble resins (e.g. the vinyl resins (V2) other than the resin (V1) in the present invention, water-soluble polyurethane resins, SBR latex), softeners, and the like. In the case of the resin aqueous dispersion, the amount thereof is preferably 30% by weight or less, and more preferably 20% by weight or less, based on the total weight of the vinyl resin (V1) and the polyurethane resin (P) in terms of solids content. In the case of other additives, the amounts thereof are each preferably 1% by weight or less, and more preferably 0.1 to 0.5% by weight. If necessary, a pH adjuster may be added. Examples of the pH adjuster include alkaline materials, such as salts (sodium dicarbonate) of any strong base (e.g. alkali metals) and any weak acid (acids having a pKa exceeding 2.0, e.g. carbonic acid and phosphoric acid), and acidic materials (e.g. acetic acid).

The aqueous fiber-treating agent of the present invention may have any solids content (nonvolatile materials content), and the solids content is preferably 10 to 50% by weight, and more preferably 15 to 45% by weight. The viscosity (25°C) is preferably 10 to 100000 mPa·s.

### EXAMPLES

The present invention will be described in detail below referring to, but not limited to, examples. The term "part(s)" hereinbelow means "part(s) by weight".

### Production Example 1 [production of monomer (X-1)]

A stainless-steel autoclave equipped with a stirring device and a temperature-controlling device was charged with trimellitic acid (210 parts), glycidyl methacrylate (142 parts), isobutyl methacrylate (417.3 parts), and an alkali catalyst (N-ethylmorpholine) (1.8 parts). The components were reacted at 90°C for 5 hours, thereby providing a compound with 1 mol of trimellitic acid reacted with 1 mol of glycidyl methacrylate. Next, in nitrogen atmosphere, EO (900 parts) was dropwise added to the compound at 100 ± 10°C over 5 hours while the pressure was controlled to 0.50 MPa or lower. The mixture was then aged at 100 ± 10°C for 1 hour, thereby providing a solution of a monomer (X-1) in isobutyl methacrylate with EO added to the carboxyl group of the compound.

### Production Example 2 [production of monomer (X-2)]

A solution of a monomer (X-2) in acetone was produced in the same manner as in Production Example 1 except that the glycidyl methacrylate (142 parts), the isobutyl methacrylate (417.3 parts), and the EO (900 parts) were replaced by 2-hydroxyethyl methacrylate (130 parts), acetone (339.3 parts), and PO (696 parts), respectively.

### Production Example 3 [production of monomer (X-3)]

A solution of a monomer (X-3) in acetone was produced in the same manner as in Production Example 1 except that the trimellitic acid (210 parts), the isobutyl methacrylate (417.3 parts), and the EO (900 parts) were replaced by pyromellitic acid (254 parts), acetone (480 parts), and PO (1044 parts), respectively.

### Production Example 4 [production of monomer (X-4)]

A stainless-steel autoclave equipped with a stirring device and a temperature-controlling device was charged with trimellitic acid (210 parts), glycidyl methacrylate (142 parts), an alkali catalyst (triethylamine) (15.6 parts), and acetone (313 parts). The components were reacted at 90°C for 5 hours, thereby providing a compound with 1 mol of trimellitic acid reacted with 1 mol of glycidyl methacrylate. Next, in nitrogen atmosphere, EO (900 parts) was dropwise added to the compound at 100 ± 10°C over 5 hours while the pressure was controlled to 0.50 MPa or lower, and the mixture was matured at 100 ± 10°C for 1 hour. Then, the acetone was evaporated at 80 ± 10°C and a gauge pressure of -0.05 MPa, thereby providing a monomer (X-4) with EO added to the carboxyl group of the compound.

### Production Example 5 [production of monomer (X-5)]

A stainless-steel autoclave equipped with a stirring device and a temperature-controlling device was charged with trimellitic anhydride (192 parts), 2-hydroxyethyl methacrylate (130 parts), styrene (207.3 parts), and an alkali catalyst (DBN, San-Apro Ltd., 1,5-diazabicyclo[4.3.0]-5-nonene) (7.8 parts). The components were then reacted at 85°C for 6 hours so that the acid anhydride moieties were half-esterified, thereby providing a compound with 1 mol of trimellitic anhydride reacted with 1 mol of 2-hydroxyethyl methacrylate. Next, phenyl glycidyl ether (300 parts) was added to the compound and the components were reacted at 90°C for 10 hours, thereby providing a solution of a monomer (X-5) in styrene with 1 mol of the compound reacted with 2 mol of phenyl glycidyl ether.

### Production Example 6 [production of monomer (X-6)]

A stainless-steel autoclave equipped with a stirring device and a temperature-controlling device was charged with trimellitic acid (210 parts), glycidyl methacrylate (142 parts), acetone (217.3 parts), and an alkali catalyst (N-ethylmorpholine) (1.8 parts). The components were then reacted at 90°C for 5 hours, thereby providing a compound with 1 mol of trimellitic acid reacted with 1 mol of glycidyl methacrylate. Next, phenyl glycidyl ether (300 parts) was added and the components were reacted at 90°C for 10 hours, thereby providing a solution of a monomer (X-6) in acetone with 1 mol of the compound reacted with 2 mol of phenyl glycidyl ether.

### Production Example 7 [production of monomer (X-7)]

A stainless-steel autoclave equipped with a stirring device and a temperature-controlling device was charged with trimellitic anhydride (192 parts), 2-hydroxyethyl methacrylate (130 parts), and acetone (107.3 parts). The components were reacted at 85°C for 6 hours so that the acid anhydride moieties were half-esterified, thereby providing a solution of a monomer (X-7) in acetone with 1 mol of trimellitic anhydride reacted with 1 mol of 2-hydroxyethyl methacrylate.

### Production Example 8 [production of monomer (X-8)]

A solution of the monomer (X-8) in acetone was produced in the same manner as in Production Example 5 except that the trimellitic anhydride (192 parts) and the styrene (207.3 parts) were replaced by pyromellitic anhydride (218 parts) and acetone (272 parts), respectively, and the amount of the phenyl glycidyl ether was 450 parts.

### Production Example 9 [production of monomer (X-9)]

A stainless-steel autoclave equipped with a stirring device and a temperature-controlling device was charged with trimellitic anhydride (192 parts), 2-hydroxyethyl methacrylate (130 parts), an alkali catalyst (DBN, San-Apro Ltd., 1,5-diazabicyclo[4.3.0]-5-nonene) (7.8 parts), and acetone (156 parts). The components were reacted at 85°C for 6 hours so that the acid anhydride moieties were half-esterified, thereby providing a compound with 1 mol of trimellitic anhydride reacted with 1 mol of 2-hydroxyethyl methacrylate. Next, phenyl glycidyl ether (300 parts) was added to the compound and the components were reacted at 90°C for 10 hours. The acetone was then evaporated at 80 ± 10°C and a gauge pressure of -0.05 MPa, thereby providing a monomer (X-9) with 1 mol of the compound reacted with 2 mol of phenyl glycidyl ether.

### Production Example 10 [production of monomer (X-10)]

A stainless-steel autoclave equipped with a stirring device and a temperature-controlling device was charged with ethylene glycol (62 parts), trimellitic anhydride (384 parts), acetone (262 parts), and an alkali catalyst (triethylamine) (15.6 parts). The components were reacted at 85°C for 6 hours so that the acid anhydride moieties were half-esterified, thereby providing an esterified product with 1 mol of ethylene glycol reacted with 2 mol of trimellitic anhydride. Next, glycidyl methacrylate (284 parts) was added to the esterified product and the components were reacted at 90°C for 5 hours, thereby providing a compound with 1 mol of the compound reacted with 2 mol of glycidyl methacrylate. Next, benzyl alcohol (216 parts) was added to the compound and the components were reacted at 120°C for 5 hours while water generated during the reaction was evaporated, thereby providing a solution of a monomer (X-10) in acetone with 1 mol of the compound reacted with 2 mol of benzyl alcohol.

### Production Example 11 [production of monomer (X-11)]

A stainless-steel autoclave equipped with a stirring device and a temperature-controlling device was charged with ethylene glycol (62 parts), trimellitic anhydride (384 parts), acetone (343.3 parts), and an alkali catalyst (DBN, San-Apro Ltd., 1,5-diazabicyclo[4.3.0]-5-nonene) (7.8 parts). The components were reacted at 85°C for 6 hours so that the acid anhydride moieties were half-esterified, thereby providing an esterified product with 1 mol of ethylene glycol reacted with 2 mol of trimellitic anhydride. Next, glycidyl methacrylate (284 parts) was added to the esterified product and the components were reacted at 90°C for 5 hours, thereby providing a compound with 1 mol of the compound reacted with 2 mol of glycidyl methacrylate. Next, phenyl glycidyl ether (300 parts) was added to the compound and the components were reacted at 90°C for 10 hours, thereby providing a solution of a monomer (X-11) in acetone with 1 mol of the compound reacted with 2 mol of phenyl glycidyl ether.

### Production Example 12 [production of monomer (X-12)]

A stainless-steel autoclave equipped with a stirring device and a temperature-controlling device was charged with ethylene glycol (62 parts), pyromellitic anhydride (436 parts), acetone (272 parts), and an alkali catalyst (DBN, San-Apro Ltd., 1,5-diazabicyclo[4.3.0]-5-nonene) (7.8 parts). The components were reacted at 85°C for 6 hours so that the acid anhydride moieties were half-esterified, thereby providing an esterified product with 1 mol of ethylene glycol reacted with 2 mol of pyromellitic anhydride. Next, ethanol (230 parts) was added to the esterified product and the components were reacted at 100°C for 5 hours, thereby providing a compound with 1 mol of the compound reacted with 5 mol of ethanol. Next, glycidyl methacrylate (142 parts) was added to the compound and the components were reacted at 90°C for 5 hours, thereby providing a solution of a monomer (X-12) in acetone with 1 mol of the compound reacted with 1 mol of glycidyl methacrylate.

### Production Example 13 [production of monomer (X-13)]

A solution of a monomer (X-13) in acetone was produced in the same manner as in Production Example 10 except that the ethylene glycol (62 parts) was replaced by sucrose (342 parts), the amount of trimellitic anhydride was changed from 384 parts to 1536 parts, the amount of the acetone was changed from 262 parts to 803 parts, the glycidyl methacrylate (284 parts) was replaced by 2-hydroxyethyl methacrylate (130 parts), and the amount of benzyl alcohol was changed from 160 parts to 1203 parts.

### Production Example 14 [production of monomer (X-14)]

A stainless-steel autoclave equipped with a stirring device and a temperature-controlling device was charged with trimellitic anhydride (192 parts), 2-hydroxyethyl methacrylate (130 parts), acetone (207.3 parts), and an alkali catalyst (DBN, San-Apro Ltd., 1,5-diazabicyclo[4.3.0]-5-nonene) (7.8 parts). The components were reacted at 85°C for 6 hours so that the acid anhydride moieties were half-esterified, thereby providing a compound with 1 mol of trimellitic anhydride reacted with 1 mol of 2-hydroxyethyl methacrylate. Next, phenyl glycidyl ether (300 parts) was added to the compound and the components were reacted at 90°C for 10 hours, thereby providing a solution of a monomer (X-14) in acetone with 1 mol of the compound reacted with 2 mol of phenyl glycidyl ether.

### Production Example 15 [production of monomer (X-15)]

A solution of a monomer (X-15) in acetone was produced in the same manner as in Production Example 14 except that the 2-hydroxyethyl methacrylate (130 parts) was replaced by 2-hydroxyethyl propenyl ether (102 parts), the amount of the acetone was changed from 207.3 parts to 198.0 parts, and the amount of the alkali catalyst (DBN, San-Apro Ltd., 1,5-diazabicyclo[4.3.0]-5-nonene) was changed from 7.8 parts to 7.4 parts.

### Production Example 16 [production of monomer (X-16)]

A solution of a monomer (X-16) in acetone was produced in the same manner as in Production Example 14 except that the 2-hydroxyethyl methacrylate (130 parts) was replaced by 2-(allyloxy)ethanol (102 parts), the amount of the acetone was changed from 207.3 parts to 198.0 parts, and the amount of the alkali catalyst (DBN, San-Apro Ltd., 1,5-diazabicyclo[4.3.0]-5-nonene) was changed from 7.8 parts to 7.4 parts.

### Production Example 17 [production of monomer (X-17)]

A solution of a monomer (X-17) in acetone was produced in the same manner as in Production Example 14 except that the 2-hydroxyethyl methacrylate (130 parts) was replaced by 2-buten-1-ol (72 parts), the amount of the acetone was changed from 207.3 parts to 188.0 parts, and the amount of the alkali catalyst (DBN, San-Apro Ltd., 1,5-diazabicyclo[4.3.0]-5-nonene) was changed from 7.8 parts to 7.1 parts.

### Production Example 18 [production of monomer (X-18)]

A solution of a monomer (X-18) in acetone was produced in the same manner as in Production Example 14 except that the 2-hydroxyethyl methacrylate (130 parts) was replaced by allyl alcohol (58 parts), the amount of the acetone was changed from 207.3 parts to 183.3 parts, and the amount of the alkali catalyst (DBN, San-Apro Ltd., 1,5-diazabicyclo[4.3.0]-5-nonene) was changed from 7.8 parts to 6.9 parts.

### Production Example 19 [production of monomer (X-19)]

A solution of a monomer (X-19) in acetone was produced in the same manner as in Production Example 14 except that the phenyl glycidyl ether (300 parts) was replaced by p-(tert-butyl)phenyl glycidyl ether (412 parts), the amount of the acetone was changed from 207.3 parts to 244.7 parts, and the amount of the alkali catalyst (DBN, San-Apro Ltd., 1,5-diazabicyclo[4.3.0]-5-nonene) was changed from 7.8 parts to 9.2 parts.

### Production Example 20 [production of monomer (X-20)]

A stainless-steel autoclave equipped with a stirring device and a temperature-controlling device was charged with trimellitic anhydride (192 parts), 2-hydroxyethyl methacrylate (130 parts), MEK (136.7 parts), and an alkali catalyst (DBN, San-Apro Ltd., 1,5-diazabicyclo[4.3.0]-5-nonene) (5.1 parts). The components were reacted at 90°C for 5 hours, thereby providing a compound with 1 mol of trimellitic acid reacted with 1 mol of 2-hydroxyethyl methacrylate. Next, in nitrogen atmosphere, EO (88 parts) was dropwise added to the compound at 100 ± 10°C over 1 hour while the pressure was controlled to 0.50 MPa or lower. The mixture was matured at 100 ± 10°C for 1 hour, thereby providing a solution of a monomer (X-20) in MEK with EO added to the carboxyl group of the compound.

Table 2 shows the analysis results of the monomers (X-1) to (X-20) produced in Production Examples 1 to 20 (Production Example 7 being a Reference Production Example).

**[Table 2]**

| | Monomer (X) | Mn | Hydroxy value (mgKOH/g) | L concentration (mmol/g) | Carbonyl concentration (mmol/g) | Formula (1) | | |
|---|---|---|---|---|---|---|---|---|
| | | | | | | a | b | c |
| Production Example 1 | X-1 | 1252 | 134.4 | 0.8 | 2.4 | 1 | 1 | 1 |
| Production Example 2 | X-2 | 1018 | 110.2 | 1.0 | 2.9 | 1 | 1 | 1 |
| Production Example 3 | X-3 | 1440 | 155.8 | 0.7 | 2.8 | 1 | 2 | 1 |
| Production Example 4 | X-4 | 1252 | 134.4 | 0.8 | 2.4 | 1 | 1 | 1 |
| Production Example 5 | X-5 | 622 | 180.4 | 1.6 | 4.8 | 1 | 1 | 1 |
| Production Example 6 | X-6 | 652 | 258.1 | 1.5 | 4.6 | 1 | 1 | 1 |
| Reference Production Example 7 | X-7 | 322 | 0.0 | 3.1 | 9.3 | 1 | 1 | 1 |
| Production Example 8 | X-8 | 816 | 206.3 | 1.2 | 4.9 | 1 | 2 | 1 |
| Production Example 9 | X-9 | 622 | 180.4 | 1.6 | 4.8 | 1 | 1 | 1 |
| Production Example 10 | X-10 | 946 | 118.6 | 2.1 | 6.3 | Each a is 1 | Each b is 1 | 2 |
| Production Example 11 | X-11 | 1030 | 217.9 | 1.9 | 5.8 | Each a is 1 | Each b is 1 | 2 |
| Production Example 12 | X-12 | 816 | 68.8 | 2.5 | 9.8 | One a is 1 and the other is 0 | One b is 2 and the other is 3 | 2 |
| Production Example 13 | X-13 | 2410 | 0.0 | 3.3 | 10.0 | One a is 1 and the others are 0 | One b is 1 and the others are 2 | 8 |
| Production Example 14 | X-14 | 622 | 180.4 | 1.6 | 4.8 | 1 | 1 | 1 |
| Production Example 15 | X-15 | 594 | 188.9 | 1.7 | 5.1 | 1 | 1 | 1 |
| Production Example 16 | X-16 | 594 | 188.9 | 1.7 | 5.1 | 1 | 1 | 1 |
| Production Example 17 | X-17 | 564 | 198.9 | 1.8 | 5.3 | 1 | 1 | 1 |
| Production Example 18 | X-18 | 550 | 204 | 1.8 | 5.5 | 1 | 1 | 1 |
| Production Example 19 | X-19 | 734 | 152.9 | 1.4 | 4.1 | 1 | 1 | 1 |
| Production Example 20 | X-20 | 410 | 273.7 | 2.4 | 7.3 | 1 | 1 | 1 |

### Production Examples 21 to 23 [production of polyurethane resin aqueous dispersions (PE-1) to (PE-3)]

The materials for each polyurethane resin shown in Table 3 were mixed. The mixture was charged into a twin-screw KRC kneader (Kurimoto, Ltd.) in nitrogen atmosphere and kneaded at 220°C for 10 minutes to be urethanized. The reaction product was then taken out of the kneader and press-rolled in a press machine heated to 180°C, and the pressed product was cut using a square pelletizer (HORAI Co., Ltd.), thereby providing a polyurethane resin. Next, a temperature-controllable pressure-resistant vessel was charged with the whole resulting polyurethane resin, a neutralized amine, and water shown in Table 3, and the components were dispersion-treated at 10000 rpm and 130°C × 3 minutes using a CLEARMIX (M Technique Co., Ltd.), thereby providing polyurethane resin aqueous dispersions (PE-1) to (PE-3).

### Production Example 24 [production of polyurethane resin aqueous dispersion (PE-4)]

A simple pressure-resistant reactor equipped with a stirring device and a heating device was charged with materials for a prepolymer shown in Table 3. The materials were stirred at 85°C for 10 hours to be urethanized, thereby providing a solution of a urethane prepolymer having an isocyanato group in acetone. The isocyanato content in the solution of the urethane prepolymer in acetone was 0.46 mmol/g per solids content in the solution. The resulting solution of the urethane prepolymer in acetone (399 parts) was put into the simple pressure-resistant reactor, and triethylamine (neutralizer) (6 parts) and water (509 parts) were added thereto under stirring at 40°C. The components were stirred at 60 rpm for 3 minutes, and a 10% by weight solution of diethylenetriamine in water as a chain extender (6 parts) was then added thereto. The acetone was evaporated at 65°C for 8 hours under reduced pressure, thereby providing a polyurethane resin aqueous dispersion (PE-4).

### Production Examples 25 to 28 [production of polyurethane resin aqueous dispersions (PE-5) to (PE-8)]

Polyurethane resin aqueous dispersions (PE-5) to (PE-8) were produced in the same manner as in Production Example 24 except that the materials shown in Table 3 or Table 4 were used.

### Production Examples 29 to 31 [production of polyurethane resin aqueous dispersions (PE-9) to (PE-11)]

A stainless-steel autoclave equipped with a stirring device and a temperature-controlling device was charged with a PO/EO blocked adduct of propylene glycol (SANNIX PL-910, Sanyo Chemical Industries, Ltd., Mn = 900, hydroxy value: 124.7) (900 parts), trimellitic anhydride (384 parts), and an alkali catalyst (N-ethylmorpholine) (2.1 parts), and the components were reacted at 0.20 MPa and 130 ± 10°C for 5 hours in nitrogen atmosphere so that the acid anhydride moieties were half-esterified, thereby providing an esterified product with 1 mol of the PO/EO blocked adduct of propylene glycol reacted with 2 mol of trimellitic anhydride. Next, EO (176 parts) was dropwise added to the esterified product at 100 ± 10°C over 5 hours while the pressure was controlled to 0.50 MPa or lower. The mixture was then matured at 100 ± 10°C for 1 hour, thereby providing a compound (S1-1), in other words, an EO adduct of the esterified product. The resulting compound (S1-1) had a hydroxy value of 154 mgKOH/g, and satisfied the Y concentration = 1.4 mmol/g, the carbonyl concentration = 4.1 mmol/g, the mole average number of functional groups = 4, Mn = 1460, e = 2, f = 0, and g = 2, in the formula (7).

Next, the materials for polyurethane resin shown in Table 4 were mixed. The mixture was charged into a twin-screw KRC kneader (Kurimoto, Ltd.) in nitrogen atmosphere, and kneaded at 220°C for 10 minutes to be urethanized. The reaction product was taken out and press-rolled in a press machine heated to 180°C. The rolled product was cut using a square pelletizer (HORAI Co., Ltd.), thereby providing a polyurethane resin. Next, a temperature-controllable pressure-resistant vessel was charged with the whole resulting polyurethane resin, a neutralized amine, and water shown in Table 4. The components were then dispersion-treated at 10000 rpm and 130°C × 3 minutes using a CLEARMIX (M Technique Co., Ltd.), thereby providing polyurethane resin aqueous dispersions (PE-9) to (PE-11) each containing a polyurethane resin with the compound (S1-1) introduced into the molecular skeleton of the resin.

### Production Example 32 [production of polyurethane resin aqueous dispersion (PE-12)]

A stainless-steel autoclave equipped with a stirring device and a temperature-controlling device was charged with pyromellitic acid (254 parts), an alkali catalyst (N-ethylmorpholine) (2.1 parts), and THF (313 parts) as a solvent. Then, EO (176 parts) was dropwise added thereto at 100 ± 10°C over 5 hours in nitrogen atmosphere while the pressure was controlled to 0.50 MPa or lower. The mixture was matured at 100 ± 10°C for 1 hour, thereby providing a compound (S1-2) with EO added to the carboxyl groups of the pyromellitic acid. The resulting compound (S1-2) had a hydroxy value of 522 mgKOH/g, and satisfied the Y concentration = 2.3 mmol/g, the carbonyl concentration = 9.3 mmol/g, the mole average number of functional groups = 4, Mn = 430, e = 3, f = 0, and g = 1, in the formula (7).

Next, a simple pressure-resistant reactor equipped with a stirring device and a heating device was charged with the materials for prepolymer shown in Table 4. The materials were then stirred at 85°C for 10 hours to be urethanized, thereby providing a solution of a urethane prepolymer having an isocyanato group in acetone. The isocyanato content in the solution of a urethane prepolymer in acetone was 0.71 mmol/g per solids content in the solution. The resulting solution of a urethane prepolymer in acetone (472.6 parts) was put into the simple pressure-resistant reactor, and triethylamine (neutralizer) (15.3 parts), glycerin monostearate (2.0 parts), and water (700.8 parts) were added thereto under stirring at 40°C. The components were stirred at 60 rpm for 3 minutes, and a 10% by weight solution of ethylenediamine in water as a chain extender (29.9 parts) was added thereto. The acetone was then evaporated at 65°C over 8 hours under reduced pressure, and DURANATE MF-K60X (Asahi Kasei Chemicals Corp.) as a crosslinker (5 parts) was added thereto, thereby providing a polyurethane resin aqueous dispersion (PE-12) containing the polyurethane resin with the compound (S1-2) introduced into the molecular skeleton of the resin.

### Production Example 33 [production of polyurethane resin aqueous dispersion (PE-13)]

The materials for urethane resin or prepolymer among the materials shown in Table 4 were mixed. The mixture was then charged into a twin-screw KRC kneader (Kurimoto, Ltd.) in nitrogen atmosphere and kneaded at 220°C for 10 minutes to be urethanized. The reaction product was taken out and press-rolled in a press machine heated to 180°C. The rolled product was then cut using a square pelletizer (HORAI Co., Ltd.), thereby providing a polyurethane resin. Next, a temperature-controllable pressure-resistant vessel was charged with the polyurethane resin (285.7 parts), water (703.9 parts), and 25% by weight ammonia water (10.4 parts). The components were then dispersion-treated at 10000 rpm and 130°C × 3 minutes using CLEARMIX (M Technique Co., Ltd.), thereby providing a polyurethane resin aqueous dispersion.

Next, a temperature-controllable pressure-resistant vessel was charged with the polyurethane resin aqueous dispersion (1000 parts) and the compound (S1-1) (10 parts) shown in Production Example 29. The components were dispersion-treated at 10000 rpm and 130°C × 3 minutes using CLEARMIX (M Technique Co., Ltd.), thereby providing a polyurethane resin aqueous dispersion (PE-13). The compound (S1-1) was introduced into the polyurethane resin during the dispersion treatment, and a urethane resin composition was formed as a mixture of the polyurethane resin and the compound (S1-1).

### Production Example 34 [production of polyurethane resin aqueous dispersion (PE-14)]

A stainless-steel autoclave equipped with a stirring device and a temperature-controlling device was charged with 1,10-decane diol (174 parts), trimellitic anhydride (384 parts), triethylamine (404 parts), and toluene (246 parts) as a solvent. The components were reacted at 0.20 MPa and 80 ± 5°C for 2 hours in nitrogen atmosphere so that the acid anhydride moieties were half-esterified, thereby providing an esterified product with 1 mol of 1,10-decane diol reacted with 2 mol of trimellitic anhydride. Next, benzylamine (428 parts) was added to the esterified product and the components were reacted for 6 hours while the reaction was controlled to 95 ± 5°C and 0.06 MPa or lower, volatilizing toluene and water were condensed using a cooler, and the trap-separated toluene was continually reversed to the reaction vessel. After the reaction, the solvent was evaporated at 80 ± 10°C and 10 kPa, thereby providing a compound (S2-1) with the carboxyl group of the esterified product replaced by a benzyl carbamoyl group. The resulting compound (S2-1) had a hydroxy value of 0 mgKOH/g, and satisfied the Y concentration = 2.2 mmol/g, the carbonyl concentration = 6.6 mmol/g, the mole average number of functional groups = 0, Mn = 914, e = 2, f = 0, and g = 2, in the formula (7).

The materials for urethane resin or prepolymer among the materials shown in Table 4 were mixed. The mixture was charged into a twin-screw KRC kneader (Kurimoto, Ltd.) in nitrogen atmosphere and kneaded at 220°C for 10 minutes to be urethanized. The reaction product was then taken out and press-rolled in a press machine heated to 180°C. The rolled product was cut using a square pelletizer (HORAI Co., Ltd.), thereby providing a polyurethane resin. Next, a temperature-controllable pressure-resistant vessel was charged with the polyurethane resin (285.7 parts), water (703.9 parts), and 25% by weight ammonia water (10.4 parts). The components were then dispersion-treated at 10000 rpm and 130°C × 3 minutes using CLEARMIX (M Technique Co., Ltd.), thereby providing a polyurethane resin aqueous dispersion.

Next, a temperature-controllable pressure-resistant vessel was charged with the polyurethane resin aqueous dispersion (1000 parts) and the compound (S2-1) (10 parts). The components were dispersion-treated at 10000 rpm and 130°C × 3 minutes using CLEARMIX (M Technique Co., Ltd.), thereby providing a polyurethane resin aqueous dispersion (PE-14). The compound (S2-1) was introduced into the polyurethane resin during the dispersion treatment, thereby forming a urethane resin composition as a mixture of the polyurethane resin and the compound (S2-1).

### Production Example 35 [production of polyurethane resin aqueous dispersion (PE-15)]

A polyurethane resin aqueous dispersion (PE-15) was produced in the same manner as in Production Example 29 except that the materials were replaced by those shown in Table 5.

### Production Example 36 [production of polyurethane resin aqueous dispersion (PE-16)]

A polyurethane resin aqueous dispersion (PE-16) was produced in the same manner as in Production Example 32 except that the materials were replaced by those shown in Table 5.

### Production Example 37 [production of polyurethane resin aqueous dispersion (PE-17)]

A polyurethane resin aqueous dispersion (PE-17) was produced in the same manner as in Production Example 34 except that the materials were replaced by those shown in Table 5.

### Production Example 38 [production of polyurethane resin aqueous dispersion (PE-18)]

A polyurethane resin aqueous dispersion (PE-18) was produced in the same manner as in Production Example 21 except that the materials were replaced by those shown in Table 5.

### Production Examples 39 to 42 [production of polyurethane resin aqueous dispersions (PE-19) to (PE-22)]

Polyurethane resin aqueous dispersions (PE-19) to (PE-22) were produced in the same manner as in Production Example 24 except that the materials were replaced by those shown in Table 5.

**[Table 3]**

| | | | Production Examples | | | | | | |
|---|---|---|---|---|---|---|---|---|---|
| | | | 21 | 22 | 23 | 24 | 25 | 26 | 27 |
| Type of polyurethane resin aqueous dispersion | | | PE-1 | PE-2 | PE-3 | PE-4 | PE-5 | PE-6 | PE-7 |
| | Compound (S) | Type | - | - | - | - | - | - | - |
| | | Amount (parts) | - | - | - | - | - | - | - |
| | NIPPOLAN 981 | | - | - | - | - | - | - | 173.4 |
| | DURANOL G4672 | | - | 120.5 | - | - | - | - | - |
| | ETERNACOLL UH-200 | | - | - | - | - | - | - | - |
| | ETERNACOLL UM-90 | | - | - | - | - | 247.2 | - | - |
| | SANESTOR 5620 | | - | - | 127.0 | - | - | - | - |
| Materials for urethane resin or prepolymer (parts) | PTMG2000 | | 142.0 | - | - | 181.0 | - | 158.9 | - |
| | ARUFON UH-2032 | | - | - | - | - | - | - | - |
| | NEWPOL BP-3P | | - | - | - | - | - | - | - |
| | 1,4-Butanediol | | 5.1 | 11.6 | - | 9.0 | 7.8 | 23.4 | 8.2 |
| | Trimethylolpropane | | - | - | - | - | - | 23.5 | - |
| | Ethylene glycol | | - | - | 13.4 | - | - | - | - |
| | 2, 2-Dimethylol propionic acid | | 19.8 | 20.0 | 14.3 | 10.0 | 4.9 | 9.4 | 15.6 |
| | IPDI | | - | - | 85.0 | 79.0 | 131.7 | 179.3 | - |
| | Hydrogenated MDI | | 73.0 | 87.6 | - | - | - | - | 148.8 |
| | Acetone | | - | - | - | 120.0 | 257.4 | 256.4 | 218.8 |
| Neutralized amine (parts) | Triethylamine | | - | - | - | 6.0 | 3.4 | 6.9 | 11.7 |
| | 2-Dimethylaminoethanol | | 13.2 | - | - | - | - | - | - |
| | 25wt% Ammonia water | | - | 10.2 | 7.3 | - | - | - | - |
| Extension amine (parts) | 10wt% Aqueous solution of diethylenetriamine | | - | - | - | 5.6 | - | 54.5 | - |
| | 10wt% Aqueous solution of ethylenediamine | | - | - | - | - | 83.8 | - | 40.7 |
| | 10wt% Aqueous solution of diethanolamine | | - | - | - | - | - | - | - |
| | 10wt% Aqueous solution of 3-aminopropyltrimethoxysilane | | - | - | - | - | - | - | - |
| Ion exchange water (parts) | | | 547.0 | 549.9 | 552.7 | 509.0 | 543.8 | 658.2 | 576.4 |
| Dispersant (parts) | Glycerine monostearate | | - | - | - | - | - | - | - |
| Crosslinker (parts) | DURANATE MF-K60X (Asahi Kasei Chemicals Corp.) | | - | - | - | - | - | - | - |
| Total (parts) | | | 800 | 800 | 800 | 800 | 1023 | 1114 | 975 |
| Amount of compound (S1) or (S2) to total weight of active hydrogen component (A) and organic polyisocyanate component (B) (wt%) | | | - | - | - | - | - | - | - |

**[Table 4]**

| | | | Production Examples | | | | | | |
|---|---|---|---|---|---|---|---|---|---|
| | | | 28 | 29 | 30 | 31 | 32 | 33 | 34 |
| Type of polyurethane resin aqueous dispersion | | | PE-8 | PE-9 | PE-10 | PE-11 | PE-12 | PE-13 | PE-14 |
| Materials for urethane resin or prepolymer (parts) | Compound (S) | Type | - | S1-1 | S1-1 | S1-1 | S1-2 | S1-1 | S2-1 |
| | | Amount (parts) | - | 0.9 | 0.3 | 22.9 | 0.9 | 10.0 | 10.0 |
| | NIPPOLAN 981 | | - | - | - | - | - | - | - |
| | DURANOL G4672 | | - | - | - | - | - | - | - |
| | ETERNACOLL UH-200 | | - | - | - | - | - | - | - |
| | ETERNACOLL UM-90 | | - | - | - | - | - | - | - |
| | SANESTOR 5620 | | - | - | - | - | - | - | - |
| | PTMG2000 | | - | 154.3 | 154.8 | 136.4 | 168.3 | 155.1 | 155.1 |
| | ARUFON UH-2032 | | - | - | - | - | - | - | - |
| | NEWPOL BP-3P | | 149.2 | - | - | - | - | - | - |
| | 1,4-Butan ediol | | - | 13.2 | 13.2 | 11.7 | - | 10.3 | 13.3 |
| | Trimethylolpropane | | 6.7 | - | 0.1 | 0.1 | - | - | - |
| | Ethylene glycol | | - | - | - | - | - | - | - |
| | 2, 2-dimethylol propionic acid | | 11.6 | 20.4 | 20.4 | 20.4 | 20.3 | 20.4 | 20.4 |
| | IPDI | | 189.9 | - | - | - | - | - | - |
| | Hydrogenated MDI | | - | 96.9 | 96.9 | 94.3 | 94.1 | 89.9 | 96.9 |
| | Acetone | | 229.8 | - | - | - | 189.0 | - | - |
| Neutralized amine (parts) | Triethylamine | | 8.8 | - | - | - | 15.3 | - | - |
| | 2-Dimethylaminoethanol | | - | - | - | - | - | - | - |
| | 25wt% Ammonia water | | - | 10.4 | 10.4 | 10.4 | - | 10.4 | 10.4 |
| Extension amine (parts) | 10wt% Aqueous solution of diethylenetriamine | | 123.3 | - | - | - | 29.9 | - | - |
| | 10wt% Aqueous solution of ethylenediamlne | | - | - | - | - | - | - | - |
| | 10wt% Aqueous solution of diethanolamine | | 71.2 | - | - | - | - | - | - |
| | 10wt% Aqueous solution of 3-aminopropyltrimethoxysilane | | - | - | - | - | - | - | - |
| Ion exchange water (parts) | | | 462.1 | 703.9 | 703.9 | 703.9 | 700.8 | 703.9 | 703.9 |
| Dispersant (parts) | Glycerine monostearate | | - | - | - | - | 2.0 | - | - |
| Crosslinker (parts) | DURANATE MF-K60X (Asahi Kasei Chemicals Corp.) | | - | - | - | - | 5.0 | - | - |
| Total (parts) | | | 1023 | 1000 | 1000 | 1000 | 1037 | 1000 | 1010 |
| Amount of compound (S1) or (S2) to total weight of active hydrogen component (A) and organic polyisocyanate component (B) (wt%) | | | - | 0.30 | 0.10 | 8.00 | 0.30 | 3.50 | 3.50 |

**[Table 5]**

| | | | Production Examples | | | | | | | |
|---|---|---|---|---|---|---|---|---|---|---|
| | | | 35 | 36 | 37 | 38 | 39 | 40 | 41 | 42 |
| Type of polyurethane resin aqueous dispersion | | | PE-15 | PE-16 | PE-17 | PE-18 | PE-19 | PE-20 | PE-21 | PE-22 |
| | Compound (S) | Type | S1-1 | S1-2 | S2-1 | - | - | - | - | - |
| | | Amount (parts) | 0.9 | 0.9 | 10.0 | - | - | - | - | - |
| | NIPPOLAN 981 | | - | - | - | - | - | - | - | - |
| | DURANOL G4672 | | - | - | 150.4 | - | 168.2 | - | 187.6 | 187.6 |
| | ETERNACOLL UH-200 | | - | - | - | - | - | - | 29.7 | - |
| | ETERNACOLL UM-90 | | - | - | - | - | - | - | - | - |
| | SANESTOR 5620 | | - | - | - | - | - | - | - | - |
| Materials for urethane resin or prepolymer (parts) | PTMG2000 | | 164.3 | 174.0 | - | 164.3 | - | 150.1 | - | - |
| | ARUFON UH-2032 | | - | - | - | - | - | - | - | 29.7 |
| | NEWPOL BP-3P | | - | - | - | - | - | - | - | - |
| | 1,4-Butanediol | | 18.2 | - | 4.3 | 17.5 | 0.1 | 0.5 | 0.2 | 0.2 |
| | Trimethylolpropane | | - | - | - | - | - | - | - | - |
| | Ethylene glycol | | - | - | - | - | - | - | - | - |
| | 2, 2 -dimethylol propionic acid | | 20.4 | 21.0 | 34.1 | 12.9 | 20.3 | 35.5 | 27.9 | 27.9 |
| | IPDI | | - | - | - | - | - | 110.8 | - | - |
| | Hydrogenated MDI | | 81.9 | 97.3 | 96.9 | 86.0 | 94.2 | - | 127.7 | 127.7 |
| | Acetone | | - | 195.4 | - | - | 188.1 | 170.2 | 160.2 | 160.2 |
| Neutralized amine (parts) | Triethylamine | | - | 15.8 | - | - | 16.3 | 26.7 | 21.0 | 21.0 |
| | 2-Dimethylaminoethanol | | - | - | - | - | - | - | - | - |
| | 25wt% Ammonia water | | 10.4 | - | 17.4 | 6.7 | - | - | - | - |
| Extension amine (parts) | 10wt% Aqueous solution of diethylenetriamine | | - | 20.7 | - | - | 20.0 | 37.9 | 6.2 | 6.2 |
| | 10wt% Aqueous solution of ethylenediamine | | - | - | - | - | - | - | - | - |
| | 10wt% Aqueous solution of diethanolamine | | - | - | - | - | - | - | - | - |
| | 10wt% Aqueous solution of 3-aminopropyltrimethoxysilane | | - | 53.5 | - | - | 51.8 | - | - | - |
| Ion exchange water (parts) | | | 703.9 | 619.9 | 696.9 | 703.9 | 537.6 | 642.8 | 514.8 | 614.8 |
| Dispersant (parts) | Glycerine monostearate | | - | - | - | - | - | - | - | - |
| Crosslinker (parts) | DURANATE MF-K60X (Asahi Kasei Chemicals Corp.) | | - | - | - | - | - | - | - | - |
| Total (parts) | | | 1000 | 1003 | 1010 | 991 | 907 | 1004 | 1076 | 1076 |
| Amount of compound (S1) or (S2) to total weight of active hydrogen component (A) and organic polyisooyanate oomponent (B) (wt%) | | | 0.30 | 0.30 | 3.50 | - | - | - | - | - |

The materials represented by their trade names in Table 3 to Table 5 have the following compositions.
- NIPPOLAN 981: polyhexamethylene carbonate diol, Mn = 1,000 (Nippon Polyurethane Industry Co., Ltd.)
- DURANOL G4672: poly(tetramethylene/hexamethylene) carbonate diol, Mn = 2,000 (Asahi Kasei Chemicals Corp.)
- ETERNACOLL UH-200: polyhexamethylene carbonate diol, Mn = 2,000 (Ube Industries, Ltd.)
- ETERNACOLL UM-90: poly(cyclohexylenebis(methylene)/ hexamethylene)carbonate diol, Mn = 900 (Ube Industries, Ltd.)
- SANESTOR 5620: polyneopentylene adipate diol, Mn = 2,000 (Sanyo Chemical Industries, Ltd.)
- PTMG2000: poly(oxytetramethylene)glycol, Mn = 2,000 (Mitsubishi Chemical Corp.)
- NEWPOL BP-3P: 3 mol PO adduct of bisphenol A (amount by mole of PO added is an average value, Sanyo Chemical Industries, Ltd.)
- ARUFON UH-2032: acrylic polyol, Mn = 2,000 (TOAGOSEI CO., LTD.)

### Production Example 43 [production of solution (PJ-1) of polyurethane resin in MEK]

A four-neck flask equipped with a thermometer and a stirring device was charged with DURANOL G4672 (200 parts) and IPDI (33.3 parts). The components were stirred at 90°C for 6 hours to be urethanized, thereby providing a solution of a urethane prepolymer having an isocyanato group in MEK. The isocyanato content in the solution of a urethane prepolymer in MEK was 0.43 mmol/g per solids content in the solution. The resulting urethane prepolymer was cooled down to 40°C. Then, MEK (155.5 parts) was added so that the urethane prepolymer was dissolved therein. MEK (84.2 parts), isophoronediamine (IPDA) (6.4 parts), and monoethanolamine (0.37 parts) were added to the MEK solution to cause chain extension, thereby providing a solution (PJ-1) of polyurethane resin in MEK having a resin content of 50%.

### Production Example 44 [production of solution (V2J-1) of vinyl resin in MEK without monomer (X)]

A separable flask equipped with a dropping funnel for monomer solution, a dropping funnel for initiator solution, a stirring device, a reflux condenser, a thermometer, and a nitrogen introduction pipe was charged with MEK (403 parts). The MEK was stirred and the temperature was increased to 80°C while nitrogen gas was blown thereinto.

Next, a monomer mixture liquid consisting of methyl methacrylate (183.2 parts), 2-ethylhexyl acrylate (127.7 parts), isobutyl methacrylate (79.3 parts), 2-hydroxyethyl methacrylate (34.8 parts), and styrene (75.0 parts) was prepared, and the liquid was put into the dropping funnel for monomer solution.

Next, an initiator solution consisting of 2,2'-azobis(2,4-dimethylvaleronitrile) (V-65, Wako Pure Chemical Industries, Ltd.) (1.5 parts) and MEK (48.5 parts) was prepared and put into the dropping funnel for initiator solution. The monomer solution and the initiator solution were dropwise added to the flask at a uniform velocity over 4 hours while the temperature inside the reaction system was maintained at 80 ± 2°C. After the dropwise addition, the mixture was further stirred for 2 hours at the same temperature. Then, a solution of the initiator (V-65) (1.5 parts) in MEK (48.5 parts) was continually added to the flask over 4 hours using a dropping funnel. The temperature was raised from 80°C to 85°C and the stirring was continued for 2 hours. Then, the temperature was cooled down to room temperature, thereby providing a solution (V2J-1) of the vinyl resin in MEK.

### Example 1 [production of vinyl resin aqueous dispersion (V1E-1)]

A separable flask equipped with a dropping funnel for monomer dispersion, a dropping funnel for initiator solution, a stirring device, a reflux condenser, a thermometer, and a nitrogen introduction pipe was charged with ion exchange water (337.8 parts) and a reactive surfactant LATEMUL PD-104 (Kao Corp.) (5.0 parts (solids content: 1.0 part)). The components were stirred while nitrogen was blown thereinto and the temperature was increased to 70°C.

Next, a monomer dispersion was prepared which consisted of ion exchange water (84.2 parts), a reactive surfactant LATEMUL PD-104 (Kao Corp.) (32.5 parts (solids content: 6.5 parts)), the solution of the monomer (X-1) in isobutyl methacrylate produced in Production Example 1 (250.4 parts), 2-ethylhexyl acrylate (18.6 parts), i-butyl methacrylate (157.0 parts), n-butyl acrylate (37.9 parts), styrene (25.0 parts), methacrylic acid (6.1 parts), and 1,6-hexanediol dimethacrylate (5.0 parts). The dispersion was then put into the dropping funnel for monomer dispersion, and 30.2 parts of this dispersion was added to the separable flask.

Next, an initiator solution consisting of ammonium persulfate (1.0 part) and ion exchange water (49.0 parts) were prepared. This initiator solution was put into the dropping funnel for initiator solution, and 5.0 parts of this solution was added to the separable flask to initiate polymerization. The remaining monomer dispersion and initiator solution were dropwise added to the flask at a uniform velocity over 3 hours while the temperature inside the reaction system was maintained at 70 ± 2°C. The stirring was continued for 90 minutes at the same temperature, and then the solution was cooled down to room temperature. Finally, a 25% by weight ammonia water solution (4.8 parts) was added thereto and the mixture was stirred for 30 minutes, thereby providing a vinyl resin aqueous dispersion (V1E-1).

### Examples 2 to 38 (Example 9 being Reference Example)

Vinyl resin aqueous dispersions (V1E-2) to (V1E-38) were produced in the same manner as in Example 1 except that the materials were replaced by those shown in Table 6 to Table 9.

### Example 39 [production of solution (V1J-1) of vinyl resin in MEK]

A separable flask equipped with a dropping funnel for monomer solution, a dropping funnel for initiator solution, a stirring device, a reflux condenser, a thermometer, and a nitrogen introduction pipe was charged with MEK (275.4 parts). The MEK was stirred while nitrogen gas was blown thereinto and the temperature was increased to 80°C.

Next, a monomer mixture liquid was prepared which consisted of methyl methacrylate (224.2 parts), 2-ethylhexyl acrylate (156.1 parts), isobutyl methacrylate (60.5 parts), 2-hydroxyethyl methacrylate (41.7 parts), styrene (93.0 parts), and the solution of the monomer (X-20) in MEK produced in Production Example 20 (32.8 parts), and this liquid was put into the dropping funnel for monomer solution.

Next, an initiator solution consisting of 2,2'-azobis(2,4-dimethylvaleronitrile) (V-65, Wako Pure Chemical Industries, Ltd.) (1.8 parts) and MEK (58.2 parts) was prepared, and this solution was put into the dropping funnel for initiator solution. The monomer solution and the initiator solution were dropwise added to the flask at a uniform velocity over 4 hours while the temperature inside the reaction system was maintained at 80 ± 2°C. After the dropwise addition, the mixture was further stirred for 2 hours at the same temperature. Then, a solution of the initiator (V-65) (1.8 parts) in MEK (58.2 parts) was continually added thereto over 4 hours using the dropping funnel. The temperature was raised from 80°C to 85°C and the stirring was continued for 2 hours. Then, the temperature was cooled down to room temperature, thereby providing a solution (V1J-1) of the vinyl resin in MEK.

### Comparative Example 1

A vinyl resin aqueous dispersion (V1E'-1) for comparison was prepared in the same manner as in Example 1 except that the materials were replaced by those shown in Table 9.

**[Table 6]**

| | | | Examples | | | | | | | | | |
|---|---|---|---|---|---|---|---|---|---|---|---|---|
| | | | 1 | 2 | 3 | 4 | 5 | 6 | 7 | 8 | 9* | 10 |
| Type of vinyl resin aqueous dispersion | | | V1E-1 | V1E-2 | V1E-3 | V1E-4 | V1E-5 | V1E-6 | V1E-7 | V1E-8 | V1E-9 | V1E-10 |
| | Monomer (X), solvent solution of monomer (X), or monomer solution of monomer (X) | Type | (X-1) isobutyl methacrylate solution | (X-2) acetone solution | (X-3) acetone solution | (X-4) | (X-5) styrene solution | (X-14) acetone solution | (X-14) acetone solution | (X-6) acetone solution | (X-7) acetone solution | (X-8) acetone solution |
| | | Amount | 250.4 | 6.7 | 192.0 | 125.2 | 83.1 | 84.3 | 84.3 | 84.8 | 42.9 | 111.6 |
| | Hydroxy group-containing vinyl monomer (m1) | 2-Hydroxyethyl methacrylate | - | 1.4 | - | - | 29.0 | 11.6 | - | - | - | 11.6 |
| | Carboxy group-containing vinyl monomer (m2) | Methacrylic acid | 6.1 | 7.7 | 9.2 | 11.5 | 6.1 | 7.7 | 9.2 | 11.5 | 15.3 | 6.1 |
| | Ester group-containing vinyl monomer (m4) | Methyl methacrylate | - | 192.5 | - | - | 122.9 | 195.2 | 68.8 | 110.8 | 168.6 | 45.1 |
| | | 2-Ethylhexyl acrylate | 18.6 | - | 55.6 | 70.7 | - | - | - | - | - | - |
| | | i-Butyl methacrylate | 157.0 | 47.7 | | 175.9 | 9.3 | 41.3 | 14.1 | 20.2 | 128.0 | 29.4 |
| Monomer components (parts) | | n-Butyl acrylate | 37.9 | 245.7 | 65.7 | 36.7 | 232.4 | 151.5 | 341.8 | 188.9 | 75.8 | 284.1 |
| | | n-Butyl methacrylate | - | - | 165.5 | - | - | - | - | - | - | - |
| | | 1,6-Hexanediol dimethacrylate | 5.0 | - | 10.0 | 5.0 | 2.5 | 5.0 | 5.0 | 5.0 | 5.0 | - |
| | Vinyl hydrocarbon (m5) | Styrene | 25.0 | - | 50.0 | 75.0 | 14.2 | 25.0 | 30.0 | 100.0 | 750 | 40.0 |
| | Amino group-containing vinyl monomer (m6) | Dimethylaminoethyl acrylate | - | - | - | - | - | - | - | 63.6 | - | - |
| | | Monomethylaminoethyl acrylate | - | - | - | - | - | - | - | - | - | - |
| | Epoxy group-containing vinyl monomer (m7) | Glycidyl methacrylate | - | - | - | - | - | - | - | - | - | - |
| | Alkoxysilyl group-containing vinyl monomer (m8) | 3-Methacryloyloxypropyltrimethoxysilane | - | - | - | - | - | - | - | - | - | - |
| | Oxazoline group-containing vinyl monomer (m10) | 2-Vinyl-5-methyl-2-oxazoline | - | - | - | - | - | - | - | - | - | - |
| | Urethane or urea group-containing vinyl monomer (m15) | UF-8001 G | - | - | - | - | - | - | - | - | - | - |
| Surfactant (C) (parts) | LATEMUL PD-104 (parts) | | 37.5 | - | - | 37.5 | - | - | 37.5 | - | - | 37.5 |
| | AQUALON KH-1025 (parts) | | - | 30 | - | - | 30 | - | - | 30 | - | - |
| | IONET MO-200 (parts) | | - | - | 7.5 | - | - | 7.5 | - | - | 7.5 | - |
| Polymerization initiator (parts) | Ammonium persulfate (parts) | | 1.0 | 1.0 | 1.0 | 1.0 | 1.0 | 1.0 | 1.0 | 1.0 | 1.0 | 1.0 |
| Reductant (parts) | Sodium thiosulfate (parts) | | - | - | - | - | - | - | - | - | - | - |
| pH-adjusting amine (neutralizing agent) (parts) | | Type | 25 wt% Ammonia water | | | | Dimethylmonoethanolamine | | | | | |
| | | Amount | 4.8 | 6.1 | 7.3 | 9.1 | 6.3 | 7.9 | 9.5 | 11.9 | 15.9 | 6.3 |
| Ion exchange water (parts) | | | 500 | 500 | 500 | 500 | 500 | 500 | 500 | 500 | 500 | 500 |

| | | | | | | | | | | | | |
|---|---|---|---|---|---|---|---|---|---|---|---|---|
| * Example 9 being a Reference Example | | | | | | | | | | | | |

**[Table 7]**

| | | | Examples | | | | | | | | | |
|---|---|---|---|---|---|---|---|---|---|---|---|---|
| | | | 11 | 12 | 13 | 14 | 15 | 16 | 17 | 18 | 19 | 20 |
| Type of vinyl resin aqueous dispersion | | | V1E-11 | V1E-12 | V1E-13 | V1E-14 | V1E-15 | V1E-16 | V1E-17 | V1E-18 | V1E-19 | V1E-20 |
| | Monomer (X), solvent solution of monomer (X), or monomer solution of (X) | Type | (X-9) | (X-10) acetone solution | (X-11) acetone solution | (X-12) acetone solution | (X-13) acetone solution | (X-5) styrene solution | (X-1) isobutyl methacrylate solution | (X-5) styrene solution | (X-9) | (X-1) isobutyl methacrylate solution |
| | | Amount | 62.4 | 114.4 | 137.6 | 123.2 | 166.7 | 83.1 | 250.4 | 83.1 | 62.4 | 250.4 |
| | Hydroxy-containing vinyl monomer (m1) | 2-Hydroxyethyl methacrylate | - | 17.4 | 34.8 | - | - | 29.0 | - | 29.0 | - | - |
| | Carboxy-containing vinyl monomer (m2) | Methacrylic acid | 7.7 | 9.2 | 11.5 | 6.1 | 15.3 | - | 6.1 | 6.1 | 7.7 | 6.1 |
| | Ester group-containing vinyl monomer (m4) | Methyl methacrylate | 86.6 | 62.4 | 29.5 | - | - | 110.8 | - | 122.9 | 86.6 | - |
| | | 2-Ethylhexyl acrylate | - | - | - | 34.3 | 77.9 | - | 18.6 | - | - | 18.6 |
| Monomer components (parts) | | i-Butyl methacrylate | 47.2 | 24.5 | 37.5 | 130.5 | 201.9 | 27.7 | 157.0 | 9.8 | 47.2 | 151.4 |
| | | n-Butyl acrylate | 231.2 | 225.8 | 233.5 | 176.7 | 4.8 | 222.6 | 37.9 | 232.4 | 231.2 | 37.9 |
| | | n-Butyl methacrylate | - | - | - | - | - | - | - | - | - | - |
| | | 1,6-Hexanediol dimethacrylate | 5.0 | - | - | 10.0 | - | 2.5 | 5.0 | 2.5 | 5.0 | 5.0 |
| | Vinyl hydrocarbon (m5) | Styrene | 60.0 | 75.0 | 50.0 | 50.0 | 75.0 | 14.2 | 25.0 | 14.2 | 60.0 | 25.0 |
| | Amino group-containing vinyl monomer (m6) | Dimethylaminoethyl acrylate | - | - | - | - | - | 10.2 | - | - | - | - |
| | | Monomethylaminoethyl acrylate | - | - | - | - | - | - | - | - | - | 5.7 |
| | Epoxy group-containing vinyl monomer (m7) | Glycidyl methacrylate | - | - | - | - | - | - | - | - | - | - |
| | Alkoxysilyl group-containing vinyl monomer (m8) | 3-Methacryloyloxypropyltrimethoxysilane | - | - | - | - | - | - | - | - | - | - |
| | Oxazoline group-containing vinyl monomer (m10) | 2-Vinyl-5-methyl-2-oxazoline | - | - | - | - | - | - | - | - | - | - |
| | Urethane or urea group-containing vinyl monomer (m15) | UF-8001 G | - | - | - | - | - | - | - | - | - | - |
| Surfactant (C) (parts) | LATEMUL PD-104 (parts) | | - | - | 37.5 | - | - | - | 37.5 | - | - | 37.5 |
| | AQUALON KH-1025 (parts) | | 30 | - | - | 30 | - | 30 | - | 30 | - | - |
| | IONET MO-200 (parts) | | - | 7.5 | - | - | 7.5 | - | - | - | - | - |
| Polymerization initiator (parts) | Ammonium persulfate (parts) | | 1.0 | 1.0 | 1.0 | 1.0 | 1.0 | 1.0 | 0.5 | 0.5 | 0.5 | 1.0 |
| Reductant (parts) | Sodium thiosulfate (parts) | | - | - | - | - | - | - | 0.5 | 0.5 | 0.5 | - |
| pH-adjusting amine (neutralizing agent) (parts) | | Type | 25 wt% Ammonia water | | Dimethylmonoethanolamine | | 25 wt% Ammonia water | Not used | 25 wt% Ammonia water | Triethylamine | Dimethylmonoethanolamine | 25 wt% Ammonia water |
| | | Amount | 6.1 | 7.3 | 11.9 | 6.3 | 12.1 | | 4.8 | 7.2 | 7.9 | 4.8 |
| Ion exchange water (parts) | | | 500 | 500 | 500 | 500 | 500 | 500 | 500 | 500 | 500 | 500 |

**[Table 8]**

| | | | Examples | | | | | | | | | |
|---|---|---|---|---|---|---|---|---|---|---|---|---|
| | | | 21 | 22 | 23 | 24 | 25 | 26 | 27 | 28 | 29 | 30 |
| Type of vinyl resin aqueous dispersion | | | V1E-21 | V1E-22 | V1E-23 | V1E-24 | V1 E-25 | V1E-26 | V1E-27 | V1E-28 | V1E-29 | V1E-30 |
| | Monomer (X), solvent solution of monomer (X), or monomer solution of (X) | Type | (X-2) acetone solution | (X-14) acetone solution | (X-14) acetone solution | (X-14) acetone solution | (X-14) acetone solution | (X-14) acetone solution | (X-14) acetone solution | (X-14) acetone solution | (X-14) acetone solution | (X-14) acetone solution |
| | | Amount | 6.7 | 83.1 | 84.3 | 84.3 | 73.93 | 18.48 | 166.34 | 18.91 | 18.91 | 168.21 |
| | Hydroxy-containing vinyl monomer (m1) | 2-Hydroxyethyl methacrylate | 1.4 | 29.0 | 11.6 | - | 1.24 | 1.24 | 1.24 | 31.28 | 31.28 | 31.28 |
| | Carboxy-containing vinyl monomer (m2) | Methacrylic acid | 7.7 | 6.1 | 7.7 | 9.2 | 10.57 | 6.82 | 27.29 | 10 | 6.9 | 27.59 |
| | Ester group-containing vinyl monomer (m4) | Methyl methacrylate | 174.8 | 122.9 | 167.5 | 68.8 | 99.73 | 21.16 | 6.14 | - | - | 86.36 |
| | | 2-Ethylhexyl acrylate | - | - | - | - | 186.79 | 355.19 | 27.18 | - | - | - |
| Monomer components (parts) | | i-Butyl methacrylate | 47.7 | 9.8 | 41.8 | 14.1 | - | - | - | 222.64 | 54.62 | 52.23 |
| | | n-Butyl acrylate | 228.0 | 226.2 | 122.5 | 164.6 | - | - | - | 102.14 | 273.26 | 56.62 |
| | | n-Butyl methacrylate | - | - | - | - | - | - | - | - | - | - |
| | | 1.6-Hexanediol dimethacrylate | - | 2.5 | 5.0 | 5.0 | - | - | - | - | - | - |
| | Vinyl hydrocarbon (m5) | Styrene | - | 35.0 | 25.0 | 30.0 | 89 | 44.5 | 11125 | 69.75 | 69.75 | 69.75 |
| | Amino group-containing vinyl monomer (m6) | Dimethylaminoethyl acrylate | - | - | - | - | - | - | - | - | - | - |
| | | Monomethylaminoethyl acrylate | - | - | - | 177.2 | - | - | - | - | - | - |
| | Epoxy group-containing vinyl monomer (m7) | Glycidyl methacrylate | 35.5 | - | - | - | - | - | - | - | - | - |
| | Alkoxysilyl group-containing vinyl monomer (m8) | 3-Methacryloyloxypropyltrimethoxysilane | - | 6.21 | - | - | 2.22 | 2.23 | 147.15 | - | - | - |
| | Oxazoline group-containing vinyl monomer (m10) | 2-Vinyl-5-methyl-2-oxazoline | - | - | 55.5 | - | - | - | - | - | - | - |
| | Urethane or urea group-containing vinyl monomer (m15) | UF-8001 G | - | - | - | - | - | - | - | - | - | - |
| Surfactant (C) (parts) | LATEMUL PD-104 (parts) | | - | - | - | 37.5 | - | - | - | - | - | - |
| | AQUALON KH-1025 (parts) | | 30 | 30 | - | - | 44.5 | 88.9 | 17.8 | 36 | 90 | 18 |
| | IONET MO-200 (parts) | | - | - | 7.5 | - | - | - | - | - | - | - |
| Polymerization initiator (parts) | Ammonium persulfate (parts) | | 1.0 | 1.0 | 1.0 | 1.0 | 1.34 | 1.34 | 1.34 | 1.35 | 1.35 | 1.35 |
| Reductant (parts) | Sodium thiosulfate (parts) | | - | - | - | - | 1.34 | 1.34 | 1.34 | - | - | - |
| pH-adjusting amine (neutralizing agent) (parts) | | Type | 25 wt% Ammonia water | Dimethylmonoethanolamine | | | 25 wt% Ammonia water | | | Dimethylmonoethanolamine | | |
| | | Amount | 6.1 | 6.3 | 7.9 | 9.5 | 8.4 | 5.4 | 21.6 | 10.3 | 7.1 | 28.6 |
| Ion exchange water (parts) | | | 500 | 500 | 500 | 532 | 503 | 454 | 488 | 513 | 454 | 489 |

**[Table 9]**

| | | | Examples | | | | | | | | Comparative Example |
|---|---|---|---|---|---|---|---|---|---|---|---|
| | | | 31 | 32 | 33 | 34 | 35 | 36 | 37 | 38 | 1 |
| Type of vinyl resin aqueous dispersion | | | V1E-31 | V1E-32 | V1E-33 | V1E-34 | V1E-35 | V1E-36 | V1E-37 | V1E-38 | V1E-1 |
| | Monomer (X), solvent solution of monomer (X), or monomer solution of (X) | Type | (X-14) acetone solution | (X-15) acetone solution | (X-16) acetone solution | (X-17) acetone solution | (X-18) acetone solution | (X-19) acetone solution | (X-20) MEK solution | (X-14) acetone solution | - |
| | | Amount | 18.91 | 70.49 | 70.49 | 73.93 | 16.5 | 22.02 | 12.3 | 20.99 | - |
| | Hydroxy-containing vinyl monomer (m1) | 2-Hydroxyethyl methacrylate | 31.28 | 1.24 | 1.24 | 1.24 | 31.28 | 31.28 | 31.28 | 34.74 | - |
| | monomer (m1) Carboxy-containing vinyl monomer (m2) | Mothacrylic acid | 10 | 10.57 | 10.57 | 10.57 | 10 | 10 | 10 | 11.11 | 6.1 |
| | Ester group-containing vinyl monomer (m4) | Methyl methacrylate | - | 101.8 | 101.8 | 99.73 | - | - | - | - | 187.8 |
| | | 2-Ethylhexyl acrylate | - | 187.3 | 187.3 | 186.79 | - | - | - | - | 18.6 |
| | | i-Butyl methacrylate | 216.73 | - | - | - | 231.39 | 227.19 | 234.58 | 222.22 | 219.6 |
| Monomer components (parts) | | n-Butyl acrylate | 103.56 | - | - | - | 95.3 | 95.35 | 95.26 | 113.75 | 37.9 |
| | | n-Butyl methacrylate | - | - | - | - | - | - | - | - | - |
| | | 1,6-Hexanediol dimethacrylate | 4.5 | - | - | - | - | - | - | - | 5.0 |
| | Vinyl hydrocarbon (m5) | Styrene | 69.75 | 89 | 89 | 89 | 69.75 | 69.75 | 69.75 | 77.45 | 25.0 |
| | Amino group-containing vinyl monomer (m6) | Dimethylaminoethyl acrylate | - | - | - | - | - | - | - | - | - |
| | | Monomethylaminoethyl acrylate | - | - | - | - | - | - | - | - | - |
| | Epoxy group-containing vinyl monomer (m7) | Glycidyl methacrylate | - | - | - | - | - | - | - | - | - |
| | Alkoxysilyl group-containing vinyl monomer (m8) | 3-Methacryloyloxypropyltrimethoxysilane | - | 2.22 | 2.22 | 2.22 | - | - | - | - | - |
| | Oxazoline group-containing vinyl monomer (m10) | 2-Vinyl-5-methyl-2-oxazoline | - | - | - | - | - | - | - | - | - |
| | monomer (m10) Urethane or urea group-containing vinyl monomer (m15) | UF-8001 G | - | - | - | - | - | - | - | 25 | - |
| Surfactant (C) (parts) | LATEMUL PD-104 (parts) | | - | - | - | - | - | - | - | - | 37.5 |
| | AQUALON KH-1025 (parts) | | 36 | 44.5 | 35.6 | 44.5 | 36.01 | 36.01 | 36.01 | 40 | - |
| | IONET MO-200 (parts) | | - | - | - | - | - | - | - | - | - |
| Polymerization initiator (parts) | Ammonium persulfate (parts) | | 1.35 | 1.33 | 1.33 | 1.33 | 1.35 | 1.35 | 1.35 | 1.5 | 1.0 |
| Reductant (parts) | Sodium thiosulfate (parts) | | - | 1.33 | - | 1.33 | - | - | - | 1.5 | - |
| pH-adjusting amine (neutralizing agent) (parts) | | Type | Dimethylmonoethanolamine | 25 wt% Ammonia water | | | Dimethylmonoethanolamine | | | | 25 wt% Ammonia water |
| | | Amount | 10.3 | 8.4 | 8.4 | 8.4 | 10.3 | 10.3 | 10.3 | 11.5 | 4.8 |
| Ion exchange water (parts) | | | 507.93 | 475.28 | 486.27 | 474.41 | 485.6 | 484.22 | 486.65 | 450.9 | 500 |

### Examples 40 to 52, 56, 60, 63, 67, 71 to 74, 78 to 81, and 85 to 94 (Example 48 being a Reference Example)

The vinyl resin aqueous dispersion (V1E) and the polyurethane resin aqueous dispersion (PE) shown in Table 10 or Table 11 were mixed at a mixing ratio by solids content shown in Table 10 or Table 11 to provide resin aqueous dispersions (M-1) to (M-13), (M-17), (M-21), (M-24), (M-28), (M-32) to (M-35), (M-39) to (M-42), and (M-46) to (M-55) containing a vinyl resin and a polyurethane resin.

### Examples 53, 57, 61, 64, 68, 75, and 82

Resin aqueous dispersions (M-14), (M-18), (M-22), (M-25), (M-29), (M-36), and (M-43) containing a vinyl resin and a polyurethane resin were prepared in the same manner as the production of polyurethane resin aqueous dispersion (PE-2) in Production Example 22 except that the vinyl resin aqueous dispersion (V1E) shown in Table 10 or Table 11 was used instead of ion exchange water and the composition of the resins in the polyurethane resin aqueous dispersion shown in Table 10 or Table 11 was used instead of the composition of the resins in the polyurethane resin aqueous dispersion (PE-2).

### Examples 54, 58, 62, 65, 69, 76, and 83

Resin aqueous dispersions (M-15), (M-19), (M-23), (M-26), (M-30), (M-37), and (M-44) containing a vinyl resin and a polyurethane resin were prepared in the same manner as the production of vinyl resin aqueous dispersion (V1E-15) in Example 15 except that the polyurethane resin aqueous dispersion (PE) shown in Table 10 or Table 11 was used instead of ion exchange water and the composition of the resins in the vinyl resin aqueous dispersion shown in Table 10 or Table 11 was used instead of the composition of the resins in the vinyl resin aqueous dispersion (V1E-15).

### Examples 55, 59, 66, 70, 77, and 84

Resin aqueous dispersions (M-16), (M-20), (M-27), (M-31), (M-38), and (M-45) containing a vinyl resin and a polyurethane resin were prepared in the same manner as the production of polyurethane resin aqueous dispersion (PE-4) in Production Example 24 except that the vinyl resin aqueous dispersion (V1E) shown in Table 10 or Table 11 was used instead of ion exchange water and the composition of the resins in the polyurethane resin aqueous dispersion shown in Table 10 or Table 11 was used instead of the composition of the resins in the polyurethane resin aqueous dispersion (PE-4).

### Example 95

The solution (V1J-1) of vinyl resin in MEK produced in Example 39 and the solution (PJ-1) of polyurethane resin in MEK produced in Production Example 43 were mixed at a mixing ratio by solids content of 1:1 to provide a solution (M-56) containing a vinyl resin and a polyurethane resin in MEK.

### Comparative Examples 2 and 3

The vinyl resin aqueous dispersion (V1E'-1) for comparison produced in Comparative Example 1 and the polyurethane resin aqueous dispersion (PE-1) or (PE-4) produced in Production Example 21 or Production Example 24 were mixed at the mixing ratio by solids content shown in Table 11 to provide a resin aqueous dispersion (M'-1) or (M'-2) containing a vinyl resin and a polyurethane resin.

**[Table 10]**

| | | Type of (V1 E)/(PE) mixture | Type of vinyl resin aqueous dispersion (V1E) | Type of polyurethane resin aqueous dispersion (PE) | Ratio of mixing solids content (V1 E):(PE) | | Mixing method |
|---|---|---|---|---|---|---|---|
| | | | | | (V1E) | (PE) | |
| | 40 | M-1 | V1E-1 | PE-1 | 1 | 0.1 | m-1 |
| | 41 | M-2 | V1E-2 | PE-2 | 1 | 0.1 | m-1 |
| | 42 | M-3 | V1E-3 | PE-3 | 1 | 1 | m-1 |
| | 43 | M-4 | V1E-4 | PE-4 | 1 | 1 | m-1 |
| | 44 | M-5 | V1E-5 | PE-1 | 1 | 1 | m-1 |
| | 45 | M-6 | V1E-6 | PE-2 | 1 | 1 | m-1 |
| | 46 | M-7 | V1E-7 | PE-3 | 1 | 1 | m-1 |
| | 47 | M-8 | V1E-8 | PE-4 | 1 | 3 | m-1 |
| | 48* | M-9 | V1E-9 | PE-1 | 1 | 3 | m-1 |
| | 49 | M-10 | V1E-10 | PE-2 | 1 | 10 | m-1 |
| | 50 | M-11 | V1E-11 | PE-3 | 1 | 10 | m-1 |
| | 51 | M-12 | V1E-12 | PE-4 | 1 | 0.2 | m-1 |
| | 52 | M-13 | V1E-13 | PE-1 | 1 | 0.2 | m-1 |
| | 53 | M-14 | V1E-14 | PE-2 | 1 | 0.6 | m-2 |
| Examples | 54 | M-15 | V1E-15 | PE-3 | 1 | 0.6 | m-3 |
| | 55 | M-16 | V1E-16 | PE-4 | 1 | 0.7 | m-4 |
| | 56 | M-17 | V1E-18 | PE-1 | 1 | 1 | m-1 |
| | 57 | M-18 | V1E-18 | PE-5 | 1 | 1 | m-2 |
| | 58 | M-19 | V1E-19 | PE-6 | 1 | 1 | m-3 |
| | 59 | M-20 | V1E-19 | PE-7 | 1 | 1 | m-4 |
| | 60 | M-21 | V1E-19 | PE-9 | 1 | 1 | m-1 |
| | 61 | M-22 | V1E-19 | PE-11 | 1 | 1 | m-2 |
| | 62 | M-23 | V1E-20 | PE-12 | 1 | 1 | m-3 |
| | 63 | M-24 | V1E-20 | PE-14 | 1 | 1 | m-1 |
| | 64 | M-25 | V1E-20 | PE-15 | 1 | 1 | m-2 |
| | 65 | M-26 | V1E-21 | PE-15 | 1 | 1 | m-3 |
| | 66 | M-27 | V1E-22 | PE-16 | 1 | 1 | m-4 |
| | 67 | M-28 | V1E-23 | PE-17 | 1 | 1 | m-1 |
| | 68 | M-29 | V1E-24 | PE-17 | 1 | 1 | m-2 |

| | | | | | | | |
|---|---|---|---|---|---|---|---|
| * Example 48 being a Reference Example | | | | | | | |

**[Table 11]**

| | | Type of (V1 E)/(PE) mixture | Type of vinyl resin aqueous dispersion (V1E) | Type of polyurethane resin aqueous dispersion (PE) | Ratio of mixing solids content (V1E):(PE) | | Mixing method |
|---|---|---|---|---|---|---|---|
| | | | | | (V1E) | (PE) | |
| | 69 | M-30 | V1E-21 | PE-18 | 1 | 1 | m-3 |
| | 70 | M-31 | V1E-22 | PE-19 | 1 | 1 | m-4 |
| | 71 | M-32 | V1E-23 | PE-20 | 1 | 1 | m-1 |
| | 72 | M-33 | V1E-24 | PE-20 | 1 | 1 | m-1 |
| | 73 | M-34 | V1E-25 | PE-4 | 1 | 1 | m-1 |
| | 74 | M-35 | V1E-25 | PE-21 | 1 | 1 | m-1 |
| | 75 | M-36 | V1E-25 | PE-21 | 1 | 1 | m-2 |
| | 76 | M-37 | V1E-25 | PE-21 | 1 | 1 | m-3 |
| | 77 | M-38 | V1E-25 | PE-21 | 1 | 1 | m-4 |
| | 78 | M-39 | V1E-26 | PE-21 | 1 | 1 | m-1 |
| | 79 | M-40 | V1E-27 | PE-21 | 1 | 1 | m-1 |
| | 80 | M-41 | V1E-28 | PE-4 | 1 | 1 | m-1 |
| Examples | 81 | M-42 | V1E-28 | PE-21 | 1 | 1 | m-1 |
| | 82 | M-43 | V1E-28 | PE-4 | 1 | 1 | m-2 |
| | 83 | M-44 | V1E-28 | PE-4 | 1 | 1 | m-3 |
| | 84 | M-45 | V1E-28 | PE-4 | 1 | 1 | m-4 |
| | 85 | M-46 | V1E-29 | PE-4 | 1 | 1 | m-1 |
| | 86 | M-47 | V1E-30 | PE-4 | 1 | 1 | m-1 |
| | 87 | M-48 | V1E-31 | PE-4 | 1 | 1 | m-1 |
| | 88 | M-49 | V1E-32 | PE-21 | 1 | 1 | m-1 |
| | 89 | M-50 | V1E-33 | PE-21 | 1 | 1 | m-1 |
| | 90 | M-51 | V1E-34 | PE-21 | 1 | 1 | m-1 |
| | 91 | M-52 | V1E-35 | PE-4 | 1 | 1 | m-1 |
| | 92 | M-53 | V1E-36 | PE-4 | 1 | 1 | m-1 |
| | 93 | M-54 | V1E-37 | PE-4 | 1 | 1 | m-1 |
| | 94 | M-55 | V1E-38 | PE-22 | 1 | 1 | m-1 |
| Comparative Examples | 2 | M'-1 | V1E'-1 | PE-1 | 1 | 1 | m-1 |
| | 3 | M'-2 | V1E'-1 | PE-4 | 1 | 1 | m-1 |

The symbols relating to the mixing methods in Table 10 and Table 11 mean as follows.
- m-1: a method of mixing a vinyl resin aqueous dispersion (V1E) and a polyurethane resin aqueous dispersion (PE)
- m-2: a method of dispersing a polyurethane resin (P) in a vinyl resin aqueous dispersion (V1E)
- m-3: a method of emulsion polymerizing vinyl monomers in a polyurethane resin aqueous dispersion (PE)
- m-4: a method of dispersing a urethane prepolymer in a vinyl resin aqueous dispersion (V1E) to cause chain extension, thereby preparing a polyurethane resin (P)

Table 12 to Table 14 show the physical properties of the vinyl resin aqueous dispersions (V1E-1) to (V1E-38) produced in Examples 1 to 38 (Example 9 being a Reference Example) and the solution (V1J-1) of vinyl resin in MEK produced in Example 39. Table 15 shows the physical properties of the polyurethane resin aqueous dispersions (PE-1) to (PE-22) produced in Production Examples 21 to 42 and the solution (PJ-1) of polyurethane resin in MEK produced in Production Example 43.

With respect to the resin aqueous dispersions (M-1) to (M-55) containing a vinyl resin and a polyurethane resin produced in Examples 40 to 94 (Example 48 being a Reference Example), the solution (M-56) containing a vinyl resin and a polyurethane resin in MEK produced in Example 95, and the resin aqueous dispersions (M'-1) and (M'-2) for comparison containing a vinyl resin and a polyurethane resin produced in Comparative Examples 2 and 3, the dispersibility, film formability, water resistance, and solvent resistance were evaluated by the following methods. Table 16 shows the results.

### <Method of evaluating dispersibility of polyurethane resin in vinyl resin>

An aqueous dispersion containing a vinyl resin and a polyurethane resin or a solution containing a vinyl resin and a polyurethane resin in a solvent was applied to a PET film (10 cm × 20 cm) using a bar coater. The workpiece was heated at 80°C for 3 minutes, and then at 140°C for 30 minutes, thereby providing a 10-µm-thick coating film. This coated PET film was cut into a size of 3 mm × 10 mm, and a sample film was cut out therefrom so as to have a width of 100 nm while being cooled down to -80°C using a ultramicrotome. The cross section of the coating film was observed at a magnification of 10000x using a transmission electron microscope, and the dispersibility was evaluated as follows.
○○: The size of each polyurethane resin domain was 500 nm or smaller.
○: The size of each polyurethane resin domain was larger than 500 nm but not larger than 1 µm.
×: The size of each polyurethane resin domain was larger than 1 µm.

### <Film formability of aqueous dispersion containing vinyl resin and polyurethane resin>

An aqueous dispersion (10 parts) containing a vinyl resin and a polyurethane resin was poured into a polypropylene mold having a size of 10 cm in length × 20 cm in width × 1 cm in depth in an amount which allows a film after desiccation to have a thickness of 200 µm. The workpiece was dried at 25°C for 48 hours, and then film formation was checked. The film formability was evaluated as "○○" when a film was formed, "○" when a film was substantially formed, and "x" when a film was not formed.

### <Water resistance of film>

An aqueous dispersion containing a vinyl resin and a polyurethane resin or a solvent solution containing a vinyl resin and a polyurethane resin (10 parts) was poured into a polypropylene mold having a size of 10 cm in length × 20 cm in width × 1 cm in depth in an amount which allows a film after desiccation to have a thickness of 200 µm. The workpiece was dried at room temperature for 12 hours, and then heat-dried at 80°C for 3 hours using an air-circulating dryer, thereby providing a film. The resulting film was immersed in ion exchange water at 80°C for 30 days, and the surface of the film was visually observed. A film with no change was evaluated as "○", and a film with whitening was evaluated as "×". The film taken out of the mold was dried, and the physical properties of the film were measured. A film having a rate of change in elongation at break after the immersion to before immersion of not less than 0.95 times was evaluated as "○○"; not less than 0.9 times but less than 0.95 times as "○"; not less than 0.8 times but less than 0.9 times as "Δ"; and less than 0.8 times as "×". The elongation at break was measured based on "5. Tensile test" in JIS K7311.

### <Solvent resistance of film>

An aqueous dispersion containing a vinyl resin and a polyurethane resin or a solvent solution containing a vinyl resin and a polyurethane resin (10 parts) was applied to a steel sheet having a size of 10 cm in length × 20 cm in width so as to allow a film after desiccation to have a thickness of 200 µm. The workpiece was dried at room temperature for 12 hours, and then heat-dried at 100°C for 3 hours in an air-circulating dryer, thereby providing a test piece. The resulting test piece was immersed in dimethylformamide at 25°C for 1 hour, and then the test piece was taken out of the dimethylformamide and the surface thereof was lightly wiped. The surface of the film was visually observed and the state was evaluated as follows.
○○: No change was observed on the surface of the film after immersion.
○: The film had less than 10 scabs on the surface after immersion.
Δ: The film had 10 or more scabs on the surface after immersion, but the resin was not dissolved in solution.
×: The film had 10 or more scabs on the surface after immersion, and the resin was dissolved in solution.

**[Table 12]**

| | | Examples | | | | | | | | | | | | |
|---|---|---|---|---|---|---|---|---|---|---|---|---|---|---|
| | | 1 | 2 | 3 | 4 | 5 | 6 | 7 | 8 | 9* | 10 | 11 | 12 | 13 |
| Type of vinyl resin aqueous dispersion or resin solution | | V1E-1 | V1E-2 | V1E-3 | V1E-4 | V1E-5 | V1E-6 | V1E-7 | V1E-8 | V1E-9 | V1E-10 | V1E-11 | V1E-12 | V1E-13 |
| Proportion of monomer (X) in monomer components (wt%) | | 37.6 | 1.0 | 32.7 | 25.0 | 12.5 | 12.5 | 11.2 | 12.7 | 6.4 | 16.7 | 12.5 | 17.2 | 20.6 |
| Tg of resin in vinyl resin aqueous dispersion (°C) | | 35 | 0 | 0 | 25 | 0 | 25 | -20 | 15 | 50 | -15 | 0 | 15 | -5 |
| Concentration of reactive group of resin (mmol/g) | Carboxyl | 0.14 | 0.18 | 0.24 | 0.27 | 0.14 | 0.18 | 0.20 | 0.27 | 0.76 | 0.14 | 0.18 | 0.21 | 027 |
| | Hydroxy | 0.90 | 0.04 | 0.91 | 0.60 | 0.85 | 0.58 | 0.36 | 0.58 | - | 0.79 | 0.40 | 0.63 | 1.34 |
| | Secondary amino | - | - | - | - | - | - | - | - | - | - | - | - | - |
| | Epoxy | - | - | - | - | - | - | - | - | - | - | - | - | - |
| | Alkoxysilyl | - | - | - | - | - | - | - | - | - | - | - | - | - |
| | Oxazoline | - | - | - | - | - | - | - | - | - | - | - | - | - |
| Number average molecular weight of resin (Mn) | | 25000 | 50000 | 76000 | 123000 | 93500 | 15000 | 30000 | 150000 | 30000 | 85000 | 121000 | 35000 | 40000 |
| Volume average particle size of resin (µm) | | 0.2 | 0.1 | 0.2 | 0.2 | 0.2 | 0.2 | 0.2 | 0.2 | 0.2 | 0.2 | 0.2 | 0.2 | 0.2 |

| | | | | | | | | | | | | | | |
|---|---|---|---|---|---|---|---|---|---|---|---|---|---|---|
| * Example 9 being a Reference Example | | | | | | | | | | | | | | |

**[Table 13]**

| | | Examples | | | | | | | | | | | | |
|---|---|---|---|---|---|---|---|---|---|---|---|---|---|---|
| | | 14 | 15 | 16 | 17 | 18 | 19 | 20 | 21 | 22 | 23 | 24 | 25 | 26 |
| Type of vinyl resin aqueous dispersion or resin solution | | V1E-14 | V1E-15 | V1E-16 | V1E-17 | V1E-18 | V1E-19 | V1 E-20 | V1E-21 | V1E-22 | V1E-23 | V1 E-24 | V1E-25 | V1E-26 |
| Proportion of monomer (X) in monomer components (wt%) | | 18.5 | 24.6 | 12.5 | 37.6 | 12.5 | 12.5 | 37.6 | 1.0 | 12.5 | 12.6 | 11.9 | 12.5 | 3.1 |
| Tg of resin in vinyl resin aqueous dispersion (°C) | | -5 | 30 | 0 | 35 | 0 | 0 | 35 | 0 | 0 | 30 | 10 | 0 | -50 |
| Concentration of reactive group of resin (mmol/g) | Carboxyl | 0.14 | 0.35 | - | 0.14 | 0.14 | 0.18 | 0.14 | 0.18 | 0.14 | 0.18 | 0.20 | 0.28 | 0.18 |
| | Hydroxy | 0.23 | - | 0.85 | 0.90 | 0.85 | 0.40 | 0.90 | 0.04 | 0.85 | 0.58 | 0.38 | 0.42 | 0.12 |
| | Secondary amino | - | - | - | - | - | - | 0.09 | - | - | - | 2.63 | - | - |
| | Epoxy | - | - | - | - | - | - | - | 0.50 | - | - | - | - | - |
| | Alkoxysilyl | - | - | - | - | - | - | - | - | 0.05 | - | - | 0.06 | 0.06 |
| | Oxazoline | - | - | - | - | - | - | - | - | - | 1.00 | - | - | - |
| Number average molecular weight of resin (Mn) | | 10000 | 28000 | 31000 | 68000 | 23000 | 43000 | 51000 | 18000 | 20000 | 41000 | 72000 | 30000 | 20000 |
| Volume average particle size of resin (µm) | | 0.2 | 0.2 | 0.2 | 0.2 | 0.2 | 0.2 | 0.2 | 0.2 | 0.2 | 0.2 | 0.2 | 0.2 | 0.3 |

**[Table 14]**

| | | Examples | | | | | | | | | | | | |
|---|---|---|---|---|---|---|---|---|---|---|---|---|---|---|
| | | 27 | 28 | 29 | 30 | 31 | 32 | 33 | 34 | 35 | 36 | 37 | 38 | 39 |
| Type of vinyl resin aqueous dispersion or resin solution | | V1E-27 | V1E-28 | V1E-29 | V1E-30 | V1E-31 | V1E-32 | V1E-33 | V1E-34 | V1E-35 | V1E-36 | V1E-37 | V1E-38 | V1J-1 |
| Proportion of monomer (X) in monomer components (wt%) | | 28 | 3.2 | 3.2 | 28 | 3.2 | 11.9 | 11.9 | 12.5 | 2.8 | 3.7 | 2.1 | 3.1 | 4.1 |
| Tg of resin in vinyl resin aqueous dispersion (°C) | | 30 | 23 | -20 | 50 | 23 | 0 | 0 | 0 | 25 | 25 | 25 | 25 | 25 |
| Concentration of reactive group of resin (mmol/g) | Carboxyl | 0.71 | 0.26 | 0.18 | 0.71 | 0.26 | 0.28 | 0.28 | 0.28 | 0.26 | 0.26 | 0.26 | 0.26 | 0.26 |
| | Hydroxy | 0.92 | 0.64 | 0.64 | 1.44 | 0.64 | 0.42 | 0.42 | 0.46 | 0.64 | 0.64 | 0.64 | 0.63 | 0.73 |
| | Secondary amino | - | - | - | - | - | - | - | - | - | - | - | - | - |
| | Epoxy | - | - | - | - | - | - | - | - | - | - | - | - | - |
| | Alkoxysilyl | 4 | - | - | - | - | 0.06 | 0.06 | 0.06 | - | - | - | - | - |
| | Oxazoline | - | - | - | - | - | - | - | - | - | - | - | - | - |
| Number average molecular weight of resin (Mn) | | 150000 | 20000 | 20000 | 150000 | N/A | 40000 | 25000 | 35000 | 15000 | 20000 | 20000 | 75000 | 60000 |
| Volume average particle size of resin (µm) | | 0.1 | 0.1 | 0.3 | 0.1 | 0.1 | 0.1 | 0.1 | 0.1 | 0.1 | 0.1 | 0.1 | 0.15 | - |

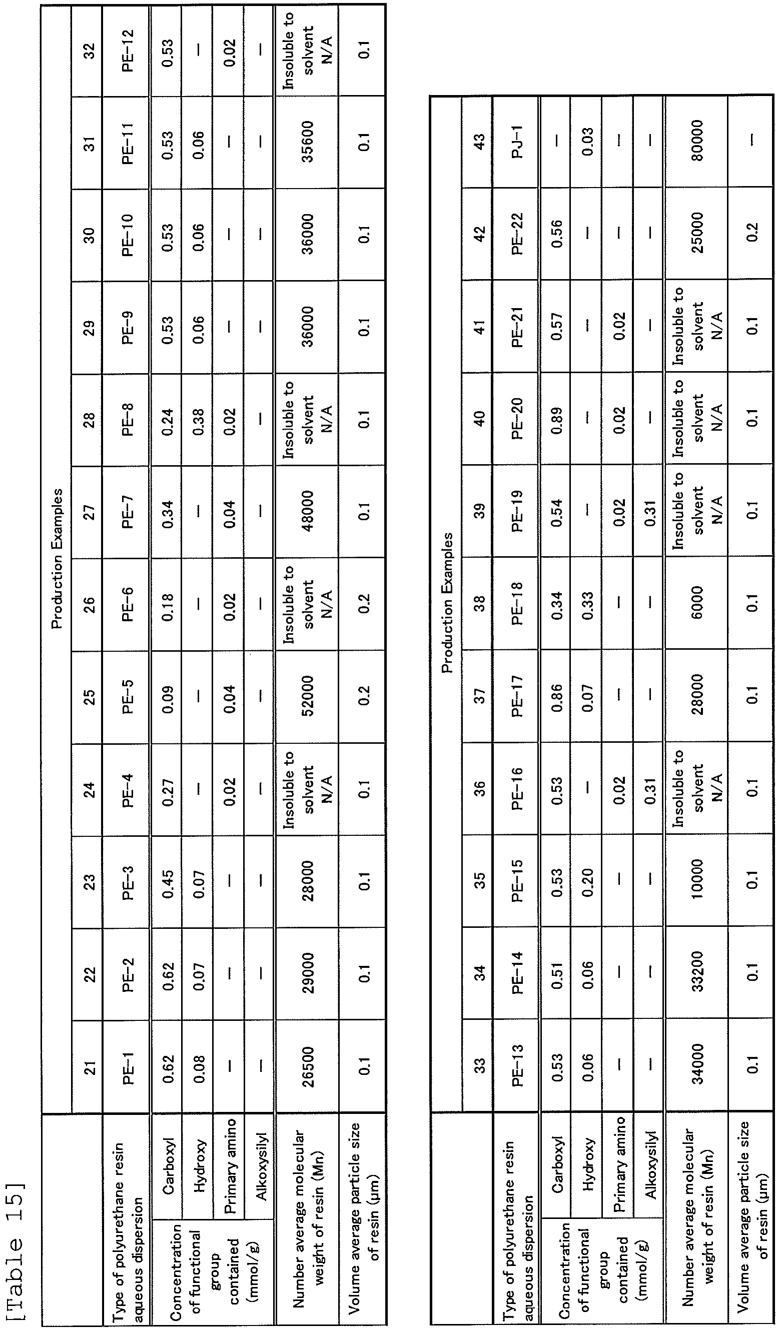

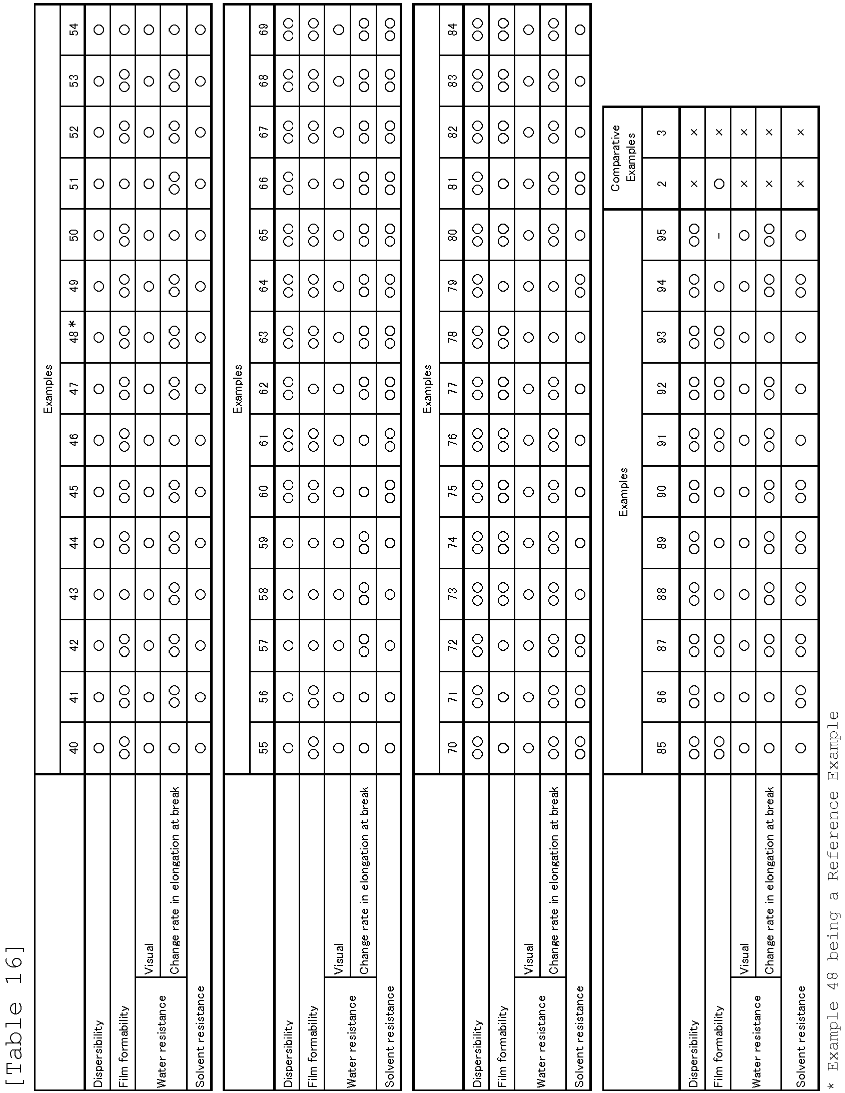

### Production Example 45 [production of polyurethane resin aqueous dispersion (PE-23)]

A simple pressure-resistant reactor equipped with a stirring device and a heating device was charged with polycarbonate diol having an Mn of 2,000 (DURANOL G4672, Asahi Kasei Chemicals Corp.) (34.86 parts), polycarbonate diol having an Mn of 2,000 (UH-200, Ube Industries, Ltd.) (5.46 parts), 1,4-butane diol (0.06 parts), 2,2-dimethylol propionic acid (5.22 parts), 4,4'-dicyclohexylmethane diisocyanate (23.73 parts), and acetone (1) (30.0 parts) while nitrogen was introduced thereinto. The components were then heated to 95°C to be urethanized for 5 hours, thereby providing a urethane prepolymer having an isocyanato group. The reaction solution was cooled down to 40°C, and acetone (2) (13.9 parts) and triethylamine (2.8 parts) were mixed therewith. Then, water (96.4 parts) was added thereto and the mixture was emulsified using a rotor/stator-type emulsifying machine, thereby providing an aqueous dispersion. Next, a 10% by weight diethylenetriamine aqueous solution (43.6 parts) and a 25% by weight ethylenediamine (6.0 parts) were added to the resulting aqueous dispersion under stirring. The components were then stirred at 50°C for 5 hours, thereby causing chain extension. Next, the acetone was evaporated at 65°C under reduced pressure, thereby providing a polyurethane resin aqueous dispersion (PE-23).

### Production Example 46 [production of vinyl resin aqueous dispersion (V2E-1) without monomer (X)]

A separable flask equipped with a dropping funnel for monomer dispersion, a dropping funnel for initiator solution, a stirring device, a reflux condenser, a thermometer, and a nitrogen introduction pipe was charged with ion exchange water (275.8 parts) and a reactive surfactant AQUALON KH-1025 (Dai-ichi Kogyo Seiyaku Co., Ltd.) (4.0 parts (solids content: 1.0 part)). The components were stirred while nitrogen was blown thereinto, and the temperature was increased to 70°C.

Next, a monomer dispersion was prepared which consisted of ion exchange water (143.3 parts), a reactive surfactant AQUALON KH-1025 (Dai-ichi Kogyo Seiyaku Co., Ltd.) (26.0 parts (solids content: 6.5 parts)), 2-ethylhexyl acrylate (251.8 parts), styrene (99.9 parts), methacrylic acid (10.0 parts), methyl methacrylate (136.6 parts), and 3-methacryloyloxypropyltrimethoxysilane (KBM-503, Shin-Etsu Chemical Co., Ltd.) (2.5 parts). The monomer dispersion was put into the dropping funnel for monomer dispersion, and 33.5 parts thereof was added to the separable flask.

Next, an initiator solution consisting of ammonium persulfate (1.0 part) and ion exchange water (19.0 parts) and a reductant solution consisting of sodium thiosulfate (1.0 part) and ion exchange water (19.0 parts) were prepared. The initiator solution and the reductant solution were put into the dropping funnel for initiator solution and the dropping funnel for reductant solution, respectively, and 2.0 parts each of the respective solutions was added to the separable flask to initiate polymerization. Then, the resulting monomer dispersion, the initiator solution, and the reductant solution were dropwise added to the flask over 3 hours at a uniform velocity while the temperature inside the reaction system was maintained at 70 ± 2°C. After the dropwise addition, the dropping funnel for monomer dispersion and the dropping funnel for reductant solution were each washed with ion exchange water (5 parts), and the washing liquids were added to the separable flask. The stirring was continued for 90 minutes at the same temperature, and then the temperature was cooled down to room temperature. Thereafter, 25% by weight ammonia water (3.0 parts) was added thereto and the mixture was stirred for 30 minutes, thereby providing a vinyl resin aqueous dispersion (V2E-1) without the monomer (X).

Table 17 shows the physical properties of the polyurethane resin aqueous dispersion (PE-23) produced in Production Example 45 and the vinyl resin aqueous dispersion (V2E-1) produced in Production Example 46.

**[Table 17]**

| | Examples | | Production Examples | |
|---|---|---|---|---|
| | 96 | 97 | 45 | 46 |
| Type of aqueous resin dispersion | V1E-39 | V1E-40 | PE-23 | V2E-1 |
| Number average molecular weight of resin (Mn) | 180,000 | 190,000 | Insoluble to solvent N/A | 200,000 |
| Volume average particle size of resin (µm) | 0.1 | 0.1 | 0.1 | 0.1 |

### Production Example 47 [production of compound (F-1) having 2 or more ethylenic unsaturated bond-containing groups in molecule]

A reaction tank equipped with a condenser, a stirring device, and a nitrogen introduction pipe was charged with dipentaerythritol (508 parts), acrylic acid (864 parts), and para toluene sulfonic acid (0.5 parts) as a condensation catalyst. The components were reacted at 110°C for 15 hours under nitrogen stream while the generated water was evaporated, thereby providing a compound (F-1) having 2 or more ethylenic unsaturated bond-containing groups in the molecule. The saponification value of the compound (F-1) was 573, and the number of ethylenic unsaturated bond-containing groups per molecule was 5.8. The saponification value was measured in conformity with JIS K0070-1992.

### Production Example 48 [production of aqueous dispersion (FE-1) of compound having 2 or more ethylenic unsaturated bond-containing groups in molecule]

A vessel equipped with a stirring device was charged with ion exchange water (10 parts), a surfactant (SANMORIN OT-70, Sanyo Chemical Industries, Ltd.) (0.5 parts), and benzyl alcohol (20 parts). The components were stirred for 10 minutes, thereby providing a benzyl alcohol aqueous dispersion. Next, the compound (F-1) (10 parts) produced in Production Example 47 was added thereto and the components were stirred for 10 minutes, thereby providing an aqueous dispersion (FE-1) of the compound having 2 or more ethylenic unsaturated bond-containing groups in the molecule.

### Production Example 49 [production of aqueous dispersion (FE-2) of compound having 2 or more ethylenic unsaturated bond-containing groups in molecule]

A vessel equipped with a stirring device was charged with ion exchange water (10 parts), a surfactant (SANMORIN OT-70, Sanyo Chemical Industries, Ltd.) (0.5 parts), and the compound (F-1) (10 parts) produced in Production Example 47. The components were then stirred for 10 minutes, thereby providing an aqueous dispersion (FE-2) of the compound having 2 or more ethylenic unsaturated bond-containing groups in the molecule.

### Example 96 [production of vinyl resin aqueous dispersion (V1E-39)]

A separable flask equipped with a dropping funnel for monomer dispersion, a dropping funnel for initiator solution, a stirring device, a reflux condenser, a thermometer, and a nitrogen introduction pipe was charged with ion exchange water (275.8 parts) and a reactive surfactant AQUALON KH-1025 (Dai-ichi Kogyo Seiyaku Co., Ltd.) (4.0 parts (solids content: 1.0 part)). The components were stirred while nitrogen was blown thereinto, and the temperature was increased to 70°C.

Next, a monomer dispersion was prepared which consisted of ion exchange water (143.3 parts), a reactive surfactant AQUALON KH-1025 (Dai-ichi Kogyo Seiyaku Co., Ltd.) (26.0 parts (solids content: 6.5 parts)), the monomer (X-9) (85.7 parts) produced in Production Example 9, 2-ethylhexyl acrylate (207.6 parts), styrene (82.4 parts), methacrylic acid (10.0 parts), methyl methacrylate (112.6 parts), and 3-methacryloyloxypropyltrimethoxysilane (KBM-503, Shin-Etsu Chemical Co., Ltd.) (2.5 parts). The monomer dispersion was then put into the dropping funnel for monomer dispersion, and 33.5 parts thereof was added to the separable flask.

Next, an initiator solution consisting of ammonium persulfate (1.0 part) and ion exchange water (19.0 parts) and a reductant solution consisting of sodium thiosulfate (1.0 part) and ion exchange water (19.0 parts) were prepared. The initiator solution and the reductant solution were put into the dropping funnel for initiator solution and the dropping funnel for reductant solution, respectively, and 2.0 parts each of the solutions was added to the separable flask to initiate polymerization. The remaining monomer dispersion, initiator solution, and reductant solution were dropwise added to the flask over 3 hours at a uniform velocity while the temperature inside the system was maintained at 70 ± 2°C. After the dropwise addition, the dropping funnel for monomer dispersion and the dropping funnel for reductant solution were each washed with ion exchange water (5 parts), and the washing liquids were added to the separable flask. The stirring was continued for 90 minutes at the same temperature, and then the temperature was cooled down to room temperature. Thereafter, 25% by weight ammonia water (3.0 parts) was added thereto and the components were stirred for 30 minutes, thereby providing a vinyl resin aqueous dispersion (V1E-39).

### Example 97 [production of vinyl resin aqueous dispersion (V1E-40)]

A vinyl resin aqueous dispersion (V1E-40) was produced in the same manner as in Example 96 except that the monomer (X-4) produced in Production Example 4 was used instead of the monomer (X-9) produced in Production Example 9.

Table 17 shows the physical properties of the vinyl resin aqueous dispersion (V1E-39) produced in Example 96 and the vinyl resin aqueous dispersion (V1E-40) produced in Example 97.

### Examples 98 to 101 and Comparative Example 4

The vinyl resin aqueous dispersions (V1E-39) and (V1E-40) produced in Examples 96 and 97, the vinyl resin aqueous dispersion (V2E-1) without a monomer (X) produced in Production Example 46, the polyurethane resin aqueous dispersion (PE-23) produced in Production Example 45, the aqueous dispersion (FE-1) of the compound (F-1) having 2 or more ethylenic unsaturated bond-containing groups in the molecule produced in Production Example 48, and the aqueous dispersion (FE-2) of the compound (F-1) produced in Production Example 49 were mixed at a mixing ratio shown in Table 18 (mixing ratio of active components), thereby providing resin aqueous dispersions (M-57) to (M-60) of the present invention and a resin aqueous dispersion (M'-4) for comparison. The term "active components" herein means the resin components in the vinyl resin aqueous dispersions and the polyurethane resin aqueous dispersions, and means the compound (F-1) for the aqueous dispersion (FE-1) of the compound (F-1).

Table 18 shows the evaluation results of the tensile strength at break of films formed from the resin aqueous dispersions (M-57) to (M-60) of the present invention produced in Examples 98 to 101 and the resin aqueous dispersion (M'-4) for comparison produced in Comparative Example 4; the weather resistance of coating films formed therefrom after the aqueous dispersions were formed into paints, each measured or evaluated by the following methods; and the evaluation results of the water resistance and the solvent resistance of the resins evaluated by the above methods.

### <Method of measuring tensile strength at break of film>

A resin aqueous dispersion whose solids content was preliminarily adjusted to 20% was calmly poured into a polypropylene mold and uniformly spread so as to allow a film after desiccation to have a thickness of about 200 µm. The dispersion was allowed to stand at 25°C for 24 hours, and then dried at 105°C for 3 hours in an air-circulating dryer and further dried under reduced pressure at 105°C and 1.3 kPa for 1 hour, thereby providing a resin film. The resulting resin film was formed into a sample with a shape of dumbbell No.3 in conformity with JIS K6251, and the tensile strength at break thereof was measured at a tensile rate of 500 mm/min using Autograph (AGS-500D, Shimadzu Corp.).

### <Method of evaluating weather resistance of coating film after formed into paint>

### 1. Production of paint for weather resistance evaluation

A polyethylene vessel was charged with ion exchange water (20 parts), titanium oxide (66 parts), an aqueous solution of dispersant OROTAN #731 (Japan Acrylic Chemical Co., Ltd.) having a preliminarily adjusted solids content of 10% by weight (6 parts), a defoamer SN-DEFOAMER 777 (SAN NOPCO LTD.) (0.2 parts), ethylene glycol (2 parts) as a wetting agent, and zirconia beads (500 parts). The components were kneaded for 1 hour using a paint conditioner (Red Devil Equipment Co.). The resulting dispersion was passed through a metal filter having an aperture size of 75 pm so that the zirconia beads were removed, thereby providing a pigment dispersion (G-1).

A glass vessel was charged with one of the resin aqueous dispersions (M-57) to (M-60) and (M'-4) having a preliminarily adjusted solids content of 38% by weight (70.3 parts), the pigment dispersion (G-1) (25.6 parts), an aqueous solution of a thickening agent Natrosol 250MR (Hercules Inc.) having a preliminarily adjusted solids content of 4% by weight (2.2 parts), an aqueous solution of a thickening agent ADEKA NOL UH-420 (ADEKA CORP.) having a preliminarily adjusted solids content of 10% by weight (1.1 parts), and a film-forming aid Texanol (2,2,4-trimethyl-1,3-pentanediol-2-methyl propanoate) (0.9 parts), and the components were kneaded for 3 minutes using a kneader (THINKY MIXER AR-550L-3,THINKY CORP.), thereby providing a paint for weather resistance test.

### 2. Method of evaluating weather resistance

The paint for weather resistance test was applied to a glass plate (10 cm in length × 10 cm in width × 0.5 cm in thickness) using a bar coater so as to allow the film after drying to have a thickness of 80 µm. This workpiece was dried for 24 hours in a constant-temperature and constant-humidity chamber at 25°C and 50%RH, thereby providing a sample for evaluation.

The resulting sample for evaluation was subjected to a weather resistance test (one test cycle includes 3.8-hour exposure at 73°C, 50%RH, and 75 mW/cm² and 1.0-hour non-exposure at 38°C and 95%RH; repeated 10 cycles) using a weatherometer (SUV-W151, IWASAKI ELECTRIC CO., LTD.). The glossinesses before and after the test were measured to give a retention rate of glossiness (glossiness after exposure/glossiness before exposure × 100 (%)). A retention rate of glossiness of not lower than 70% was evaluated as "○○", not lower than 50% but lower than 70% as "○", not lower than 30% but lower than 50% as "Δ", and lower than 30% as "×". The glossiness was measured at incident angle/reflex angle = 60°/60° using a glossmeter (VG-1D, NIPPON DENSHOKU INDUSTRIES CO., LTD.).

**[Table 18]**

| | | Examples | | | | Comparative Example |
|---|---|---|---|---|---|---|
| | | 98 | 99 | 100 | 101 | 4 |
| Type of aqueous resin dispersion mixture | | M-57 | M-58 | M-59 | M-60 | M'-4 |
| Mixing ratio (ratios of active components) | Vinyl resin aqueous dispersion (V1E-39) | 50 | 5 | - | 50 | |
| | Vinyl resin aqueous dispersion (V1 E-40) | - | - | 50 | - | - |
| | Vinyl resin aqueous dispersion (V2E-1) | - | 90 | - | - | 50 |
| | Polyurethane resin aqueous disperosion (PE-23) | 50 | 5 | 50 | 50 | 50 |
| | Aqueous dispersion (FE-1) of compound (F-1) | 5 | 0.5 | 5 | - | - |
| | Aqueous dispersion (FE-2) of compound (F-1) | - | - | - | 5 | - |
| Percent by weight of compound (F-1) based on weight of resin mixture (wt%) | | 5 | 0.5 | 5 | 5 | 0 |
| Tensile strength of skin (MPa) | | 33 | 30 | 33 | 30 | 15 |
| Weather resistance of coat | | ○○ | ○ | ○○ | ○○ | × |
| Water resistance | | ○○ | ○○ | ○○ | ○○ | Δ |
| Solvent resistance | | ○○ | ○○ | ○○ | ○○ | Δ |

### Examples 102 to 156 (Example 110 being a Reference Example) and Comparative Examples 5 and 6 [Evaluation as aqueous paint]

Ion exchange water (90 parts), a thickening agent (VISRIZER AP-2, Sanyo Chemical Industries, Ltd.) (70 parts), a pigment dispersant (CARRYBON L-400, Sanyo Chemical Industries, Ltd.) (10 parts), titanium oxide (CR-93, ISHIHARA SANGYO KAISHA, LTD.) (140 parts), carbon black (FW200P, DEGUSSA AG), and calcium carbonate (160 parts) were dispersion-mixed for 30 minutes using a paint conditioner. Thereto was added 1-nonanol (20 parts), Polytron Z330 (acrylic resin aqueous dispersion, Asahi Kasei Chemicals Corp.) (200 parts) as an aqueous dispersion of the vinyl resin (V2) other than the resin (V1) in the present invention, and one of the resin aqueous dispersions (M-1) to (M-55) produced in Examples 40 to 94 (Example 48 being a Reference Example) and the resin aqueous dispersions (M'-1) and (M'-2) produced in Comparative Examples 2 and 3 such that the ratio by weight between the amount of the vinyl resin in one of the dispersions (M-1) to (M-55) and (M'-1) and (M'-2) and the solid resin content in Polytron Z330 satisfied the value shown in Table 19 or Table 20. The components were dispersion-mixed for 10 minutes, and the viscosity of the mixture was adjusted to 150 mPa·s at 25°C using ion exchange water, thereby providing aqueous paints (E-1) to (E-55) and aqueous paints (E'-1) and (E'-2) for comparison.

**[Table 19]**

| | | Type of aqueous paint | Type of resin aqueous dispersion (M) containing vinyl resin and polyurethane resin | Ratio in solids content between resin (V1) and Polytron Z330 in dispersion (M) | |
|---|---|---|---|---|---|
| | | | | Solids content of resin (V1) in dispersion (M) | Solids content of Polytron Z330 in dispersion (M) |
| | 102 | E-1 | M-1 | 1 | 200 |
| | 103 | E-2 | M-2 | 1 | 100 |
| | 104 | E-3 | M-3 | 1 | 50 |
| | 105 | E-4 | M-4 | 1 | 20 |
| | 106 | E-5 | M-5 | 1 | 10 |
| | 107 | E-6 | M-6 | 1 | 5 |
| | 108 | E-7 | M-7 | 1 | 0.5 |
| | 109 | E-8 | M-8 | 1 | 0.5 |
| | 110* | E-9 | M-9 | 1 | 0.1 |
| | 111 | E-10 | M-10 | 1 | 0.01 |
| | 112 | E-11 | M-11 | 1 | 50 |
| | 113 | E-12 | M-12 | 1 | 25 |
| | 114 | E-13 | M-13 | 1 | 10 |
| | 115 | E-14 | M-14 | 1 | 10 |
| Examples | 116 | E-15 | M-15 | 1 | 5 |
| | 117 | E-16 | M-16 | 1 | 1 |
| | 118 | E-17 | M-17 | 1 | 10 |
| | 119 | E-18 | M-18 | 1 | 100 |
| | 120 | E-19 | M-19 | 1 | 50 |
| | 121 | E-20 | M-20 | 1 | 20 |
| | 122 | E-21 | M-21 | 1 | 10 |
| | 123 | E-22 | M-22 | 1 | 5 |
| | 124 | E-23 | M-23 | 1 | 0.5 |
| | 125 | E-24 | M-24 | 1 | 0.1 |
| | 126 | E-25 | M-25 | 1 | 50 |
| | 127 | E-26 | M-26 | 1 | 100 |
| | 128 | E-27 | M-27 | 1 | 10 |
| | 129 | E-28 | M-28 | 1 | 10 |
| | 130 | E-29 | M-29 | 1 | 5 |

| | | | | | |
|---|---|---|---|---|---|
| * Example 110 being a Reference Example | | | | | |

**[Table 20]**

| | | Type of aqueous paint | Type of resin aqueous dispersion (M) containing vinyl resin and polyurethane resin | Ratio in solids content between resin (V1) and Polytron Z330 in dispersion (M) | |
|---|---|---|---|---|---|
| | | | | Solids content of resin (V1) in dispersion (M) | Solids content of Polytron Z330 in dispersion (M) |
| | 131 | E-30 | M-30 | 1 | 1 |
| | 132 | E-31 | M-31 | 1 | 50 |
| | 133 | E-32 | M-32 | 1 | 10 |
| | 134 | E-33 | M-33 | 1 | 10 |
| | 135 | E-34 | M-34 | 1 | 9 |
| | 136 | E-35 | M-35 | 1 | 9 |
| | 137 | E-36 | M-36 | 1 | 9 |
| | 138 | E-37 | M-37 | 1 | 9 |
| | 139 | E-38 | M-38 | 1 | 9 |
| | 140 | E-39 | M-39 | 1 | 9 |
| | 141 | E-40 | M-40 | 1 | 9 |
| | 142 | E-41 | M-41 | 1 | 9 |
| Examples | 143 | E-42 | M-42 | 1 | 9 |
| | 144 | E-43 | M-43 | 1 | 9 |
| | 145 | E-44 | M-44 | 1 | 9 |
| | 146 | E-45 | M-45 | 1 | 9 |
| | 147 | E-46 | M-46 | 1 | 9 |
| | 148 | E-47 | M-47 | 1 | 9 |
| | 149 | E-48 | M-48 | 1 | 9 |
| | 150 | E-49 | M-49 | 1 | 1 |
| | 151 | E-50 | M-50 | 1 | 0.5 |
| | 152 | E-51 | M-51 | 1 | 9 |
| | 153 | E-52 | M-52 | 1 | 1 |
| | 154 | E-53 | M-53 | 1 | 0.5 |
| | 155 | E-54 | M-54 | 1 | 9 |
| | 156 | E-55 | M-55 | 1 | 9 |
| Comparative Examples | 5 | E'-1 | M'-1 | 1 | 1 |
| | 6 | E'-2 | M'-2 | 1 | 1 |

With respect to the resulting aqueous paints (E-1) to (E-55) and (E'-1) and (E'-2), the film formability of the paints and the water resistance and the solvent resistance of coating films formed therefrom were evaluated by the following test methods. Table 21 shows the results thereof.

### <Method of evaluating film formability of paint>

The aqueous paint was spray-applied to a steel sheet (10 cm × 20 cm), and heated at 80°C for 3 minutes to provide a 20-µm-thick coating film. This coated steel sheet was immersed in ion exchange water at 25°C for 10 minutes. The steel sheet was then taken out and the surface was lightly wiped with cloth. The product was then visually evaluated as follows.
○: No color staining occurred on the cloth.
×: Color staining occurred on the cloth.

### <Method of evaluating water resistance of coating film>

The aqueous paint was spray-applied to a steel sheet (10 cm × 20 cm), and heated at 80°C for 10 minutes to provide a 20-µm-thick coating film. This coated steel sheet was immersed in ion exchange water at 80°C for 30 days. The steel sheet was then taken out and the surface was lightly wiped with cloth. The surface of the coating film was visually evaluated as follows.
○: No change occurred on the surface of the coating film after the immersion.
×: The coating film was partially peeled off after the immersion.

### <Method of evaluating solvent resistance of coating film>

The aqueous paint was spray-applied to a steel sheet (10 cm × 20 cm), and heated at 140°C for 30 minutes to provide a 20-µm-thick coating film. This coated steel sheet was immersed in a 25% by weight solution of butyl cellosolve in water at 25°C for 15 minutes. The steel sheet was then taken out and the surface was lightly wiped with cloth. The surface of the coating film was visually evaluated as follows.
○○: No change occurred on the surface of the coating film after the immersion.
○: The area of portions peeled off after the immersion was smaller than 10% of the whole area of the coating film.
×: The area of portions peeled off after the immersion was not smaller than 10% of the whole area of the coating film.

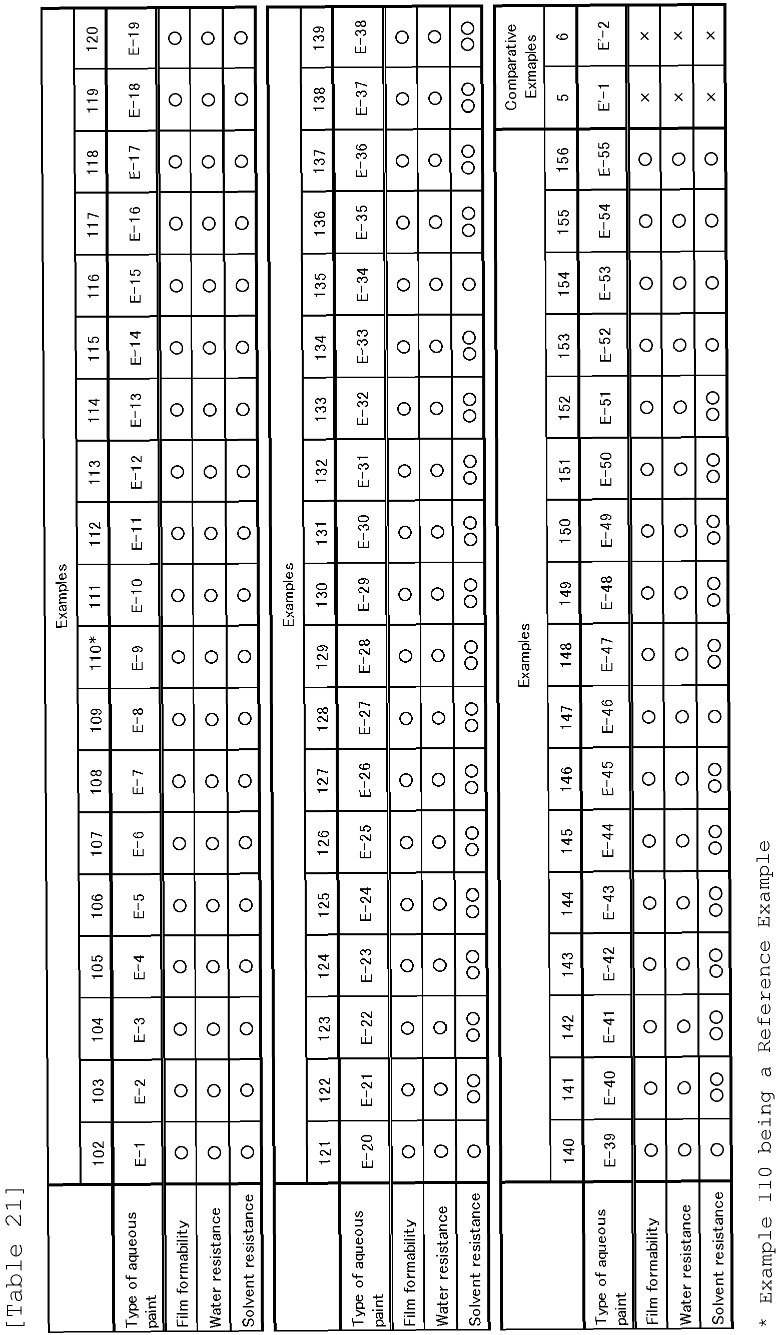

### Examples 157 to 160 and Comparative Examples 7 and 8

### [evaluation as aqueous anticorrosive coating agent]

Each of the resin aqueous dispersions (M-1) to (M-4) produced in Examples 40 to 43 and the resin aqueous dispersions (M'-1) and (M'-2) for comparison produced in Comparative Examples 2 and 3 was applied to ZINKOTE (zinc-plated steel sheet, Engineering Test Service, size: 10 cm in length × 5 cm in width × 0.08 cm in thickness) so as to allow a film after drying to have a thickness of 5 µm. The workpiece was dried for 1 minute in a 150°C dryer to provide a sample. With this sample, the anticorrosiveness of the coating film was evaluated as follows. Table 22 shows the results.

### <Method of evaluating anticorrosiveness of paint>

With the sample, the salt spray testing was performed in conformity with JIS Z2371. The appearance after 45 hours was visually evaluated as follows.
○: No corrosion occurred.
×: Corrosion occurred.

**[Table 22]**

| | Examples | | | | Comparative Examples | |
|---|---|---|---|---|---|---|
| | 157 | 158 | 159 | 160 | 7 | 8 |
| Anticorrosiveness | ○ | ○ | ○ | ○ | × | × |

### Examples 161 to 164 and Comparative Examples 9 and 10

### [evaluation as aqueous fiber-treating agent]

Each of the resin aqueous dispersions (M-1) to (M-4) produced in Examples 40 to 43 and the resin aqueous dispersions (M'-1) and (M'-2) for comparison produced in Comparative Examples 2 and 3, in an amount of 100 parts, was mixed with a rheology modifier (SN-THICKENER 618, SAN NOPCO LTD.) (8.9 parts), a silicon defoamer (SN-DEFOAMER 777, SAN NOPCO LTD.) (0.9 parts), water (35 parts), titanium oxide (44.6 parts), and a pigment (NL RED FR3R-D, Yamasou-jitsugyo) (18.9 parts), thereby providing pigment printing pastes (H-1) to (H-4) and pigment printing pastes (H'-1) and (H'-2) for comparison. With the resulting pigment printing pastes, the water resistance of pigment-printed fabric and the film formability of the pigment printing pastes were tested as follows. Table 23 shows the results.

### <Method of evaluating water resistance of pigment-printed fabric>

The pigment printing paste was applied to a cotton unbleached muslin pattern using a bar coater so as to have a size of 2 cm in length × 10 cm in width × 0.2 mm in thickness. This workpiece was dried for 5 minutes using a tenter set to 140°C, thereby providing a pigment-printed fabric. This pigment-printed fabric was immersed in ion exchange water at 60°C for 3 days and then taken out. The surface of the pigment-printed fabric was lightly wiped with unprinted fabric, and then visually evaluated as follows.
○: No color staining occurred on unprinted fabric.
×: Color staining occurred on unprinted fabric.

### <Method of evaluating film formability of pigment printing paste>

The pigment printing paste was applied to a cotton unbleached muslin pattern using a bar coater so as to have a size of 2 cm in length × 10 cm in width × 0.2 mm in thickness. This workpiece was dried for 3 minutes using a tenter set to 120°C, thereby providing a pigment-printed fabric. The surface of this pigment-printed fabric was lightly wiped with an unprinted fabric, and then visually evaluated as follows.
○: No color staining occurred on unprinted fabric.
×: Color staining occurred on unprinted fabric.

**[Table 23]**

| | Examples | | | | Comparative Examples | |
|---|---|---|---|---|---|---|
| | 161 | 162 | 163 | 164 | 9 | 10 |
| Type of pigment printing paste | H-1 | H-2 | H-3 | H-4 | H'-1 | H'-2 |
| Water resistance of pigment-printed fabric | ○ | ○ | ○ | ○ | × | × |
| Film formability of pigment printing paste | ○ | ○ | ○ | ○ | × | × |

### Examples 165 to 168 and Comparative Examples 11 and 12

### [evaluation as aqueous adhesive]

Each of the resin aqueous dispersions (M-43) to (M-46) produced in Examples 82 to 85 and the resin aqueous dispersions (M'-1) and (M'-2) for comparison produced in Comparative Examples 2 and 3 (474 parts) whose solids content was adjusted to 40% by weight using ion exchange water and an acrylic emulsion (trade name: Polytron U-154, Asahi Kasei Corp., solids content: 60% by weight) (158 parts, solids content: 94.8 parts) were mixed, thereby providing aqueous adhesives (G-1) to (G-4) and aqueous adhesives (G'-1) and (G'-2) for comparison each having a solids content of 45% by weight. With each aqueous adhesive, the normal adhesiveness to fiber-reinforced cement sheets was evaluated as follows. Table 24 shows the results.

### <Method of evaluating normal adhesiveness to fiber-reinforced cement sheets>

The resulting aqueous adhesive was brush-applied to a canvas and a fiber-reinforced cement sheet (width: 25 mm, length: 125 mm, thickness: 2.5 mm). The amount of the adhesive applied was 100 g/m² (solids content) for the canvas and 60 g/m² (solids content) for the fiber-reinforced cement sheet. The applied aqueous adhesive was dried for 4 minutes in a forced convection drying oven at 80°C, and then the aqueous-adhesive-applied surfaces of the canvas and the fiber-reinforced cement sheet were roll-pressed to each other at a pressure of 60 kg/25 mm, thereby providing a sample. The resulting sample was cured at 23°C for a week, and then subjected to a 90-degree peeling test at a tensile speed of 50 mm/min at 23°C. The sample was evaluated as follows.
○: The adhesive strength was not lower than 3.0 kg/25 mm.
Δ: The adhesive strength was not lower than 1.5 kg/25 mm but lower than 3.0 kg/25 mm.
×: The adhesive strength was lower than 1.5 kg/25 mm.

**[Table 24]**

| | Examples | | | | Comparative Examples | |
|---|---|---|---|---|---|---|
| | 165 | 166 | 167 | 168 | 11 | 12 |
| Type of pigment printing paste | G-1 | G-2 | G-3 | G-4 | G'-1 | G'-2 |
| normal adhesiveness to fiber-reinforced cement sheet | ○ | ○ | ○ | ○ | × | × |

### INDUSTRIAL APPLICABILITY

The vinyl resin (V1) in the present invention was excellent in affinity with a polyurethane resin (P), and a mixture of the vinyl resin (V1) and the polyurethane resin (P), or a mixture of the vinyl resin (V1), a vinyl resin (V2) other than the resin (V1), and the polyurethane resin (P) is excellent in properties such as mechanical strength, water resistance, and solvent resistance. Thus, such mixtures can be widely used for paints, coating agents (e.g. anticorrosive coating agents, waterproof coating agents, water-repellent coating agents, and antifouling coating agents), adhesives, fiber-treating agents (binders for pigment printing, binders for nonwoven fabric, sizing agents for reinforcing fibers, binders for antibacterial agents, and materials of artificial/synthetic leathers), paper-treatment agents, and inks. Because such mixtures are excellent in film formability and water resistance, they can be suitably used as polyurethane resin aqueous dispersions especially for aqueous paints, aqueous anticorrosive coating agents, aqueous fiber-treating agents, and aqueous adhesives.

## Claims

1. A vinyl resin (V1) obtainable by polymerizing monomer components including a monomer (X) represented by the formula (1): 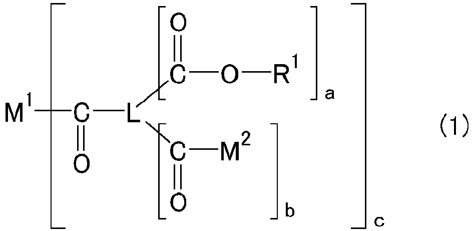 wherein
M¹ is a residue of an active hydrogen-containing organic compound having a valence of 1 to 20 from which c number of active hydrogen atoms are removed;
c is an integer satisfying 1 ≤ c ≤ (valence of M¹);
R¹ is an ethylenic unsaturated bond-containing group, and when the formula (1) includes multiple R¹'s, they may be the same as or different from each other;
M² is a residue of an active hydrogen-containing organic compound having a valence of 1 to 20 from which one active hydrogen atom is removed, and when the formula (1) includes multiple M²'s, they may be the same as or different from each other, and M² and M¹ may be the same as or different from each other;
L is a residue of an aromatic polycarboxylic acid having 3 or more carboxyl groups from which all the carboxyl groups are removed, the aromatic ring of L is constituted by carbon atoms, and each of the carbon atoms may optionally have a halogen atom and/or a substituent which is not a carboxyl group, but at least one of the carbon atoms has a hydrogen atom;
a and b are each an integer of 0 or greater and they satisfy 2 ≤ (a + b) ≤ (d - 2), when the formula (1) includes multiple a's, they may be the same as or different from each other and at least one of c number of a's is not 0, and when the formula (1) includes multiple b's, they may be the same as or different from each other; and
d is the number of hydrogen atoms bonded to the carbon atoms constituting the aromatic ring assuming that all the substituents including the carboxyl groups of the aromatic polycarboxylic acid are replaced by hydrogen atoms, in other words, the number of moieties capable of being replaced by a substituent on the aromatic ring.

2. The vinyl resin according to claim 1,
wherein the ethylenic unsaturated bond-containing group in the formula (1) is at least one substituent selected from the group consisting of substituents represented by the following formulas (2) to (6): 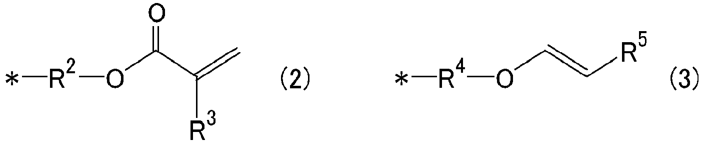 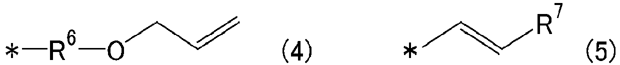 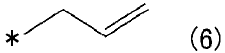 wherein R², R⁴, and R⁶ are each individually a divalent aliphatic hydrocarbon group which has 2 to 12 carbon atoms and is optionally substituted by a hydroxy group; R³ and R⁵ are each individually a hydrogen atom or a methyl group; R⁷ is a hydrogen atom, a methyl group, or an ethyl group; the symbol "*" is a bonding site between the substituent and the oxygen atom of the oxycarbonyl group in the formula (1).

3. The vinyl resin according to claim 1 or 2,
wherein the aromatic polycarboxylic acid having 3 or more carboxyl groups in the formula (1) has a structure wherein carboxyl groups bond to the 2 carbon atoms adjacent to a carbon atom which has no substituent among the carbon atoms constituting the aromatic ring, and
a carboxyl group bonds to at least one of the carbon atoms which are adjacent to the 2 carbon atoms having the carboxyl groups and which are different from the carbon atom that has no substituent.

4. The vinyl resin according to claim 1 or 2,
wherein the aromatic polycarboxylic acid having 3 or more carboxyl groups in the formula (1) is trimellitic acid and/or pyromellitic acid.

5. The vinyl resin according to any one of claims 1 to 4,
wherein a is 1 and c is 1 in the formula (1).

6. The vinyl resin according to any one of claims 1 to 5,
wherein the monomer (X) has a hydroxy value, determined in conformity with JIS K1557-1, of 0 to 500 mgKOH/g.

7. The vinyl resin according to any one of claims 1 to 6,
wherein the monomer (X) has an L concentration of 0.5 to 10 mmol/g.

8. The vinyl resin according to any one of claims 1 to 7,
wherein the monomer (X) has a carbonyl concentration of 1.5 to 30 mmol/g.

9. The vinyl resin according to any one of claims 1 to 8,
wherein the vinyl resin (V1) has a number average molecular weight (Mn) of 5,000 to 1,000,000, as measured by gel permeation chromatography under the conditions set out in the description.

10. The vinyl resin according to any one of claims 1 to 9,
wherein the vinyl resin (V1) has a glass transition temperature, determined by the DSC method standardized in ASTM D3418-82, of -50°C to 80°C.

11. The vinyl resin according to any one of claims 1 to 10,
wherein the vinyl resin (V1) comprises at least one reactive group selected from the group consisting of silanol, alkoxysilyl, epoxy, carboxyl, hydroxy, primary or secondary amino, isocyanato, blocked isocyanato, vinyl, oxazoline, carbodiimide, sulfo, keto, and aldehyde groups.

12. The vinyl resin according to any one of claims 1 to 11,
wherein the monomer components include a vinyl monomer containing a urethane group and/or a urea group.

13. The vinyl resin according to any one of claims 1 to 12, which serves as a dispersant for vinyl resins or polyurethane resins.

14. A resin composition comprising
the vinyl resin (V1) according to any one of claims 1 to 13, and
a polyurethane resin (P),
wherein the weight ratio of the vinyl resin (V1) to the polyurethane resin (P) ((V1):(P)) is 1:99 to 99:1.

15. The resin composition according to claim 14,
wherein the polyurethane resin (P) comprises at least one reactive group selected from the group consisting of silanol, alkoxysilyl, epoxy, carboxyl, hydroxy, primary or secondary amino, isocyanato, blocked isocyanato, vinyl, sulfo, keto, and aldehyde groups.

16. The resin composition according to claim 14 or 15,
wherein the polyurethane resin (P) is obtainable by reacting an active hydrogen component (A) and an organic polyisocyanate component (B), the component (A) containing an acrylic polyol having a number average molecular weight of 300 or higher, as measured by gel permeation chromatography under the conditions specified in the description.

17. The resin composition according to any one of claims 14 to 16, further comprising
a vinyl resin (V2) which is different from the vinyl resin (V1).

18. The resin composition according to claim 17,
wherein the vinyl resin (V2) different from the vinyl resin (V1) comprises at least one reactive group selected from the group consisting of silanol, alkoxysilyl, epoxy, carboxyl, hydroxy, primary or secondary amino, isocyanato, blocked isocyanato, vinyl, oxazoline, carbodiimide, sulfo, keto, and aldehyde groups.

19. The resin composition according to any one of claims 15 to 18, further comprising
a crosslinker (D) reactive with the reactive group of the vinyl resin (V1) and with the reactive group of the polyurethane resin (P).

20. The resin composition according to any one of claims 14 to 19, further comprising
a compound (F) having 2 or more ethylenic unsaturated bond-containing groups in a molecule.

21. The resin composition according to any one of claims 14 to 20,
wherein the polyurethane resin (P) is obtainable by reacting an active hydrogen component (A) and an organic polyisocyanate component (B), the component (A) containing a compound (S1) which has at least one active hydrogen atom and is represented by the formula (7): 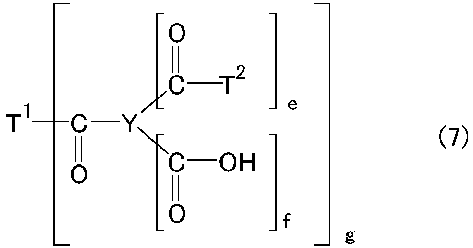 wherein
T¹ is a residue of an active hydrogen-containing organic compound having a valence of m from which g number of active hydrogen atoms are removed;
g is an integer satisfying 1 ≤ g ≤ m;
m is an integer of 1 to 20;
T² is a residue of an active hydrogen-containing organic compound from which one active hydrogen atom is removed, and when the formula (7) include multiple T²'s, they may be the same as or different from each other, and T² and T¹ may be the same as or different from each other;
Y is a residue of an aromatic polycarboxylic acid having 3 or more carboxyl groups from which all the carboxyl groups are removed, the aromatic ring of Y is constituted by carbon atoms, and each of the carbon atoms may optionally have a substituent which is not a carboxyl group and/or a halogen atom, but at least one of the carbon atoms has no substituent;
e is an integer of 1 or greater, f is an integer of 0 or greater, and e and f satisfy 2 ≤ (e + f) ≤ (h - 2); and
h is the number of hydrogen atoms bonded to the carbon atoms constituting the aromatic ring assuming that all the substituents including the carboxyl groups of the aromatic polycarboxylic acid are replaced by hydrogen atoms, in other words, the number of moieties capable of being replaced by a substituent on the aromatic ring.

22. The resin composition according to any one of claims 14 to 21, further comprising
a compound (S) represented by the formula (7): 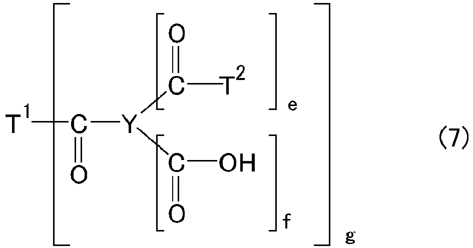 wherein
T¹ is a residue of an active hydrogen-containing organic compound having a valence of m from which g number of active hydrogen atoms are removed;
g is an integer satisfying 1 ≤ g ≤ m;
m is an integer of 1 to 20;
T² is a residue of an active hydrogen-containing organic compound from which one active hydrogen atom is removed, and when the formula (7) includes multiple T²s, they may be the same as or different from each other, and T² and T¹ may be the same as or different from each other;
Y is a residue of an aromatic polycarboxylic acid having 3 or more carboxyl groups from which all the carboxyl groups are removed, the aromatic ring of Y is constituted by carbon atoms, and each of the carbon atoms may optionally have a substituent which is not a carboxyl group and/or a halogen atom, but at least one of the carbon atoms has no substituent;
e is an integer of 1 or greater, f is an integer of 0 or greater, and e and f satisfy 2 ≤ (e + f) ≤ (h - 2); and
h is the number of hydrogen atoms bonded to the carbon atoms constituting the aromatic ring assuming that all the substituents including the carboxyl groups of the aromatic polycarboxylic acid are replaced by hydrogen atoms, in other words, the number of moieties capable of being replaced by a substituent on the aromatic ring.

23. A resin aqueous dispersion comprising
the vinyl resin according to any one of claims 1 to 13, and
an aqueous medium.

24. A resin aqueous dispersion comprising
the resin composition according to any one of claims 14 to 22, and
an aqueous medium.

25. Paint comprising
the vinyl resin according to any one of claims 1 to 13 or the resin composition according to any one of claims 14 to 22.

26. An anticorrosive coating agent comprising
the vinyl resin according to any one of claims 1 to 13 or the resin composition according to any one of claims 14 to 22.

27. A fiber-treating agent comprising
the vinyl resin according to any one of claims 1 to 13 or the resin composition according to any one of claims 14 to 22.

28. An adhesive comprising
the vinyl resin according to any one of claims 1 to 13 or the resin composition according to any one of claims 14 to 22.

## Patentansprüche

1. Vinylharz (V1), das durch Polymerisation von Monomerkomponenten erhältlich ist, einschließlich eines Momoners (X) der Formel (1): 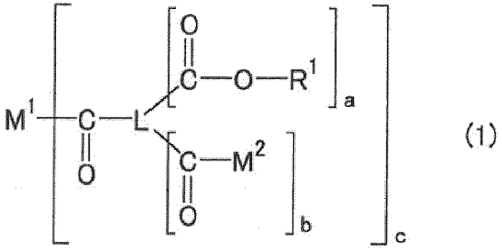 worin
M¹ ein Rest einer aktiven Wasserstoff enthaltenden organischen Verbindung mit einer Wertigkeit von 1 bis 20 ist, aus dem eine Anzahl c an aktiven Wasserstoffatomen entfernt ist;
c eine ganze Zahl ist, für die gilt: 1 ≤ c ≤ (Wertigkeit von M¹);
R¹ eine Gruppe mit einer ethylenisch ungesättigten Bindung ist, die, wenn die Formel (1) mehrere R¹ enthält, gleich oder unterschiedlich sein können,
M² ein Rest einer aktiven Wasserstoff enthaltenden organischen Verbindung mit einer Wertigkeit von 1 bis 20 ist, aus dem ein aktives Wasserstoffatom entfernt ist, und wenn die Formel (1) mehrere M² enthält, diese gleich oder unterschiedlich sein können, und M² und M¹ gleich oder unterschiedlich sein können;
L ein Rest einer aromatischen Polycarbonsäure mit 3 oder mehr Carboxylgruppen ist, aus dem alle Carboxylgruppen entfernt sind, der aromatische Ring von L von Kohlenstoffatomen gebildet wird und jedes der Kohlenstoffatome gegebenenfalls ein Halogenatom und/oder einen Substituenten aufweist, der keine Carboxylgruppe ist, aber zumindest eines der Kohlenstoffatome ein Wasserstoffatom aufweist;
a und b jeweils eine ganze Zahl von 0 oder mehr sind und gilt: 2 ≤ (a + b) ≤ (d - 2), und wenn die Formel (1) mehrere a enthält, diese gleich oder unterschiedlich sein können, und zumindest eines der Anzahl c an a nicht 0 ist, und wenn die Formel (1) mehrere b enthält, diese gleich oder unterschiedlich sein können; und
d die Anzahl an Wasserstoffatomen ist, die an die Kohlenstoffatome gebunden sind, die den aromatischen Ring bilden, unter der Annahme, dass alle Substituenten, einschließlich der Carboxylgruppen der aromatischen Polycarbonsäure, durch Wasserstoffatome ersetzt sind, mit anderen Worten die Anzahl an Gruppierungen, die durch einen Substituenten am aromatischen Ring ersetzbar sind.

2. Vinylharz nach Anspruch 1,
worin die Gruppe mit einer ethylenisch ungesättigten Bindung in Formel (1) zumindest ein Substituent ist, der aus der aus Substituenten der folgenden Formeln (2) bis (6) bestehenden Gruppe ausgewählt ist: 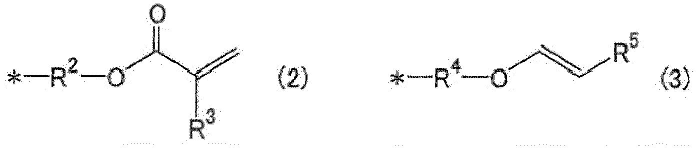 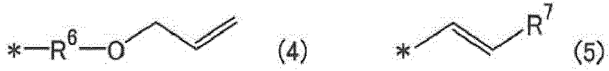 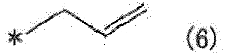 worin R², R⁴ und R⁶ jeweils unabhängig voneinander eine zweiwertige aliphatische Kohlenwasserstoffgruppe sind, die 2 bis 12 Kohlenstoffatomen aufweist und gegebenenfalls mit einer Hydroxygruppe substituiert ist; R³ und R⁵ jeweils unabhängig voneinander ein Wasserstoffatom oder eine Methylgruppe sind; R⁷ ein Wasserstoffatom, eine Methylgruppe oder eine Ethylgruppe ist; und das Symbol "*" die Bindungsstelle zwischen dem Substituenten und dem Sauerstoffatom der Oxycarbonylgruppe in Formel (1) ist.

3. Vinylharz nach Anspruch 1 oder 2,
worin die aromatische Polycarbonsäure mit 3 oder mehr Carboxylgruppen in Formel (1) eine Struktur aufweist, bei der Carboxylgruppen an jene 2 Kohlenstoffatome unter den Kohlenstoffatomen, die den aromatischen Ring bilden, binden, die neben einem Kohlenstoffatom liegen, das keinen Substituenten aufweist, und
eine Carboxylgruppe an zumindest eines jener Kohlenstoffatome bindet, die neben den 2 Kohlenstoffatomen mit den Carboxylgruppen liegen und die nicht das Kohlenstoffatom sind, das keinen Substituenten aufweist.

4. Vinylharz nach Anspruch 1 oder 2,
worin die aromatische Polycarbonsäure mit 3 oder mehr Carboxylgruppen in Formel (1) Trimellithsäure und/oder Pyromellithsäure ist.

5. Vinylharz nach einem der Ansprüche 1 bis 4,
wobei in Formel (1) a = 1 ist und c = 1 ist.

6. Vinylharz nach einem der Ansprüche 1 bis 5,
worin das Monomer (X) eine gemäß JIS K1557-1 bestimmte Hydroxylzahl von 0 bis 500 mgKOH/g aufweist.

7. Vinylharz nach einem der Ansprüche 1 bis 6,
worin das Monomer (X) eine Konzentration von L von 0,5 bis 10 mmol/g aufweist.

8. Vinylharz nach einem der Ansprüche 1 bis 7,
worin das Monomer (X) eine Carbonyl-Konzentration von 1,5 bis 30 mmol/g aufweist.

9. Vinylharz nach einem der Ansprüche 1 bis 8,
wobei das Vinylharz (V1) ein durch Gelpermeationschromatographie unter den in der Beschreibung ausgeführten Bedingungen gemessenes zahlenmittleres Molekulargewicht (Mn) von 5.000 bis 1.000.000 aufweist.

10. Vinylharz nach einem der Ansprüche 1 bis 9,
wobei das Vinylharz (V1) eine durch das in ASTM D3418-82 standardisierte DSC-Verfahren bestimmte Glastemperatur von -50 °C bis 80 °C aufweist.

11. Vinylharz nach einem der Ansprüche 1 bis 10,
wobei das Vinylharz (V1) zumindest eine reaktive Gruppe umfasst, die aus der aus Silanol-, Alkoxysilyl-, Epoxy-, Carboxyl-, Hydroxy-, primären oder sekundären Amino-, Isocyanato-, blockierten Isocyanato-, Vinyl-, Oxazolin-, Carbodiimid-, Sulfo-, Keto- und Aldehydgruppen bestehenden Gruppe ausgewählt ist.

12. Vinylharz nach einem der Ansprüche 1 bis 11,
wobei die Monomerkomponenten ein Vinylmonomer umfassen, das eine Urethangruppe und/oder eine Harnstoffgruppe enthält.

13. Vinylharz nach einem der Ansprüche 1 bis 12, das als Dispergiermittel für Vinylharze oder Polyurethanharze dient.

14. Harzzusammensetzung, die Folgendes umfasst:
ein Vinylharz (V1) nach einem der Ansprüche 1 bis 13 und
ein Polyurethanharz (P),
wobei das Gewichtsverhältnis zwischen Vinylharz (V1) und Polyurethanharz (P) ((V1):(P)) 1:99 bis 99:1 beträgt.

15. Harzzusammensetzung nach Anspruch 14,
wobei das Polyurethanharz (P) zumindest eine reaktive Gruppe umfasst, die aus der aus Silanol-, Alkoxysilyl-, Epoxy-, Carboxyl-, Hydroxy-, primären oder sekundären Amino-, Isocyanato-, blockierten Isocyanato-, Vinyl-, Sulfo-, Keto- und Aldehydgruppen bestehenden Gruppe ausgewählt ist.

16. Harzzusammensetzung nach Anspruch 14 oder 15,
wobei das Polyurethanharz (P) durch Umsetzung einer aktiven Wasserstoff-Komponente (A) und einer organischen Polyisocyanat-Komponente (B) erhältlich ist, wobei die Komponente (A) ein Acryl-Polyol enthält, das ein durch Gelpermeationschromatographie unter den in der Beschreibung ausgeführten Bedingungen bestimmtes zahlenmittleres Molekulargewicht von 300 oder mehr aufweist.

17. Harzzusammensetzung nach einem der Ansprüche 14 bis 16, die weiters Folgendes umfasst:
ein Vinylharz (V2), das sich vom Vinylharz (V1) unterscheidet.

18. Harzzusammensetzung nach Anspruch 17,
wobei das Vinylharz (V2), das sich vom Vinylharz (V1) unterscheidet, zumindest eine reaktive Gruppe umfasst, die aus der aus Silanol-, Alkoxysilyl-, Epoxy-, Carboxyl-, Hydroxy-, primären oder sekundären Amino-, Isocyanato-, blockierten Isocyanato-, Vinyl-, Oxazolin-, Carbodiimid-, Sulfo-, Keto- und Aldehydgruppen bestehenden Gruppe ausgewählt ist.

19. Harzzusammensetzung nach einem der Ansprüche 15 bis 18, die weiters Folgendes umfasst:
einen Vernetzer (D), der mit der reaktiven Gruppe des Vinylharzes (V1) und mit der reaktiven Gruppe des Polyurethanharzes (P) reaktiv ist.

20. Harzzusammensetzung nach einem der Ansprüche 14 bis 19, die weiters Folgendes umfasst:
eine Verbindung (F) mit 2 oder mehr Gruppen mit ethylenisch ungesättigten Bindungen pro Molekül.

21. Harzzusammensetzung nach einem der Ansprüche 14 bis 20,
wobei das Polyurethanharz (P) durch Umsetzen einer aktiven Wasserstoff-Komponente (A) und einer organischen Polyisocyanat-Komponente (B) erhältlich ist, wobei die Komponente (A) eine Verbindung (S1) enthält, die zumindest ein aktives Wasserstoffatom aufweist und durch die Formel (7) dargestellt ist: 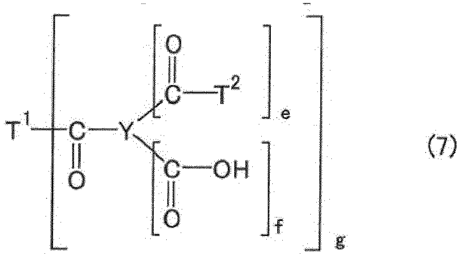 worin
T¹ ein Rest einer aktiven Wasserstoff enthaltenen organischen Verbindung mit einer Wertigkeit m ist, aus dem eine Anzahl g an aktiven Wasserstoffatomen entfernt ist;
g eine ganze Zahl ist, für die gilt: 1 ≤ g ≤ m;
m eine ganze Zahl von 1 bis 20 ist;
T² ein Rest einer aktiven Wasserstoff enthaltenden organischen Verbindung ist, aus dem ein aktives Wasserstoffatom entfernt ist, und wenn die Formel (7) mehrere T² enthält, diese gleich oder unterschiedlich sein können, und T² und T¹ gleich oder unterschiedlich sein können;
Y ein Rest einer aromatischen Polycarbonsäure mit 3 oder mehr Carboxylgruppen ist, aus dem alle Carboxylgruppen entfernt sind, der aromatische Ring von Y von Kohlenstoffatomen gebildet wird und jedes der Kohlenstoffatome gegebenenfalls einen Substituenten aufweist, der keine Carboxylgruppe und/oder kein Halogenatom ist, aber zumindest eines der Kohlenstoffatome keinen Substituenten aufweist;
e eine ganze Zahl von 1 oder mehr ist, f eine ganze Zahl von 0 oder mehr ist und für e und f gilt: 2 ≤ (e + f) ≤ (h - 2); und
h die Anzahl an Wasserstoffatomen ist, die an die Kohlenstoffatome gebunden sind, die den aromatischen Ring bilden, unter der Annahme, dass alle Substituenten, einschließlich der Carboxylgruppen der aromatischen Polycarbonsäure, durch Wasserstoffatome ersetzt sind, mit anderen Worten die Anzahl an Gruppierungen, die durch einen Substituenten am aromatischen Ring ersetzbar sind.

22. Harzzusammensetzung nach einem der Ansprüche 14 bis 21, die weiters Folgendes umfasst:
eine Verbindung (S) der Formel (7): 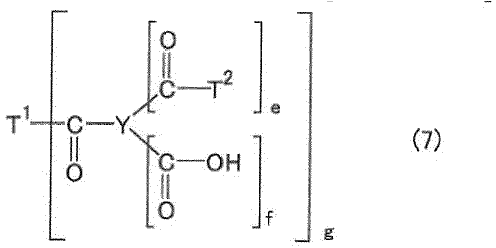 worin
T¹ ein Rest einer aktiven Wasserstoff enthaltenden organischen Verbindung mit einer Wertigkeit m ist, aus dem eine Anzahl g an aktiven Wasserstoffatomen entfernt ist;
g eine ganze Zahl ist, für die gilt: 1 ≤ g ≤ m;
m eine ganze Zahl von 1 bis 20 ist;
T² ein Rest einer aktiven Wasserstoff enthaltenden organischen Verbindung ist, aus dem ein aktives Wasserstoffatom entfernt ist, und wenn die Formel (7) mehrere T² enthält, diese gleich oder unterschiedlich sein können, und T² und T¹ gleich oder unterschiedlich sein können;
Y ein Rest einer aromatischen Polycarbonsäure mit 3 oder mehr Carboxylgruppen ist, aus dem alle Carboxylgruppen entfernt sind, der aromatische Ring von Y von Kohlenstoffatomen gebildet wird und jedes der Kohlenstoffatome gegebenenfalls einen Substituenten aufweist, der keine Carboxylgruppe und/oder kein Halogenatom ist, aber zumindest eines der Kohlenstoffatome keinen Substituenten aufweist;
e eine ganze Zahl von 1 oder mehr ist, f eine ganze Zahl von 0 oder mehr ist und für e und f gilt: 2 ≤ (e + f) ≤ (h - 2); und
h die Anzahl an Wasserstoffatomen ist, die an die Kohlenstoffatome gebunden sind, die den aromatischen Ring bilden, unter der Annahme, dass alle Substituenten, einschließlich der Carboxylgruppen der aromatischen Polycarbonsäure, durch Wasserstoffatome ersetzt sind, mit anderen Worten die Anzahl an Gruppierungen, die durch einen Substituenten am aromatischen Ring ersetzbar sind.

23. Wässrige Harzdispersion, die Folgendes umfasst:
ein Vinylharz nach einem der Ansprüche 1 bis 13 und
ein wässriges Medium.

24. Wässrige Harzdispersion, die Folgendes umfasst:
eine Harzzusammensetzung nach einem der Ansprüche 14 bis 22 und
ein wässriges Medium.

25. Anstrich, der Folgendes umfasst:
ein Vinylharz nach einem der Ansprüche 1 bis 13 oder eine Harzzusammensetzung nach einem der Ansprüche 14 bis 22.

26. Korrosionsschutzbeschichtungsmittel, das Folgendes umfasst:
ein Vinylharz nach einem der Ansprüche 1 bis 13 oder eine Harzzusammensetzung nach einem der Ansprüche 14 bis 22.

27. Faserbehandlungsmittel, das Folgendes umfasst:
ein Vinylharz nach einem der Ansprüche 1 bis 13 oder eine Harzzusammensetzung nach einem der Ansprüche 14 bis 22.

28. Klebemittel, das Folgendes umfasst:
ein Vinylharz nach einem der Ansprüche 1 bis 13 oder eine Harzzusammensetzung nach einem der Ansprüche 14 bis 22.

## Revendications

1. Résine de vinyle (V1) pouvant être obtenue par polymérisation de composants monomères comprenant un monomère (X) représenté par la formule (1) : 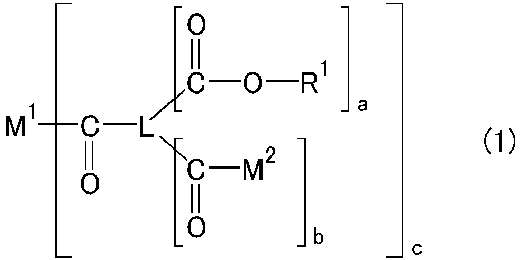 dans laquelle
M¹ est un résidu d'un composé organique contenant de l'hydrogène actif ayant une valence de 1 à 20 dont un nombre c d'atomes d'hydrogène actif a été retiré ;
c est un entier satisfaisant à 1 < c < (valence de M¹) ;
R¹ est un groupe contenant une liaison insaturée éthylénique et, quand la formule (1) contient plusieurs R¹, ils peuvent être identiques ou différents ;
M² est un résidu d'un composé organique contenant de l'hydrogène actif ayant une valence de 1 à 20 dont un seul atome d'hydrogène actif a été retiré et, quand la formule (1) contient plusieurs M², ils peuvent être identiques ou différents, et M² et M¹ peuvent être identiques ou différents ;
L est un résidu d'un acide polycarboxylique aromatique ayant 3 groupes carboxyle ou plus dont tous les groupes carboxyle ont été retirés, le cycle aromatique de L est constitué d'atomes de carbone, et chacun des atomes de carbone peut éventuellement porter un atome d'halogène et/ou un substituant qui n'est pas un groupe carboxyle, mais au moins un des atomes de carbone porte un atome d'hydrogène ;
chacun de a et b est un entier valant 0 ou plus, et ils satisfont à 2 ≤ (a + b) ≤ (d - 2), quand la formule (1) contient plusieurs a, ils peuvent être identiques ou différents, et au moins l'un parmi le nombre c de a ne vaut pas 0 et, quand la formule (1) contient plusieurs b, ils peuvent être identiques ou différents ; et
d est le nombre d'atomes d'hydrogène liés aux atomes de carbone constituant le cycle aromatique, étant supposé que tous les substituants y compris les groupes carboxyle de l'acide polycarboxylique aromatique sont remplacés par des atomes d'hydrogène, en d'autres termes le nombre de fragments capables d'être remplacés par un substituant sur le cycle aromatique.

2. Résine de vinyle selon la revendication 1, dans laquelle le groupe contenant une liaison insaturée éthylénique dans la formule (1) est au moins un substituant choisi dans l'ensemble constitué par les substituants représentés par les formules (2) à (6) suivantes : 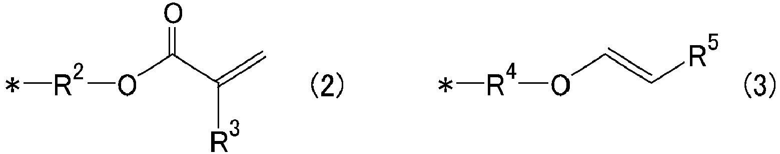 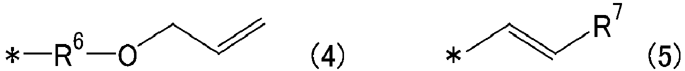 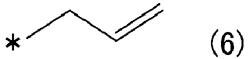 dans lesquelles chacun de R², R⁴ et R⁶ est individuellement un groupe hydrocarboné aliphatique divalent qui a 2 à 12 atomes de carbone et qui est éventuellement substitué par un groupe hydroxy ; chacun de R³ et R⁵ est individuellement un atome d'hydrogène ou un groupe méthyle ; R⁷ est un atome d'hydrogène, un groupe méthyle, ou un groupe éthyle ; le symbole "*" est un site de liaison entre le substituant et l'atome d'oxygène du groupe oxycarbonyle dans la formule (1).

3. Résine de vinyle selon la revendication 1 ou 2, dans laquelle
l'acide polycarboxylique aromatique ayant 3 groupes carboxyle ou plus dans la formule (1) a une structure dans laquelle des groupes carboxyle sont liés aux 2 atomes de carbone adjacents à un atome de carbone qui ne porte pas de substituant parmi les atomes de carbone constituant le cycle aromatique, et
un groupe carboxyle est lié à au moins un des atomes de carbone qui sont adjacents aux 2 atomes de carbone ayant les groupes carboxyle et qui sont différents de l'atome de carbone qui ne porte pas de substituant.

4. Résine de vinyle selon la revendication 1 ou 2, dans laquelle l'acide polycarboxylique aromatique ayant 3 groupes carboxyle ou plus dans la formule (1) est l'acide trimellitique et/ou l'acide pyromellitique.

5. Résine de vinyle selon l'une quelconque des revendications 1 à 4, dans laquelle a vaut 1 et c vaut 1 dans la formule (1).

6. Résine de vinyle selon l'une quelconque des revendications 1 à 5,
dans laquelle le monomère (X) a un indice d'hydroxyle, déterminé conformément à la norme JIS K1557-1, de 0 à 500 mg KOH/g.

7. Résine de vinyle selon l'une quelconque des revendications 1 à 6,
dans laquelle le monomère (X) a une concentration de L de 0,5 à 10 mmol/g.

8. Résine de vinyle selon l'une quelconque des revendications 1 à 7,
dans laquelle le monomère (X) a une concentration de carbonyle de 1,5 à 30 mmol/g.

9. Résine de vinyle selon l'une quelconque des revendications 1 à 8,
laquelle résine de vinyle (V1) a une masse moléculaire moyenne en nombre (Mn) de 5 000 à 1 000 000, telle que mesurée par chromatographie d'exclusion diffusion dans les conditions indiquées dans la description.

10. Résine de vinyle selon l'une quelconque des revendications 1 à 9,
laquelle résine de vinyle (V1) a une température de transition vitreuse, déterminée par la méthode DSC normalisée dans la norme ASTM D3418-82, de -50°C à 80°C.

11. Résine de vinyle selon l'une quelconque des revendications 1 à 10,
laquelle résine de vinyle (V1) comprend au moins un groupe réactif choisi dans l'ensemble constitué par les groupes silanol, alcoxysilyle, époxy, carboxyle, hydroxy, amino primaire ou secondaire, isocyanato, isocyanato bloqué, vinyle, oxazoline, carbodiimide, sulfo, céto, et aldéhyde.

12. Résine de vinyle selon l'une quelconque des revendications 1 à 11,
dans laquelle les composants monomères comprennent un monomère de vinyle contenant un groupe uréthane et/ou un groupe urée.

13. Résine de vinyle selon l'une quelconque des revendications 1 à 12, qui sert de dispersant pour des résines de vinyle ou des résines de polyuréthane.

14. Composition de résine comprenant
la résine de vinyle (V1) de l'une quelconque des revendications 1 à 13, et
une résine de polyuréthane (P),
dans laquelle le rapport en poids de la résine de vinyle (V1) à la résine de polyuréthane (P) ((V1)/(P)) est de 1/99 à 99/1.

15. Composition de résine selon la revendication 14,
dans laquelle la résine de polyuréthane (P) comprend au moins un groupe réactif choisi dans l'ensemble constitué par les groupes silanol, alcoxysilyle, époxy, carboxyle, hydroxy, amino primaire ou secondaire, isocyanato, isocyanato bloqué, vinyle, sulfo, céto, et aldéhyde.

16. Composition de résine selon la revendication 14 ou 15,
dans laquelle la résine de polyuréthane (P) peut être obtenue par réaction d'un composant hydrogène actif (A) et d'un composant polyisocyanate organique (B), le composant (A) contenant un polyol acrylique ayant une masse moléculaire moyenne en nombre de 300 ou plus, telle que mesurée par chromatographie d'exclusion diffusion dans les conditions indiquées dans la description.

17. Composition de résine selon l'une quelconque des revendications 14 à 16, comprenant en outre
une résine de vinyle (V2) qui est différente de la résine de vinyle (V1).

18. Composition de résine selon la revendication 17,
dans laquelle la résine de vinyle (V2) différente de la résine de vinyle (V1) comprend au moins un groupe réactif choisi dans l'ensemble constitué par les groupes silanol, alcoxysilyle, époxy, carboxyle, hydroxy, amino primaire ou secondaire, isocyanato, isocyanato bloqué, vinyle, oxazoline, carbodiimide, sulfo, céto, et aldéhyde.

19. Composition de résine selon l'une quelconque des revendications 15 à 18, comprenant en outre
un agent de réticulation (D) réactif avec le groupe réactif de la résine de vinyle (V1) et avec le groupe réactif de la résine de polyuréthane (P).

20. Composition de résine selon l'une quelconque des revendications 14 à 19, comprenant en outre
un composé (F) ayant 2 ou plus de 2 groupes contenant une liaison insaturée éthylénique par molécule.

21. Composition de résine selon l'une quelconque des revendications 14 à 20,
dans laquelle la résine de polyuréthane (P) peut être obtenue par réaction d'un composant hydrogène actif (A) et d'un composant polyisocyanate organique (B), le composant (A) contenant un composé (S1) qui a au moins un atome d'hydrogène actif et qui est représenté par la formule (7) : 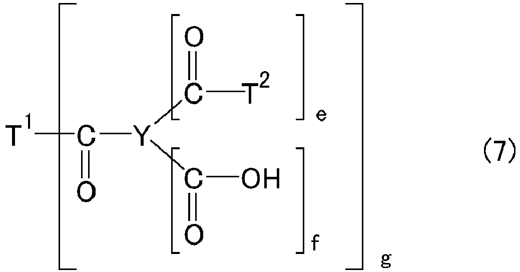 dans laquelle
T¹ est un résidu d'un composé organique contenant de l'hydrogène actif ayant une valence de m dont un nombre g d'atomes d'hydrogène actif a été retiré ;
g est un entier satisfaisant à 1 ≤ g ≤ m ;
m est un entier de 1 à 20 ;
T² est un résidu d'un composé organique contenant de l'hydrogène actif dont un atome d'hydrogène actif a été retiré, et quand la formule (7) contient plusieurs T², ils peuvent être identiques ou différents, et T² et T¹ peuvent être identiques ou différents ;
Y est un résidu d'un acide polycarboxylique aromatique ayant 3 groupes carboxyle ou plus dont tous les groupes carboxyle ont été retirés, le cycle aromatique de Y est constitué d'atomes de carbone, et chacun des atomes de carbone peut éventuellement porter un substituant qui n'est pas un groupe carboxyle et/ou un atome d'halogène, mais au moins un des atomes de carbone ne porte pas de substituant ;
e est un entier valant 1 ou plus, f est un entier valant 0 ou plus, et e et f satisfont à 2 ≤ (e + f) ≤ (h - 2) ; et
h est le nombre d'atomes d'hydrogène liés aux atomes de carbone constituant le cycle aromatique, étant supposé que tous les substituants y compris les groupes carboxyle de l'acide polycarboxylique aromatique sont remplacés par des atomes d'hydrogène, en d'autres termes le nombre de fragments capables d'être remplacés par un substituant sur le cycle aromatique.

22. Composition de résine selon l'une quelconque des revendications 14 à 21, comprenant en outre un composé (S) représenté par la formule (7) : 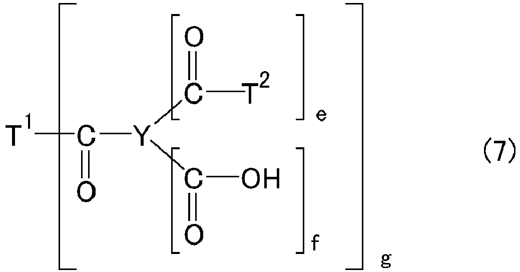 dans laquelle
T¹ est un résidu d'un composé organique contenant de l'hydrogène actif ayant une valence de m dont un nombre g d'atomes d'hydrogène actif a été retiré ;
g est un entier satisfaisant à 1 ≤ g ≤ m ;
m est un entier de 1 à 20 ;
T² est un résidu d'un composé organique contenant de l'hydrogène actif dont un atome d'hydrogène actif a été retiré, et quand la formule (7) contient plusieurs T², ils peuvent être identiques ou différents, et T² et T¹ peuvent être identiques ou différents ;
Y est un résidu d'un acide polycarboxylique aromatique ayant 3 groupes carboxyle ou plus dont tous les groupes carboxyle ont été retirés, le cycle aromatique de Y est constitué d'atomes de carbone, et chacun des atomes de carbone peut éventuellement porter un substituant qui n'est pas un groupe carboxyle et/ou un atome d'halogène, mais au moins un des atomes de carbone ne porte pas de substituant ;
e est un entier valant 1 ou plus, f est un entier valant 0 ou plus, et e et f satisfont à 2 ≤ (e + f) ≤ (h - 2) ; et
h est le nombre d'atomes d'hydrogène liés aux atomes de carbone constituant le cycle aromatique, étant supposé que tous les substituants y compris les groupes carboxyle de l'acide polycarboxylique aromatique sont remplacés par des atomes d'hydrogène, en d'autres termes le nombre de fragments capables d'être remplacés par un substituant sur le cycle aromatique.

23. Dispersion aqueuse de résine comprenant
la résine de vinyle de l'une quelconque des revendications 1 à 13, et
un milieu aqueux.

24. Dispersion aqueuse de résine comprenant
la composition de résine de l'une quelconque des revendications 14 à 22, et
un milieu aqueux.

25. Peinture comprenant la résine de vinyle de l'une quelconque des revendications 1 à 13 ou la composition de résine de l'une quelconque des revendications 14 à 22.

26. Agent de revêtement anticorrosion comprenant la résine de vinyle de l'une quelconque des revendications 1 à 13 ou la composition de résine de l'une quelconque des revendications 14 à 22.

27. Agent de traitement des fibres comprenant la résine de vinyle de l'une quelconque des revendications 1 à 13 ou la composition de résine de l'une quelconque des revendications 14 à 22.

28. Adhésif comprenant la résine de vinyle de l'une quelconque des revendications 1 à 13 ou la composition de résine de l'une quelconque des revendications 14 à 22.
